Europäisches Patentamt

European Patent Office

Office européen des brevets

(19)

(11) **EP 1 538 531 A1**

(12) **EUROPEAN PATENT APPLICATION**
published in accordance with Art. 158(3) EPC

(43) Date of publication:
08.06.2005 Bulletin 2005/23

(51) Int Cl.$^7$: **G06F 15/00**, H04L 9/32

(21) Application number: 03795354.4

(22) Date of filing: 10.09.2003

(86) International application number:
**PCT/JP2003/011547**

(87) International publication number:
**WO 2004/025488 (25.03.2004 Gazette 2004/13)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: 12.09.2002 JP 2002266521

(71) Applicants:
• **MITSUBISHI DENKI KABUSHIKI KAISHA Tokyo 100-8310 (JP)**
• **Mitsubishi Electric Information Systems Corporation Tokyo 100-8310 (JP)**

(72) Inventors:
• **SAKURAI, Shoji, c/o Mitsubishi Denki K.K. Tokyo 100-8310 (JP)**
• **TABO, Hitoshi, Mitsubishi Elec. Info. Syst. Corp. Tokyo 100-8310 (JP)**
• **TAKAHASHI, Wataru, Mitsubishi Elec. Inf.Syst.Corp. Tokyo 100-8310 (JP)**

(74) Representative: **Pfenning, Meinig & Partner GbR Mozartstrasse 17 80336 München (DE)**

(54) **AUTHENTICATION SYSTEM, AUTHENTICATION DEVICE, TERMINAL DEVICE, AND AUTHENTICATION METHOD**

(57)     An authentication system giving little load for the user at the time of authentication and retaining high security is realized. A management part 107 of a server apparatus 106 memorizes a password of a character queue of a plurality of digits. A random number generating part 108 generates a random number for each digit of a password. A communication part 111 transmits a plurality of random numbers to a terminal apparatus 101. A calculation part 109 calculates an authentication value used for authentication, with using a random number and a sign of a password, for each digit of the password. In the terminal apparatus 101, a display part 102 displays a random number for each digit of the password, and an input part inputs an input numerical value in response to the random number, for each digit of the password. The input numerical value of each digit is transmitted to the server apparatus 106 through a communication part 105. A judging part 110 of the server apparatus 106 judges whether or not the authentication value coincides with the input numerical value, for each digit of the password, to perform the user authentication.

Fig. 1

**Description**

TECHNICAL FIELD

The present invention relates to a user authentication apparatus and a user authentication method used for authenticating a user.

BACKGROUND ART

As a user authentication method widely popularized, it is known to make a user input his/her own user ID and password at the time of performing user authentication and to check if the user is a regular user by confirming whether the inputted password and user ID correspond to a registered personal identification number or not. However, in such system where a fixed password itself is input, there is a danger of authenticating a third person instead of the regular user if the password is looked by the third person when the user inputs the password.

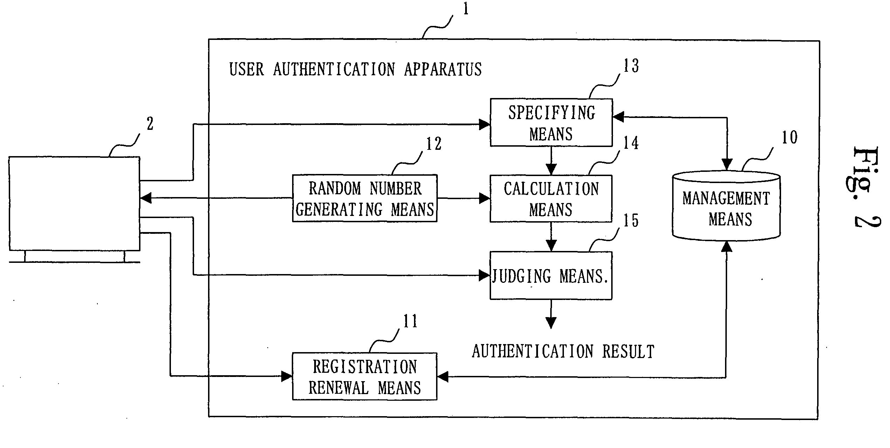

In order to solve the above problem, a system is disclosed in Japanese Unexamined Patent Publication No. 2000-305899, where a user authentication apparatus and system making a user register not a password but a formula is disclosed. Fig. 2 shows a structure of the conventional user authentication apparatus shown in Japanese Unexamined Patent Publication No. 2000-305899. In Fig. 2, a user authentication apparatus 1, a terminal 2 provided in the user authentication apparatus 1, a management means 10, a registration renewal means 11, a random number generating means 12, a specifying means 13, a calculation means 14 and a judging means 15 are shown.

Now, operations will be explained. In the user authentication apparatus 1, the registration renewal means 11 receives a formula inputted from the terminal 2 and registers the formula into the management means 10, with having correspondence to a user ID. Thus, a corresponding relation between the user ID and the formula corresponding to the user authentication object is registered in the management means 10. When a request for user authentication is issued after the management means 10 receives the managed data, the specifying means 13 specifies a formula corresponding to the user ID based on the managed data of the management means 10. On the other hand, the random number generating means 12 generates a random number, displays it on the display screen of the terminal apparatus 2, and notifies the generated random number to the calculation means 14.

Then, the calculation means 14 computes a numerical value used for user authentication, based on the random number generated by the random number generating means 12 and the formula specified by the specifying means 13. The judging means 15 executes the user authentication by judging whether a numerical value inputted through the terminal 2 in response to the random number presented by the random number generating means 12 coincides with the numerical value computed by the calculation means 14.

According to the conventional system, since the random number presented to a user varies at every authentication, it is impossible for a malicious third person to be authenticated by stealing a look at a numerical value itself to be input and pretending to be a regular user by means of using the numerical value. However, since a formula is used as a password for authenticating a user, it is a heavy load for the user to use a complicated formula as the password. On the other hand, using a simple formula as a password will have more danger of the formula being guessed by the third person. In addition, since the formula used for a password does not change at every authentication, if the authentication is repeatedly executed in front of the same third person, the danger of the password being guessed will become larger. Moreover, it is also a load for the user to necessarily memorize a formula unlike the widely popularized password composed of a character queue or numbers.

The present invention aims to solve the above problems. It is an object of the present invention to provide a user authentication apparatus and a user authentication method of high security where a widely popularized password composed of characters or numbers is used, there is little load for the user at the time of authentication, and the danger of a password being guessed by a third person is low even when an input value is looked by the third person at the time of authentication.

DISCLOSURE OF THE INVENTION

According to the present invention, an authentication system including a terminal apparatus which a user utilizes and an authentication apparatus which communicates with the terminal apparatus and performs user authentication to the user, comprises:

the terminal apparatus including;

a receiving part for receiving a plurality of random numbers from the authentication apparatus,
a display part for displaying the plurality of random numbers received by the receiving part,

an input part for inputting a response value for the plurality of random numbers, and
a transmitting part for transmitting the response value inputted through the input part to the authentication apparatus, and

the authentication apparatus including;

a password memory part for memorizing a password of the user,
a random number generating part for generating the plurality of random numbers,
a communication part for transmitting the plurality of random numbers generated by the random number generating part to the terminal apparatus, and receiving the response value for the plurality of random numbers from the terminal apparatus,
an authentication value calculation part for calculating an authentication value to be used for the user authentication, by performing a prescribed calculation using the password memorized in the password memory part and the plurality of random numbers generated by the random number generating part, and
an authentication judging part for making a judgment on propriety of the user authentication by comparing the response value received by the communication part with the authentication value calculated by the authentication value calculation part.

BRIEF DESCRIPTION OF THE DRAWINGS

Fig. 1 is a block diagram showing a structure of an authentication system according to Embodiment 1;
Fig. 2 shows a conventional art;
Fig. 3 is a flowchart showing operations of a terminal apparatus according to Embodiment 1;
Fig. 4 is a flowchart showing operations of a server apparatus according to Embodiment 1;
Fig. 5 shows a user ID input screen according to Embodiment 1;
Fig. 6 shows a response value input screen according to Embodiment 1;
Fig. 7 shows a response value input screen according to Embodiment 1;
Fig. 8 is a block diagram showing a structure of an authentication system according to Embodiment 2;
Fig. 9 is a flowchart showing operations of a terminal apparatus according to Embodiment 2;
Fig. 10 is a flowchart showing operations of a server apparatus according to Embodiment 2;
Fig. 11 shows a response value input screen according to Embodiment 2;
Fig. 12 shows a response value input screen according to Embodiment 2;
Fig. 13 is a flowchart showing operations of conversion processing according to Embodiment 2;
Fig. 14 shows details of the conversion processing according to Embodiment 2;
Fig. 15 shows details of the conversion processing according to Embodiment 2;
Fig. 16 shows details of the conversion processing according to Embodiment 2;
Fig. 17 shows a response value input screen according to Embodiment 2;
Fig. 18 shows an example of a character code conversion table according to Embodiment 2;
Fig. 19 shows an input screen according to Embodiment 1;
Fig. 20 shows an example of a character code conversion table according to Embodiment 1;
Fig. 21 is a block diagram showing a structure of an authentication system according to Embodiment 3;
Fig. 22 shows a timing chart according to Embodiment 3;
Fig. 23 is a block diagram showing a structure of an authentication system according to Embodiment 4;
Fig. 24 is a flowchart showing operations of a terminal apparatus according to Embodiment 4;
Fig. 25 is a block diagram showing a structure of an authentication system according to Embodiment 5;
Fig. 26 is a flowchart showing operations of a terminal apparatus according to Embodiment 5;
Fig. 27 is a flowchart showing operations of a server apparatus according to Embodiment 5;
Fig. 28 shows a response input screen according to Embodiment 5;
Fig. 29 shows an example of a character code conversion table according to Embodiment 5;
Fig. 30 is a flowchart showing operations of conversion processing according to Embodiment 5;
Fig. 31 shows a response input screen according to Embodiment 5, and its screen changes;
Fig. 32 is a block diagram showing a structure of a terminal apparatus according to Embodiment 6; and
Fig. 33 is a flowchart showing operations of a terminal apparatus according to Embodiment 6.

BEST MODE FOR CARRYING OUT THE INVENTION

Embodiment 1

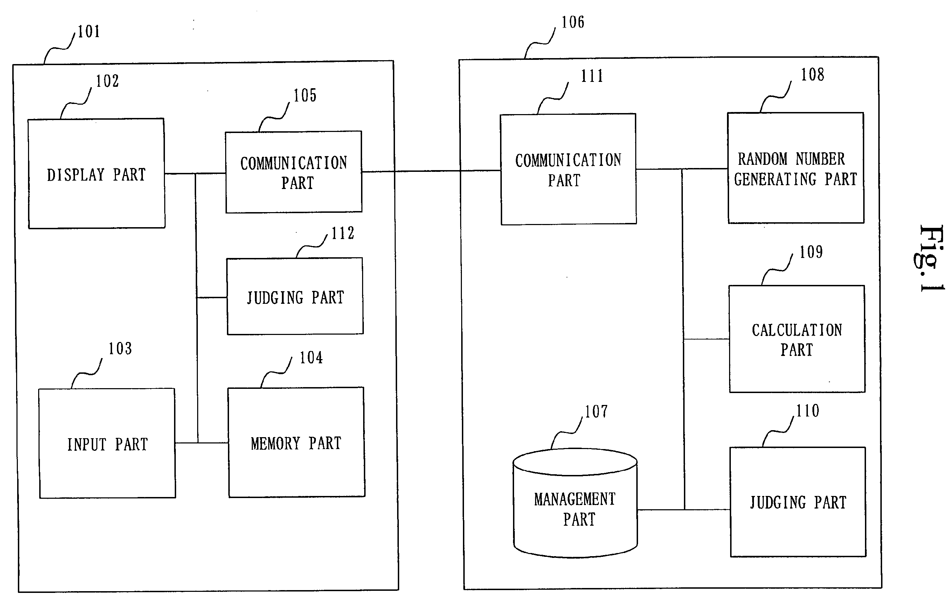

Fig. 1 is a block diagram showing a structure of an authentication system according to Embodiment 1. In Fig. 1, a terminal apparatus 101, a display part 102, an input part 103, a memory part (random number response value memory part) 104, a communication part (a receiving part and transmitting part) 105, a server apparatus (authentication apparatus) 106, a management part (password memory part) 107, a random number generating part 108, a calculation part (authentication value calculation part) 109, a judging part (authentication judging part) 110, a communication part 111, and a judging part (terminal side authentication judging part) 112 of the terminal apparatus 101 are provided.

According to the present Embodiment, the memory part 104 is composed of a nonvolatile memory and can be attached/detached to/from the terminal apparatus 101. According to the present Embodiment, the management part 107 is composed of a hard disk apparatus, relates a user password with a user ID, and memorizes them. The random number generating part 108 generates a ten-digit random number. Concretely, according to the present invention, the random number generating part 108, the calculation part 109, and the judging part 110 are realized by programs. These programs are stored in a hard disk apparatus, a nonvolatile memory, a flexible disk, etc., and loaded onto the server apparatus 106 from them to be executed on CPU.

The communication part 105 of the terminal apparatus 101 and the communication part 111 of the server apparatus 106 are linked through a network, such as radio communication, cable communication, and the Internet.

Now, operations will be explained. First, operations at the time of performing user authentication from the terminal apparatus 101 to the server apparatus 106 will be explained.

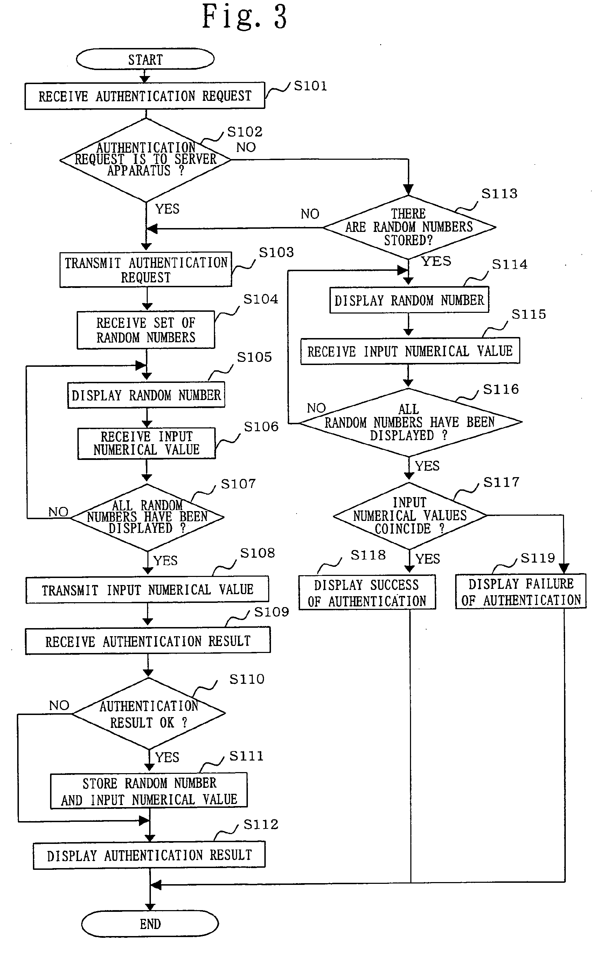

Fig. 3 is a flowchart showing processing executed at the time of performing user authentication processing in the terminal apparatus 101.

First, when a user performs authentication using the terminal apparatus 101, an authentication request including a user ID and an authentication type being authentication for the terminal apparatus 101 or being authentication for the server apparatus 106 is received from the input part 103 (S101). It is checked whether the received authentication request is to the terminal apparatus 101 or to the server apparatus 106 (S102). When the authentication request is to the server apparatus 106, the authentication request including the user ID is transmitted to the server apparatus 106 through the communication part 105 (S103). Then, the terminal apparatus 101 receives a set of random numbers for the authentication request transmitted through the communication part 105, from the server apparatus 106 (S104) and displays one random number in the received set of random numbers, on the display part 102 (S105). An input numerical value (response value) which the user input in response to the random number displayed on the display part 102 is received from the input part 103 (S106). It is checked whether all the random numbers received from the server apparatus 106 have been displayed on the display part 102 or not (S107). When there is a random number not having been displayed yet, the processing from S105 is repeated. When all the random numbers have been displayed, input numerical values (response value) inputted by the user are transmitted to the server apparatus 106 through the communication part 105 (S108) and an authentication result is received through the communication part 105 (S109). Checking the received authentication result(S110), only when the authentication result indicates authentication success, all the random numbers having been used for the authentication and the input numerical values corresponding to the random numbers are stored in the memory part 104 (S111). Then, the authentication result received from the server apparatus 106 is displayed on the display part 102 (S112) to finish the authentication processing.

On the other hand, when the received authentication request is to the terminal apparatus 101 at S102, it is checked whether random numbers and input numerical values corresponding to the random numbers are stored in the memory part (random number response value memory part) 104 or not (S113). When the random numbers and the input numerical values corresponding to the random numbers are not stored in the memory part 104, the authentication request including the user ID is transmitted to the server apparatus 106 through the communication part 105 (S103).

When the random numbers and the input numerical values corresponding to the random numbers are stored in the memory part 104, one random number in the set of the random numbers stored in the memory part 104 is displayed on the display part 102 (S114). An input numerical value (response value) which the user input in response to the random number displayed on the display part 102 is received through the input part 103 (S115). It is checked whether all the random numbers stored in the memory part 104 have been displayed on the display part 102 or not (S116). Then, when there is a random number not having been displayed yet, the processing from S114 is repeated. When all the random numbers have been displayed, the judging part (terminal side authentication judging part) 112 compares all the input numerical values received through the input part 103 with all the input numerical values stored in the memory parts 104, and checks whether both of them coincide or not. (S117). When both of them coincide, success of the authentication is displayed on the display part 102 (S118) to finish the authentication processing. On the other hand, when the input numerical values do not coincide, failure of the authentication is displayed on the display part 102 (S119) to finish the authentication processing.

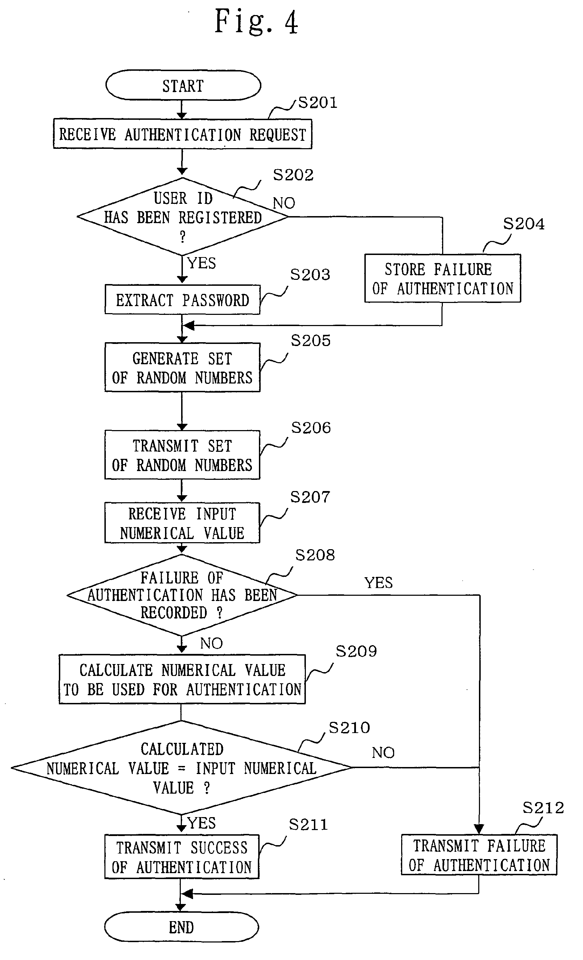

Fig. 4 is a flowchart showing processing to be executed in the server apparatus 106 when an authentication request is received from the terminal apparatus 101.

First, an authentication request including a user ID is received from the terminal apparatus 101 (S201). Then, it is checked whether the user ID included in the received authentication request has been registered in the management part 107 or not (S202). When the user ID has been registered in the management part 107, a password stored to be corresponding to the user ID is extracted (S203). On the other hand, when the user ID has not been registered in the management part 107, failure of the authentication is stored in the judging part 110 (S204). Next, in the random number generating part 108, random numbers needed for authenticating the user are generated (S205). According to Embodiment 1, since authentication is performed by using four input numerical values, four random numbers are generated for one authentication. A set of generated random numbers is transmitted to the terminal apparatus 101 through the communication part 111 (S206). Then, input numerical values (response value) are received from the terminal apparatus 101 (S207), and it is checked whether failure of the authentication has been recorded in the judging part 110 or not (S208). When failure of the authentication has not been recorded in the judging part 110, numerical values (authentication value) to be used for the authentication are calculated by the calculation part 109 (S209) and it is checked whether they coincide with the received input numerical value or not (S210). At the check of S210, when the input numerical values (response value) received from the terminal apparatus 101 coincide with the numerical values (authentication value) calculated by the calculation part 109, success of the authentication is transmitted to the terminal apparatus 101 as a result of the authentication (S211). On the other hand, at the check of S210, when the input numerical values (response value) received from the terminal apparatus 101 do not coincide with the numerical values (authentication value) calculated by the calculation part 109, failure of the authentication is transmitted to the terminal apparatus 101 as a result of the authentication (S212). In addition, at the check of S208, when failure of authentication is stored in the judging part 110, the failure of authentication stored in the judging part 110 is cleared and failure of the authentication is transmitted to the terminal apparatus 101 as a result of the authentication (S212).

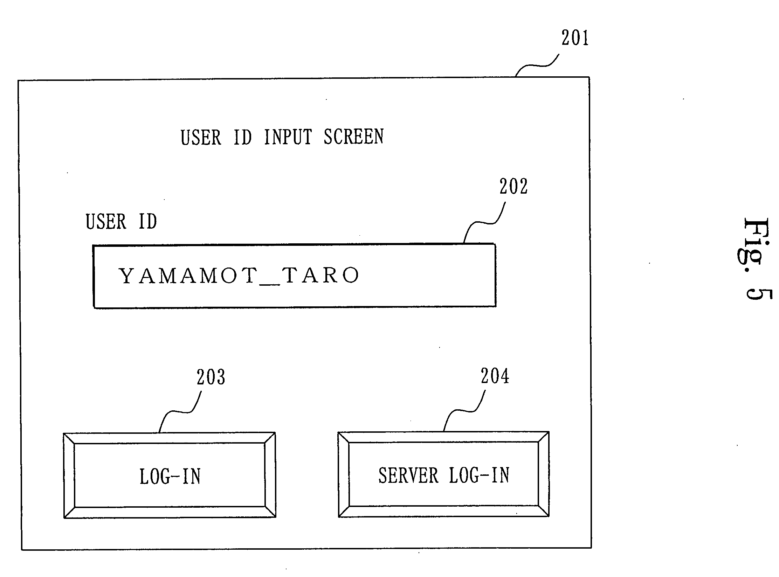

Fig. 5 shows a user ID input screen which is displayed on the display part 102 at the time of receiving an authentication request from a user, at the terminal apparatus 101. In Fig. 5, a user ID input screen 201, a user ID input field 202, a log-in button 203 and a server log-in button 204 are provided.

When starting authentication, a user inputs a user ID into the user ID input field 202 of the user ID input screen 201 through the input part 103. In the case of performing an authentication request to the terminal apparatus 101, the authentication request including the user ID to the terminal apparatus 101 can be received at S101, by operating the log-in button 203. In the case of performing an authentication request to the server apparatus 106, the authentication request including the user ID to the server apparatus 106 can be received at S101 by operating the server log-in button 204.

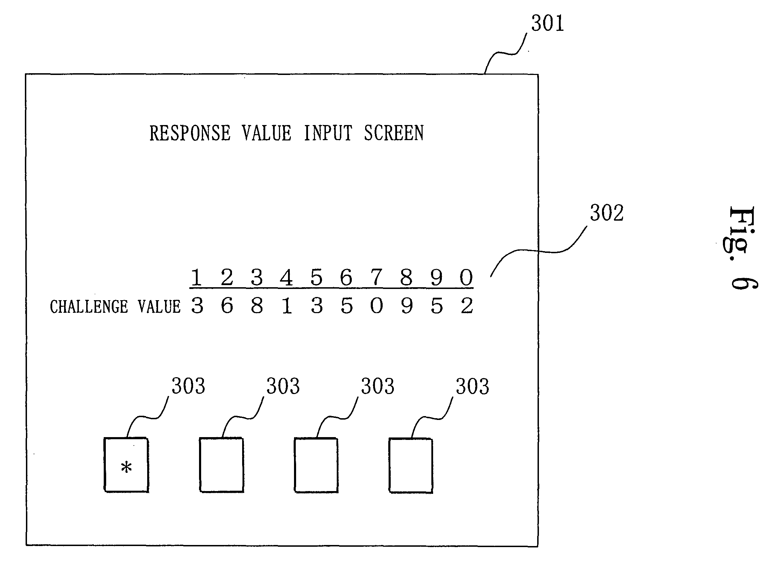

Fig. 6 shows a response value input screen displayed on the display part 102 at S105 at the time of receiving an input numerical value (response value) from the user, in response to a random number, through the input part 103 at S106, in the terminal apparatus 101. In Fig. 6, a response value input screen 301, a random number 302 with digit numbers as a challenge value, and an input field 303 where a user inputs an input numerical value (response value) in response to the random number are provided. * or a numerical value itself is displayed in the input field 303 as an input numerical value.

According to Embodiment 1, a character queue of a plurality of digits (in the present Embodiment, a four-digit number queue) is registered as a password for each user. In the server apparatus 106, the random number generating part 108 generates a random number for each digit of the password, transmits the random number generated for each digit to the terminal apparatus 101, and transmitted random numbers are displayed on the display part 102.

The user inputs a calculation result obtained by using the random number displayed in 302, as an input numerical value, into the input field 303 through the input part 103 with respect to each of four numbers composing the password from the most significant digit in order. In calculating input numerical values, the user uses one number in one digit of the password and one random number displayed in 302 so as to calculate one input numerical value. Concretely, among numbers included in the random number, a number placed at a digit-position concerning a number of the password for which an input numerical value is being calculated, is added to the number of the password to obtain a total numerical value Then, only a numerical value in the ones place is input into the input field 303. In addition, according to the present Embodiment, after inputting a numerical value concerning the first digit, the next random number is displayed in the display part. Thus, the user repeats the input processing for each digit of the password until finishing inputting a calculation value concerning the last digit of the password.

For example, in the case that the password is "2085" and the random number displayed first is "3681350952", the value "2" which is in the most significant digit in the password is added to the value "6" which is in the 2nd digit from the most significant digit in the random numbers, and the first input value becomes "8" which is a value in the ones place of the added total value "8".

On the other hand, in the server apparatus 106 according to the Embodiment 1, at S209, the calculation part (authentication value calculation part) 109 calculates for each digit of the password an authentication value which is used for authentication, by using the following formula:

$$\text{Ans}[i] = ((\text{Rand}[i] / 10^{(10 - \text{Pass}[i])}) \% 10 + \text{Pass}[i]) \% 10$$

where i is a number of an input value, Ans is an array of values used for authentication, Rand is an array of random numbers generated for authentication, Pass is an array of numbers in the password from the most significant digit, "/" is a calculation for obtaining a quotient of division, and "%" indicates a calculation for obtaining a remainder of division. When a number of the password is 0, 10 is applied to Pass[i].

In the case of calculating the first input value by applying the formula to the example of the above-stated random numbers, they become i = 1, Rand [1]. = 3681350952, and Pass [1] = 2.

$$\text{Ans}[1] = ((3681350952 / 10^{(10 - 2)}) \% 10 + 2) \% 10 = 8$$

Thus, Ans [1]. = 8. At S210, the judging part (authentication judging part) 110 of the server apparatus 106 compares the authentication value Ans[i] used for authentication with the input numerical value (response value) from the terminal apparatus 101 with respect to each digit of the password, and judges whether the authentication is to be permitted or not by checking if both of them coincide or not.

Thus, according to Embodiment 1, a numerical value to be input into the input part 103 of the terminal apparatus 101 is not the password itself but a value in the ones place of a total obtained by adding a number in the password to a numerical value in the displayed random numbers which is located at a digit-position indicated by the number in the password. Therefore, even when the input value at the time of authentication is looked by a third person, the danger that the password is guessed and unjustly used for authentication can be reduced. In addition, although the password is a four-digit number according to the Embodiment 1, the password is not restricted to four digits.

Moreover, the maximum of the number of times of authentication failure is not settled in Embodiment 1. However, it is also acceptable to reject to receive authentication any more when failure of authentication is repeated more than the number of times prescribed beforehand. In this case, an area for memorizing the number of times of authentication failure is provided in the memory part 104 in the terminal apparatus 101. Then, when authentication succeeds at S110 and S117, 0 is set to the number of times of authentication failure in the memory part 104 , and when authentication fails at S117, one is added to the number of times of authentication failure in the memory part 104. Then, when the number of times of authentication failure becomes more than the number of times prescribed beforehand, if random numbers and input values for the random numbers have been memorized in the memory part 104, these numbers are deleted. In the server apparatus 106, an area for memorizing the number of times of authentication failure relating to a user ID for every user is provided in the management part 107. Then, when authentication succeeds at S210, 0 is set to the number of times of authentication failure of the user in the management part 107, and when authentication fails at S210, one is added to the number of times of authentication failure of the user in the management part 107. When it is checked whether the user ID included in the authentication request received at S202 is registered in the management part 107 or not, if the number of times of authentication failure of this user becomes more than the number of times prescribed beforehand, failure of authentication is transmitted to the terminal apparatus 101, as an authentication result at S212.

By dint of this, it is possible to prevent a malicious third person from unjustly executing authentication by checking all possibilities even if the password is unknown to the third person.

In Embodiment 1, an input value is calculated by using a calculation value in the ones place of a total obtained by adding a number in the password to a value in the displayed random numbers which is located at a digit-position indicated by the number in the password. At the time of an input value being input, simultaneously the input value is expressed as ∗ in the input field 303 and the challenge value 302 displayed in the display part 102 is updated to be random numbers for the next password. Therefore, even if a value itself in the displayed random numbers which is located at a digit-position indicated by a number in the password is used as the input value, the danger of the password being guessed and unjustly used for authentication can be reduced even when the input value at the time of authentication is looked by a third person.

In Embodiment 1, a value in the ones place of a total obtained by adding a number in the password to a value in the displayed random numbers which is located at a digit-position indicated by the number in the password is used as a calculation value. However, instead of adding the number of the password, it is also acceptable to use a calculation value obtained by adding either one number in the numbers composing the password.

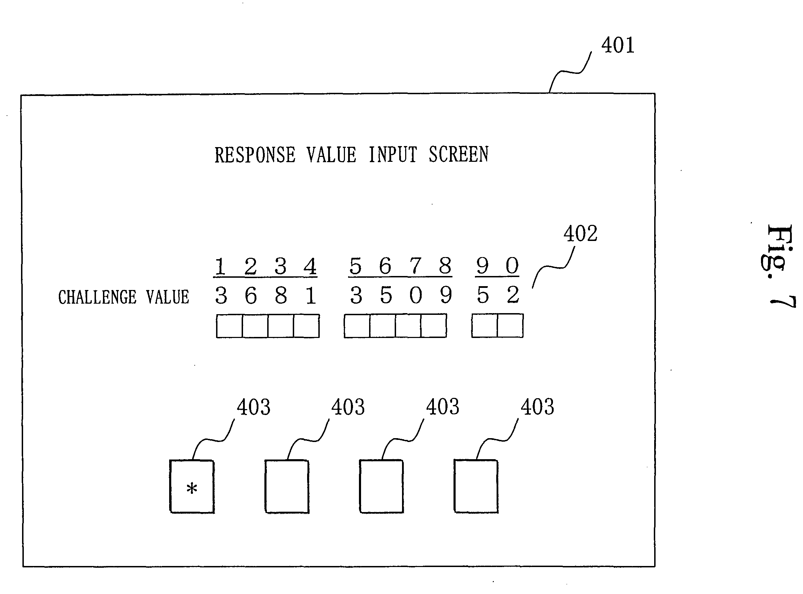

Fig. 7 shows a response value input screen, in the above case, displayed on the display part 102 at the time of receiving an input numerical value (response value) from the user, in response to a random number, through the input part 103 at S106, in the terminal apparatus 101. In Fig. 7, a response value input screen 401, a random number 402 as a challenge value, and an input field 403 to which the user inputs a numerical value as a password in response to the random number are provided. In the case of the password being a four-digit, the random number of 402 is punctuated every four digits from the most significant digit, and digit numbers and frames for blank space corresponding to the password are also displayed. ∗ or a numerical value itself is displayed in the input field 403 as the input numerical value.

Also in this case, a four-digit number is registered as a password for each user. The user inputs a calculation result obtained by using the random number displayed in 402, as an input numerical value, into the input field 403 through the input part 103, with respect to each of four numbers composing the password from the most significant digit in order. In calculating input numerical values, the user uses the password and one random number displayed in 402 so as to calculate one input numerical value. Concretely, among numbers included in the random number, a number placed in a digit-position corresponding to a number of the password for which an input numerical value is being calculated, is added to a number of the password which is located at the same digit-position if the four-digit password is repetitiously arranged in blank spaces, to obtain a total numerical value Then, only a numerical value in the ones place of the total numerical value is input into the input field 403.

For example, in the case that the password is "2085" and the random number displayed first is "3681350952", the first input value becomes "6" by adding the value "6" which is the 2nd digit from the most significant digit in the random numbers to the value "0" which is the 2nd digit from the most significant digit in the password.

On the other hand, in the above case, a value to be used for authentication can be calculated at S209 in the server apparatus 106 by using the following formula:

$$\text{Ans}[i] = ((\text{Rand}[i] / 10^{(10 - \text{Pass}[i])}) \% 10 + \text{Pass}[\text{Pass}[i] \% 4]) \% 10$$

where i is a number of an input value, Ans is an array of values used for authentication, Rand is an array of random numbers generated for authentication, Pass is an array of numbers in the password from the most significant digit, "/" denotes a calculation for obtaining a quotient of division, and "%" denotes a calculation for obtaining a remainder of division. When a number of the password is 0, 10 is applied to Pass[i].

In the case of applying the formula to the example of the above-stated random number at the first digit, they become i = 1, Rand [1] = 3681350952, Pass [1] = 2. and Pass [2] = 0.

$$\text{Ans}[1] = ((3681350952 / 10^{(10 - 2)}) \% 10) + 0 = 6$$

Thus, Ans [1]. = 6. At S210, the judging part (authentication judging part) 110 of the server apparatus 106 compares the authentication value Ans[i] used for authentication with the input numerical value (response value) from the terminal apparatus 101 with respect to each digit of the password, and judges whether the authentication is to be permitted or not by checking if both of them coincide or not.

Thus, according to the present Embodiment, a numerical value to be input into the input part 103 of the terminal apparatus 101 is not the password itself but a value in the ones place of a total obtained by adding a value in the displayed random number which is located at a digit-position indicated by a number in the password, to either one number in the numbers composing the password. Therefore, even when the input value at the time of authentication is looked by a third person, the danger that the password is guessed and unjustly used for authentication can be reduced.

As mentioned above, a numerical value to be input into the input part of the terminal apparatus is not a password itself, and user authentication can be performed by using a value obtained based on the password and the random number displayed in the terminal apparatus. Therefore, even when the input value at the time of authentication is looked by a third person, the danger that the password is guessed and unjustly used for authentication can be reduced. For the user, it is possible to use a password having the same form as the conventional one, and to utilize an authentication system having higher security than the conventional authentication method, by only performing a simple calculation based on the password, in response to random numbers changing at every authentication, without needing a special authentication device.

Embodiment 2

In the above Embodiment 1, one random number is used as a challenge value when an input numerical value is calculated from one digit of a password. Next, an Embodiment in which a plurality of random numbers is used as a challenge value for each digit of the password will be described. An example where two random numbers are used as a challenge value for each digit of a password will be described below. A group of a plurality of random numbers for each digit of a password is called a random number group. According to the present Embodiment, a eight-digit number is used as a password, eight input numerical values are inputted at the time of authentication for the server apparatus, and five input numerical values are inputted at the time of authentication for the terminal apparatus.

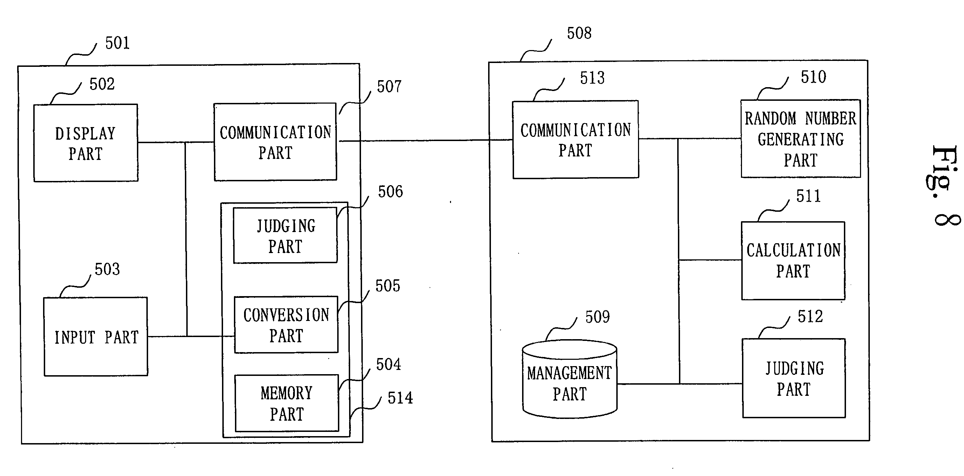

Fig. 8 is a block diagram showing a structure of an authentication system according to the present Embodiment. In Fig. 8, a terminal apparatus 501, a display part 502, an input part 503, a memory part 504, a conversion part (random number change part) 505, a judging part (terminal side authentication judging part) 506, a communication part (a transmitting part and a receiving part) 507, a server apparatus (authentication apparatus) 508, a management part (password memory part) 509, a random number generating part 510, a calculation part (authentication value calculation part) 511, a judging part (authentication judging part) 512 and a communication part 513 are provided.

According to the present Embodiment, the memory part 504, the conversion part 505, and the judging part 506 are installed in an IC card 514, and concretely realized by programs. These programs are stored in a flash memory in the IC card and executed by CPU in the IC card. In addition, the IC card can be attached/detached to/from the terminal apparatus 501.

According to the present Embodiment, the management part 509 is composed of a hard disk apparatus, relates a user password with a user ID, and memorizes them.

The random number generating part 510 generates a ten-digit random number where no number at each digit is in duplicate.

Concretely, according to the present invention, the random number generating part 510, the calculation part 511, and the judging part 512 are realized by programs. These programs are stored in a hard disk apparatus, a nonvolatile memory, a flexible disk, etc., and loaded onto the server apparatus 508 from them to be executed on CPU.

The communication part 507 of the terminal apparatus 501 and the communication part 513 of the server apparatus 508 are linked through a network, such as radio communication, cable communication, and the Internet.

Now, operations will be explained. First, operations at the time of performing user authentication from the terminal apparatus 501 to the server apparatus 508 will be explained.

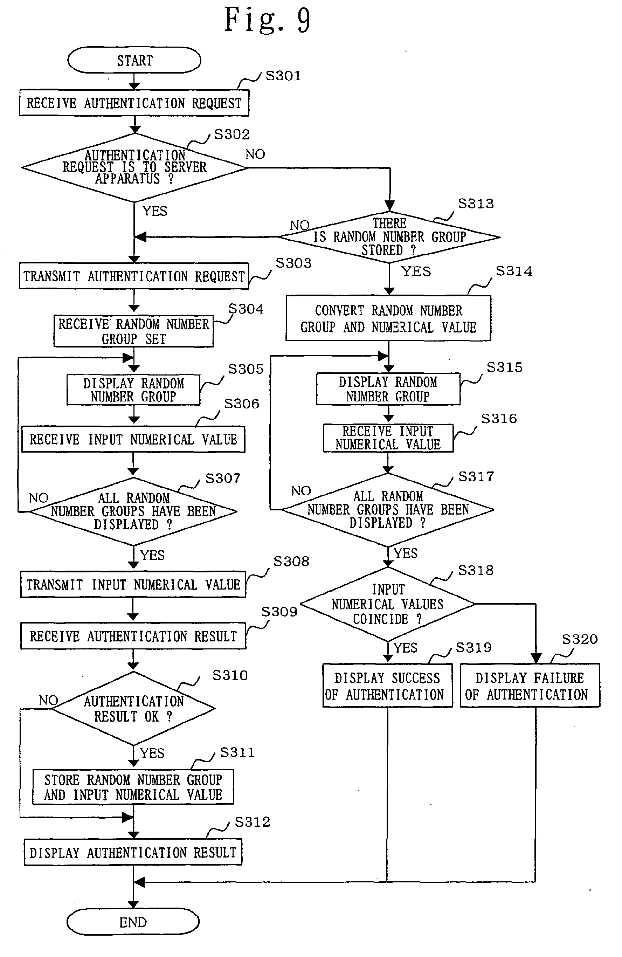

Fig. 9 is a flowchart showing processing executed at the time of performing user authentication processing in the terminal apparatus 501.

First, when a user performs authentication using the terminal apparatus 501, an authentication request including a user ID and an authentication type being authentication for the terminal apparatus 501 or being authentication for the server apparatus 508 is received from the input part 503 (S301). Next, it is checked whether the received authentication request is to the terminal apparatus 501 or to the server apparatus 508 (S302). When the authentication request is to the server apparatus 508, the authentication request including the user ID is transmitted to the server apparatus 508 through the communication part 507 (S303). Then, the terminal apparatus 501 receives a set of random number groups in response to the authentication request transmitted through the communication part 507, from the server apparatus 508 (S304) and displays a random number group (a set of two random numbers) in the received set of random number groups on the display part 502 (S305). An input numerical value (response value) which the user input in response to the random number group displayed on the display part 502 is received from the input part 503 (S306). It is checked whether all the random number groups received from the server apparatus 508 have been displayed on the display part 502 or not (S307). When there is a random number group not having been displayed yet, the processing from S305 is repeated. On the other hand, when all the random number groups have been displayed, input numerical values (response values) inputted by the user are transmitted to the server apparatus 508 through the communication part 507 (S308) and an authentication result is received through the communication part 507 (S309). Checking the received authentication result (S310), only when the authentication result indicates authentication success, a part of random number groups having been used for the authentication and the input numerical values corresponding to these random number groups are stored in the memory part 504 (S311). Then, the authentication result received from the server apparatus 508 is displayed on the display part 502 (S312) to finish the authentication processing.

On the other hand, when the received authentication request is to the terminal apparatus 501 at S302, it is checked whether the random number groups and input numerical values corresponding to them are stored in the memory part 504 or not (S313). When the random number groups and the input numerical values corresponding to them are not stored in the memory part 504, the authentication request including the user ID is transmitted to the server apparatus 508 through the communication part 507 (S303).

On the other hand, when the random number groups and the input numerical values corresponding to them are stored in the memory part 504, after converting these numerical values on the memory part 504 by the conversion part (random number change part) 505 (S314), one random number group (a set of two random numbers) in the set of the converted random number groups (random number groups whose random numbers have been changed) stored in the memory part 504 is displayed on the display part 502 (S315). Then, an input numerical value (response value) which the user input in response to the random number group displayed on the display part 502 is received through the input part 503 (S316). It is checked whether all the random number groups stored in the memory part 504 have been displayed on the display part 502 or not (S317). Then, when there is a random number group not having been displayed yet, the processing from S315 is repeated. On the other hand, when all the random number groups have been displayed, the judging part (terminal side authentication judging part) 506 checks whether or not all the input numerical values received through the input part 503 coincide with all the input numerical values (authentication values) stored in the memory parts 504 (S318). When all of them coincide, success of the authentication is displayed on the display part 502 (S319) to finish the authentication processing. On the other hand, when the input numerical values do not coincide, failure of the authentication is displayed on the display part 502 (S320) to finish the authentication processing.

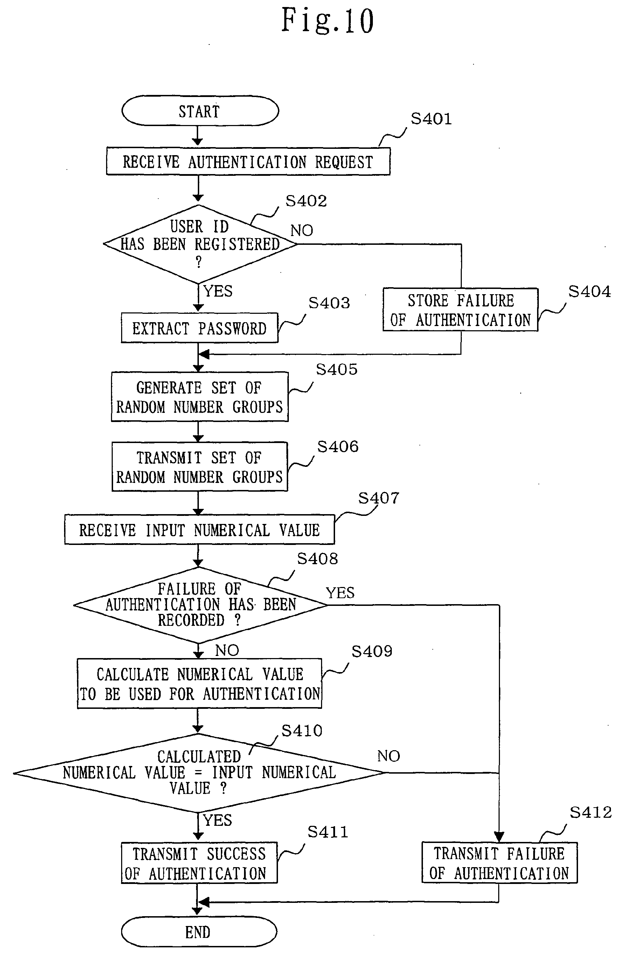

Fig. 10 is a flowchart showing processing to be executed in the server apparatus 508 when an authentication request is received from the terminal apparatus 501.

First, an authentication request including a user ID is received from the terminal apparatus 501 (S401). Then, it is checked whether the user ID included in the received authentication request has been registered in the management part 509 or not (S402). When the user ID has been registered in the management part 509, a password stored to be corresponding to the user ID is extracted (S403). On the other hand, when the user ID has not been registered in the management part 509, failure of the authentication is stored in the judging part 512 (S404). Next, in the random number generating part 510, random number groups, the number of which is needed for authenticating the user, are generated (S405). According to server authentication of Embodiment 2, since the authentication is performed by using eight input numerical values, sixteen random numbers (eight random number groups) are generated for performing authentication once. A set of generated random number groups is transmitted to the terminal apparatus 501 through the communication part 513 (S406). Then, in response to them, input numerical values (response values) are received from the terminal apparatus 501 (S407), and it is checked whether failure of the authentication has been recorded in the judging part 512 or not (S408). When failure of the authentication has not been recorded in the judging part 512, authentication values to be used for the authentication are calculated by the calculation part 511 (S409). Then, the authentication value is compared with the received input numerical value, for each digit of the password, and both of them are checked whether they coincide or not (S410). At the check of S410, when the input numerical values received from the terminal apparatus 501 coincide with the authentication values calculated by the calculation part 511, success of the authentication is transmitted to the terminal apparatus 501 as a result of the authentication (S411). On the other hand, at the check of S410, when the input numerical values received from the terminal apparatus 501 do not coincide with the authentication values calculated by the calculation part 511, failure of the authentication is transmitted to the terminal apparatus 501 as a result of the authentication (S412). In addition, at the check of S408, when failure of authentication is stored in the judging part 510, the failure of authentication stored in the judging part 512 is cleared and failure of the authentication is transmitted to the terminal apparatus 501 as a result of the authentication (S412).

At the time of performing authentication from the user at the terminal apparatus 501, the user ID input screen 201 shown in Fig. 5 is displayed on the display part 502 like Embodiment 1.

When starting authentication, a user inputs a user ID into the user ID input field 202 of the user ID input screen 201 displayed on the display part 502. In the case of performing an authentication request to the terminal apparatus 501, the authentication request including the user ID to the terminal apparatus 501 can be received at S301, by operating the log-in button 203. By operating the server log-in button 204, the authentication request including the user ID to the server apparatus 508 can be received at S301

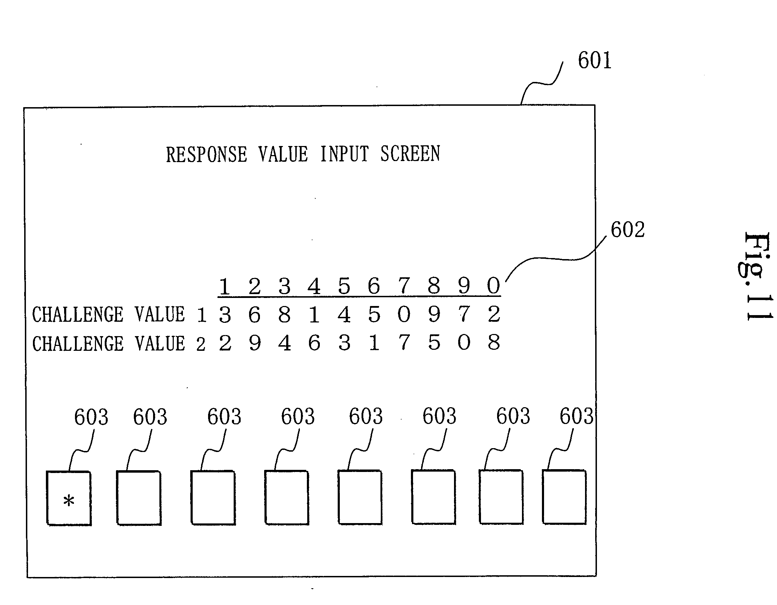

Fig. 11 shows a response value input screen displayed on the display part 502 at the time of receiving an input numerical value from the user, in response to a random number group, through the input part 503 at S306, in the terminal apparatus 501.

In Fig. 11, a response value input screen 601, a random number group (two random numbers) 602 with a digit number, as a challenge value 1 and a challenge value 2, and an input field 603 where a user inputs an input numerical value (response value) in response to the random number are provided. * or a numerical value itself is displayed in the input field 603 as an input numerical value.

According to Embodiment 2, a number queue of a eight-digit number is registered as a password for each user. In the server apparatus 508, the random number generating part 510 generates a random number group for each digit of the password, transmits the random number group generated for each digit to the terminal apparatus 501, and transmitted random number groups are displayed on the display part 502. The user inputs a calculation result obtained by using the random numbers displayed in 602, as an input numerical value, into the input field 603 through the input part 503, with respect to each of eight numbers composing the password from the most significant digit in order. In calculating input numerical values, the user uses two numbers in two digits of the password and two random numbers displayed in 602 so as to calculate one input numerical value. Concretely, a number in the numbers composing the challenge value 1, which is located at a digit-position indicated by the number in the password for which an input numerical value is being calculated, is added to a number in the numbers composing the challenge value 2, which is located at a digit-position indicated by the next number in the password to obtain a total numerical value. Then, only a numerical value in the ones place of the total is input into the input field 603. In addition, according to the present Embodiment, after inputting a numerical value concerning the first digit, the next random number group is displayed on the display part. The user repeats the input processing for each digit of the password until finishing inputting a calculation value concerning the last digit of the password. For the last digit of the password, the first digit of the password is used as a next digit number.

For example, in the case that the password is "20851212", the displayed challenge value 1 is "3681350952", and the displayed challenge value 2 is "2946312548", because the 1st digit from the most significant digit in the password is "2" and the value at the next digit-position in the password is "0", the value "6" which is at the 2nd digit from the most significant digit in the challenge value 1 is added to the value "8" which is at the 10th digit from the most significant digit in the challenge value 2, and the first input value becomes "4" which is a value in the ones place of the total "14".

On the other hand, in the server apparatus 508 according to the Embodiment 2, at S409, the calculation part (authentication value calculation part) 511 calculates for each digit of the password an authentication value which is used for authentication, based on the input numerical value received from the terminal apparatus 501, by using the following formula:

$$\text{Ans}[i] = ((\text{Rand1}\,[i] / 10^{\,(10 - \text{Pass}[i])}) \% 10 + (\text{Rand2}\,[i] / 10^{\,(10 - \text{Pass}[i+1])}) \% 10) \% 10$$

where i is a number of an input value, Ans is an array of values used for authentication, Rand1 and Rand2 are arrays of two random numbers generated for authentication, Pass is an array of numbers in the password from the most significant digit, "/" denotes a calculation for obtaining a quotient of division, and "%" denotes a calculation for obtaining a remainder of division. When a number in the password is 0, 10 is applied to Pass[i].

In the case of calculating the first input value by applying the formula to the example of the above-stated random numbers, they become i = 1, Rand [1]. = 3681350952, Rand2[1] = 2946312548, Pass[1] = 2, and Pass[2] = 10.

$$\text{Ans}[1]$$

$$= ((3681350952 / 10^{\,(10 - 2)}) \% 10 + (2946312548 / 10^{\,(10 - 10)}) \% 10) \% 10$$

$$= 4$$

Thus, Ans[1]=4. At S410, by comparing the authentication value Ans[i] used for authentication with the input numerical value (response value) from the terminal apparatus 501 with respect to each digit of the password, and by checking whether both of them coincide or not, it is judged if the authentication is to be permitted or not.

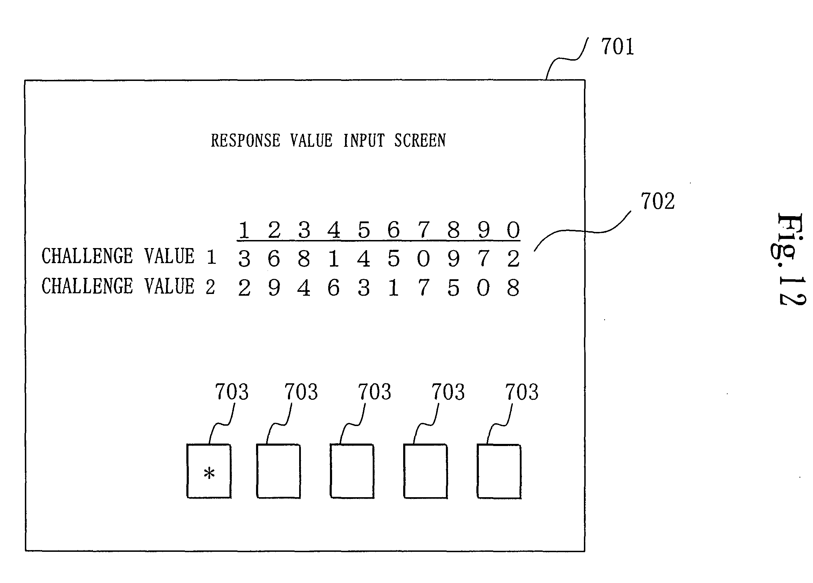

Fig. 12 illustrates a response value input screen displayed on the display part 502 at the time of receiving an input numerical value (response value) from the user through the input part 503, in response to a random number group, in the terminal apparatus 501 at S315.

In Fig. 12, a response value input screen 701, a random number group (two random numbers) 702 with a digit number, as a challenge value 1 and a challenge value 2, and an input field 703 where a user inputs an input numerical value (response value) in response to the random number group are provided. * or a numerical value itself is displayed in the input field 703 as the input numerical value.

In Embodiment 2, when the authentication for the server is successful, each first five values in the eight challenge values 1, the eight challenge values 2 and the eight input numerical values used for the authentication are memorized in the memory part 504.

When authentication for the terminal is requested, the conversion part (random number change part) 505 executes conversion of the challenge value 1, the challenge value 2, and the input numerical value memorized in the memory part 504, at S314.

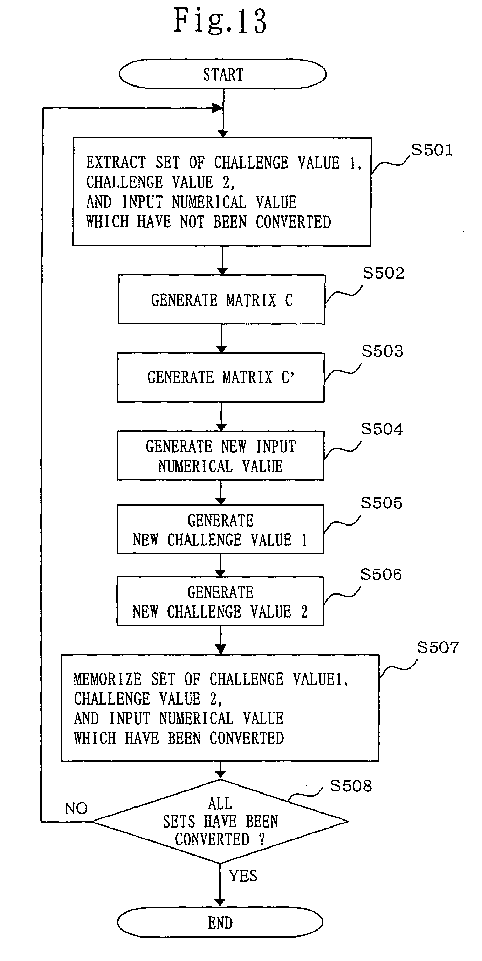

Fig. 13 is a flowchart showing conversion processing performed in the conversion part 505 in the terminal apparatus 501, at S314.

The first one set of challenge value 1, challenge value 2, and input numerical value which have not been converted is extracted from the memory part 504 (S501), and a matrix C of 10 × 10, whose element is Cij = (chgli + chg2j) % 10 which is a total of numbers of the challenge value 1 and the challenge value 2 at each digit, is generated (S502). i and j are integers from 1 to 10.

Next, by converting each element of matrix C to 1 when each element is equal to the input numerical value and by converting each element of matrix C to 0 when each element is not equal to the input numerical value, a matrix C' of 10 × 10 is generated (S503).

In the integers from 0 to 9, an arbitrary numerical value is determined as a new input numerical value N (authentication value) and rewritten to the memory part 504 (S504).

Then, a new challenge value 1 is calculated based on the following matrix calculation formula (5505).

$$CH1' = C' \times CH1 + [N-1,N-1,N-1,N-1,N-1,N-1,N-1,N-1,N-1,N-1]$$

where CH1 denotes a matrix of 10 × 1 in which each digit of the challenge value 1 is an element, CH1' denotes a matrix of 1 × 10 in which each digit of a new challenge value is an element, and N denotes a new input numerical value N (authentication value) determined at S504.

Next, a new challenge value 2 is calculated based on the following formula (S506).

$$CH2i = (11 - CH1i) \% 10$$

where i is an integer from 1 to 10, showing the number of digit.

After rewriting these new generated challenge values into the memory part 504, it is checked whether all the groups of the challenge value 1, the challenge value 2, and the input numerical value memorized in the memory part 504 have been converted or not (S508). When all the groups have been converted, it goes to end, and if there is a group which has not been converted yet, the processing from S501 will be repeated.

For example, in the case that the first two digits of a password are "20", the challenge value 1 is "3681450972" and the challenge value 2 is "2946317508", because the 1st digit from the most significant digit in the password is "2" and the value at the 2nd digit-position in the password is "0", the value "6" which is at the 2nd digit from the most significant digit in the challenge value 1 is added to the value "8" which is at the 10th digit from the most significant digit in the challenge value 2, and the first input value becomes "4" which is a value in the ones place of the total "14".

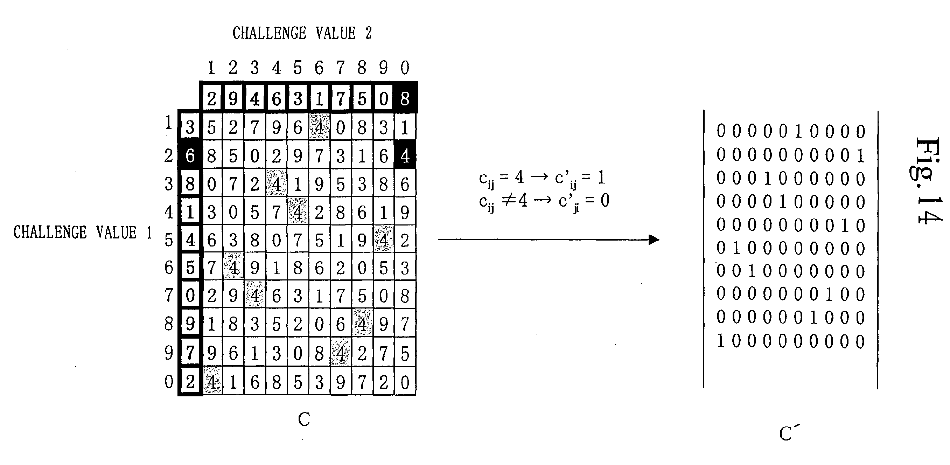

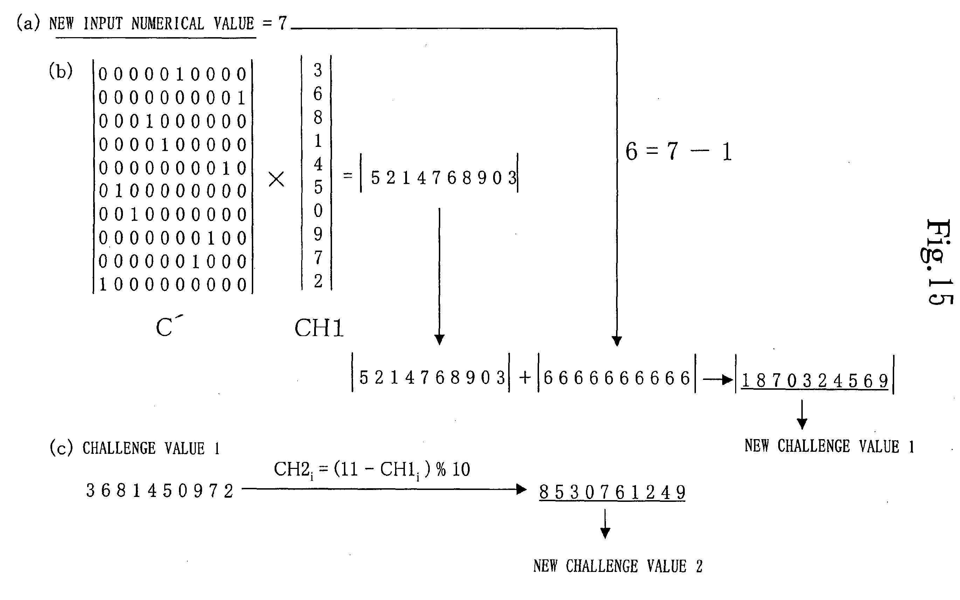

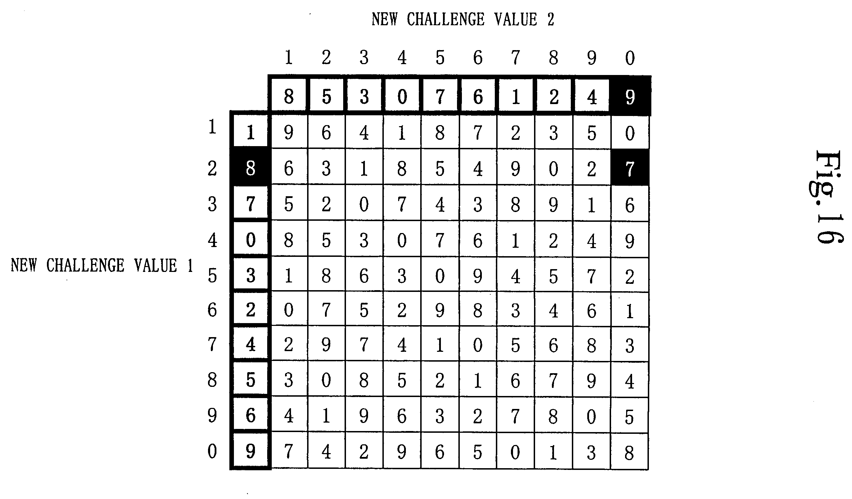

Figs. 14 through 16 show the state of the group of the example being converted into a group of a new challenge value 1, a new challenge value 2, and a new input value by the conversion part 505. Fig. 14 shows the state of the matrix C' being generated based on the matrix C generated at S501. In Fig. 15, (a) shows the case of the new input numerical value N (authentication value) being "7", (b) shows the state of a new challenge value 1 being generated, and (c) shows the state of a new challenge value 2 being generated. Fig. 16 shows that the new input numerical value is "7" when the new matrix C is generated based on the new challenge value 1 and the new challenge value 2 and when the first two digits of the password are "20."

Thus, according to Embodiment 2, a numerical value to be input into the input part 503 of the terminal apparatus 501 is not the password itself but a value in the ones place of a total obtained by adding numbers in the displayed two random numbers, which are located at digit-positions indicated by each of two digits in the password. Therefore, even when the input value at the time of authentication is looked by a third person, the danger that the password is guessed and unjustly used for authentication can be reduced. In addition, by using a ten-digit random number where no number is in duplicate, it becomes possible to repeatedly perform the authentication for the terminal apparatus 501 with displaying different random numbers and without connecting to the server apparatus 508, by using these converted numerical values based on two random numbers and input numerical values in response to the two random numbers memorized in the memory part 504 when the authentication for the server apparatus 508 was previously successful, at the time of the authentication for the terminal apparatus 501.

In Embodiment 2, sets of two random numbers and an input numerical value memorized in the memory part 504 when the authentication for the server apparatus 508 was successful, are a part of eight sets of two random numbers and an input numerical value used for the authentication for the server apparatus 508, like 5 sets. However, it is also acceptable to memorize all the values of the eight sets and use them at the next time of authentication for the terminal apparatus 501. In Embodiment 2, an eight-digit number is used as a password. However the password is not limited to the eight-digit number.

In addition, for the authentication at the terminal apparatus, it is also acceptable to use the random number and the input apparatus which were used for the authentication for the server, as described in Embodiment 1.

In Embodiment 2, the memory part 504 of the terminal apparatus 501 is provided in the IC card 514, and can be attached/detached to/from the terminal apparatus 501. It is also acceptable to divide the memory part 504 into two, to provide one in the IC card 514, to include the other one in the terminal apparatus 501, to memorize the input value at the last time of the authentication in the memory part in the IC card 514, to memorize the random number at the last time of the authentication in the memory apparatus included in the terminal apparatus 501, and therefore to separately store random numbers and input numerical values in response to them to be needed at the next time of the authentication for the terminal apparatus 501, in separate memory apparatuses. In this case, by separately possessing the terminal apparatus 501 and the IC card 514 at the time of not using them, it is possible to prevent the terminal apparatus 501 from being unjustly utilized.

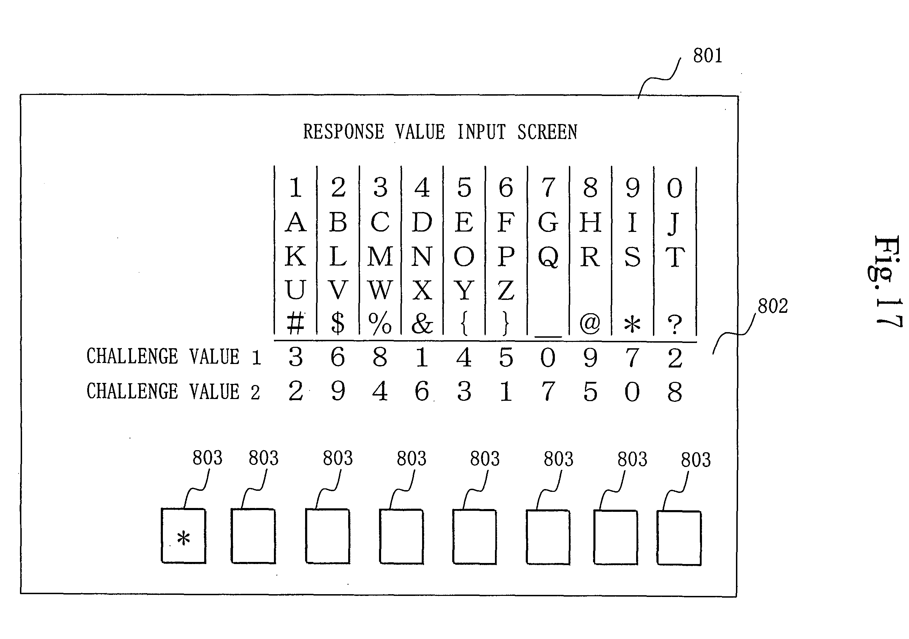

In Embodiment 2, an eight-digit number is used as a password. However, it is possible to perform user authentication using a password of a sign queue of a plurality of digits including not only a number but also an alphabet and a special character, by adding not only the display of digit of a number but also the notation of an alphabet and a special character to the password input screen as shown in Fig. 17.

In Fig. 17, a response value input screen 801, two random numbers 802 with a digit number, an alphabet, a special character, as a challenge value 1 and a challenge value 2, and an input field 803 where a user inputs an input numerical value (response value) in response to the random number are provided. * or a numerical value itself is displayed in the input field 803 as the input numerical value.

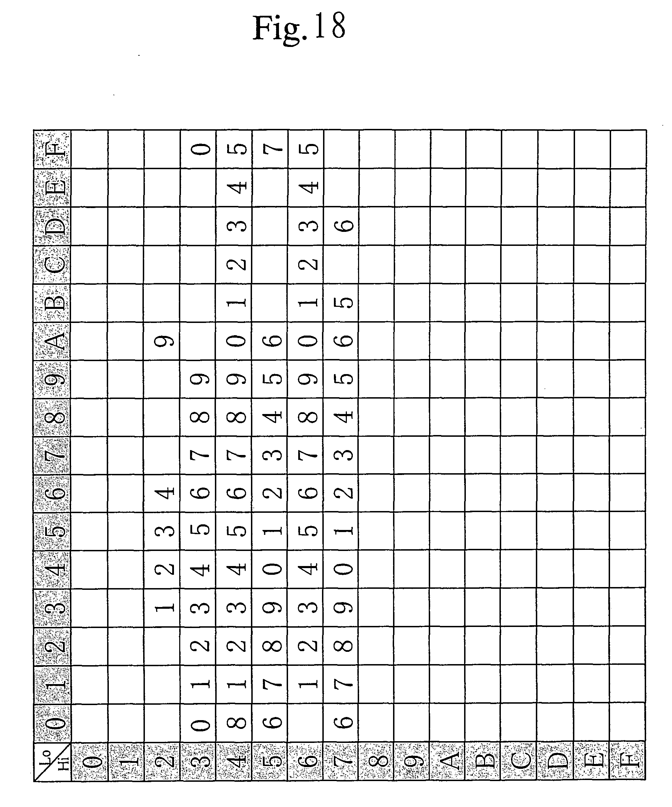

In this case, in the calculation part 511 of the server apparatus 508, authentication can be performed by converting a password into a numerical value based on the conversion table shown in Fig. 18, for example, and making comparison with an input numerical value at S410 based on the numerical value after the conversion. In the present Embodiment, the case that a password is received as an ASCII character queue and distinction between a capital letter and a small letter of the alphabet in the password is not made has been described. In the present Embodiment, a password is a sign queue of eight-digit including numbers, alphabets and special characters. However, the length of the password is not limited to eight-digit.

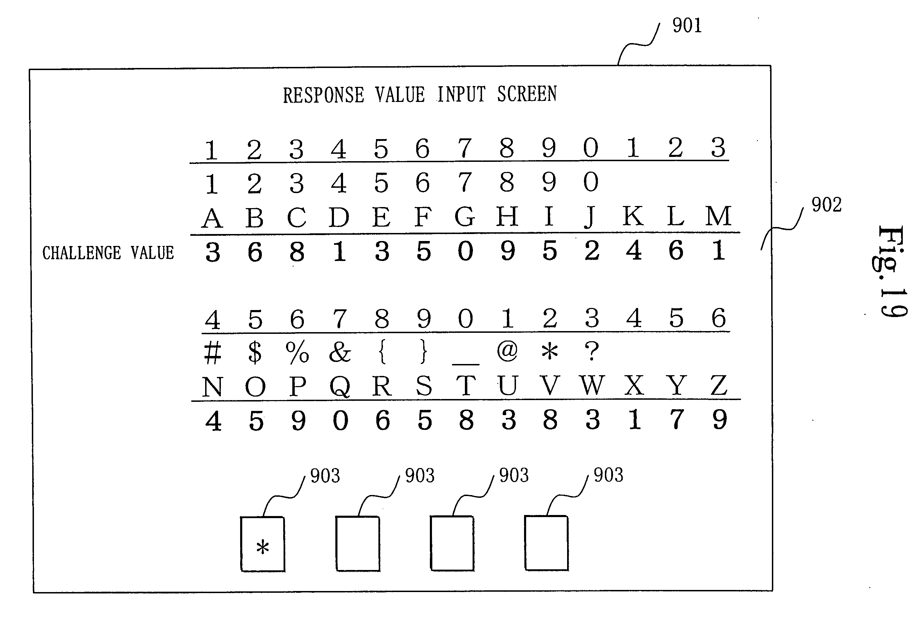

In Embodiment 1, a four-digit number is used as a password. However, it is possible to perform user authentication using a password including not only a number but also an alphabet and a special character, by adding not only the display of digit of a number but also the notation of an alphabet and a special character to the password input screen as shown in Fig. 19.

In Fig. 19, a response value input screen 901, a random number 902 with a digit number, an alphabet, a special character, as a challenge value, and an input field 903 where a user inputs an input numerical value (response value) in response to the random number are provided. * or a numerical value itself is displayed in the input field 903 as the input numerical value.

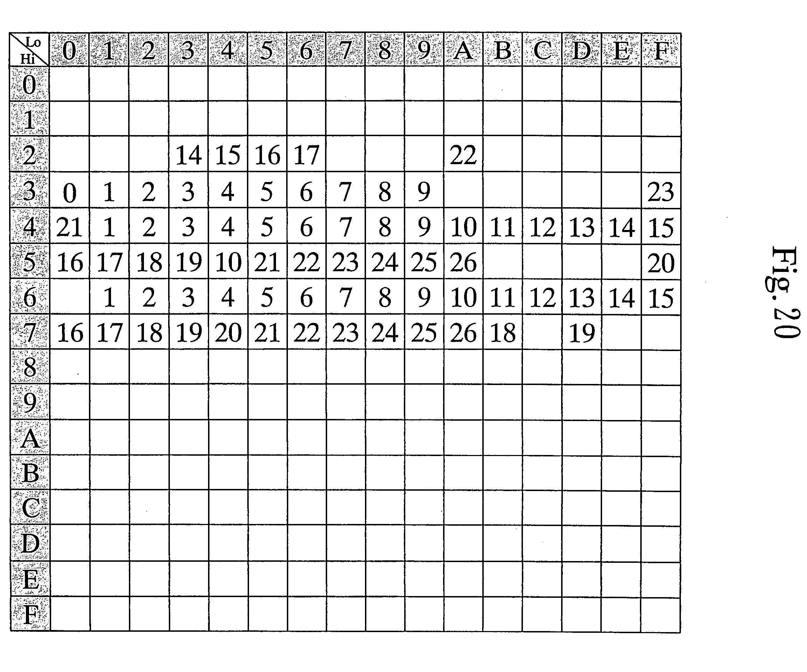

In this case, in the calculation part 109 of the server apparatus 106, authentication can be performed by converting a password into a numerical value based on the conversion table shown in Fig. 20, and calculating a value to be used for the authentication at S209 based on the numerical value after the conversion. In the present Embodiment, the case that a password is received as an ASCII character queue and distinction between a capital letter and a small letter of the alphabet in the password is not made has been described.

In this case, the random number generating part 108 generates random number of 26 digits. The following formula is used for calculating a value used for authentication in S209.

$Ans[i] = ((Rand[i] / 10^{(26 - Pass[i])})\ \% \ 10 + Pass[Pass[i]\ \% \ 4])\ \% \ 10$

where i is a number of an input value, Ans is an array of values used for authentication, Rand is an array of random numbers generated for authentication, Pass is an array of numbers in the password from the most significant digit, "/" denotes a calculation for obtaining a quotient of division, and "%" denotes a calculation for obtaining a remainder of division. When a number of the password is 0, 10 is applied to Pass[i].

In Embodiment 1 and Embodiment 2, the case that when a user inputs an input numerical value into the input field of the password input screen, * is displayed so that the inputted numerical value may not be understood by a third person has been described. However, in order to prevent the error of a numerical value input, the numerical value inputted itself can be displayed in the input field.

As mentioned above, a numerical value to be input into the input part of the terminal apparatus is not a password itself, and user authentication can be performed by using a value obtained based on the password and random numbers displayed in the terminal apparatus. Therefore, even when the input value at the time of authentication is looked by a third person, the danger that the password is guessed and unjustly used for authentication can be reduced. For the user, it is possible to use a password having the same form as the conventional one, and to utilize an authentication system having higher security than the conventional authentication method, by only performing a simple calculation based on the password, in response to random numbers changing at every authentication, without needing a special authentication device.

Embodiment 3

In the above Embodiments, random numbers are displayed on the terminal apparatus at the time of accessing the server apparatus, and authentication is performed at the server apparatus based on input numerical values which a user input in response to the random numbers. Next, in a network system where service provider provides a service through a service provide apparatus being different from the authentication apparatus of the third person in which a user registration is done, an Embodiment applied to authentication at the time of a user accessing the service provide apparatus will be described.

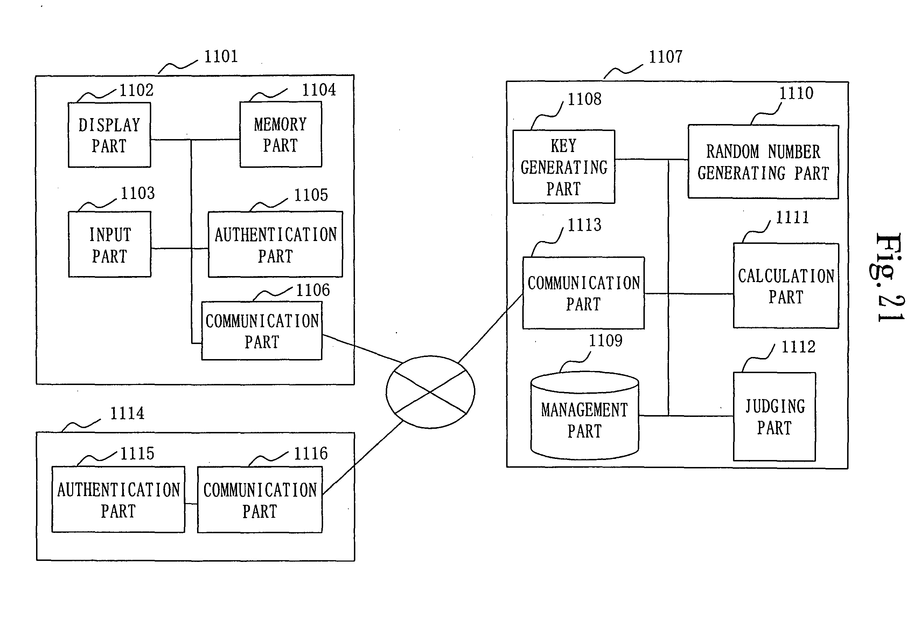

Fig. 21 is a block diagram showing a structure of an authentication system according to the present Embodiment. In Fig. 21, a terminal apparatus 1101, a display part 1102, an input part 1103, a memory part 1104, an authentication part (decryption part) 1105, a communication part (transmitting part and receiving part) 1106, an authentication apparatus 1107, a key generating part 1108, a management part (password memory part) 1109, a random number generating part 1110, a calculation part (authentication value calculation part) 1111, a judging part (authentication judging part) 1112, a communication part 1113, a service provide apparatus 1114, an authentication part 1115, and a communication part 1116 are provided.

According to the present Embodiment, the memory part 1104 is composed of an volatile memory included in the terminal apparatus 1101, and memorizes a private key of a user received from the authentication apparatus 1107. Concretely, according to the present invention, the authentication part 1105 is realized by programs. These programs are stored in a hard disk apparatus, a nonvolatile memory, a flexible disk, etc., and loaded onto the terminal apparatus 1101 from them to be executed on CPU. The key generating part 1108 generates a set of a private key and a public key.

According to the present Embodiment, the management part 1109 is composed of a hard disk apparatus, relates a user password, a public key generated in the key generating part 1108, and the validity term of the public key with a user ID, and memorizes them.

The random number generating part 1110 generates a ten-digit random number.

Concretely, according to the present Embodiment, the key generating part 1108, the random number generating part 1110, the calculation part 1111, and the judging part 1112 are realized by programs. These programs are stored in a hard disk apparatus, a nonvolatile memory, a flexible disk, etc., and loaded onto the authentication apparatus 1107 from them to be executed on CPU.

Concretely, according to the present Embodiment, the authentication part 1115 is realized by programs. These programs are stored in a hard disk apparatus, a nonvolatile memory, a flexible disk, etc., and loaded onto the service provide apparatus 1114 from them to be executed on CPU.

The communication part 1106 of the terminal apparatus 1101, the communication part 1113 of the authentication apparatus 1107 and the communication part 116 of the service provide apparatus are linked through a network, such as radio communication, cable communication, and the Internet.

Now, operations will be explained.

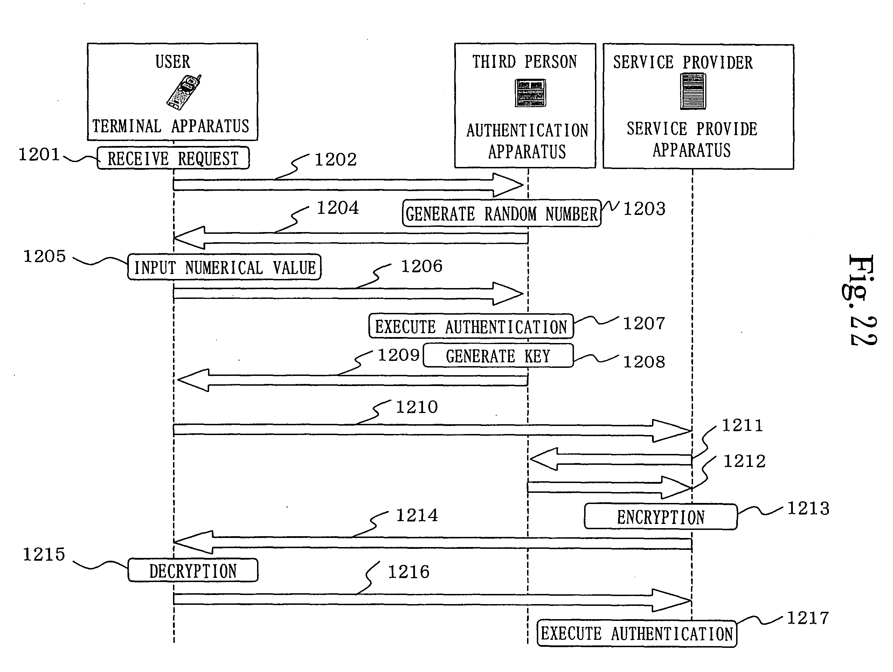

Fig. 22 is a timing chart showing communication data between apparatuses and processing on each apparatus.

First, in the case of a user performing authentication for the service provide apparatus 1114 using the terminal apparatus 1101, when receiving information which specifies a user ID and the service provide apparatus 1114 from the input part 1103 at 1201, the terminal apparatus 1101 transmits an authentication request 1202 including a user ID to the authentication apparatus 1107. When receiving the authentication request 1202, if the user ID included in the authentication request 1202 has been registered in the management part 1109, the authentication apparatus 1107 generates random number sets 1204 at 1203, the number of which is required for authenticating the user, and transmits them to the terminal apparatus 1101. The terminal apparatus 1101 displays the received random number sets 1204 on the display part 1102, receives all input numerical values 1206 inputted in response to the displayed random numbers sets at 1205, and transmits them to the authentication apparatus 1107. Receiving all the input numerical values 1206 from the terminal apparatus 1101, the authentication apparatus 1107 calculates authentication values to be used for authentication, by the calculation part 1111 based on the user password on the management part 1109 at 1207, and performs authentication depending upon whether they coincide with all the input numerical values 1206 or not The above stated processing can also be performed by either method of the Embodiment 1 or Embodiment 2.

Then, when the authentication is successful since the authentication values coincide with the input numerical values, the key generating part 1108 generates a set of a private key 1209 and a public key 1212 at 1208, registers the public key 1212 with a validity term, relating to the user ID, in the management part 1109, and transmits the private key 1209 to the terminal apparatus 1101. In addition, in transmitting the private key 1209 from the authentication apparatus 1107 to the terminal apparatus 1101, an anonymous communication, such as SSL (Secure Sockets Layer) communication by the public key of the authentication apparatus is used. Receiving the private key 1209 from the terminal, the terminal apparatus 1101 transmits an authentication request 1210 including the user ID to the service provide apparatus 1114 which has been specified. Receiving the authentication request 1210, the service provide apparatus 1114 transmits a key demand 1211 including the user ID, which is acquired from the received authentication request 1210, to the authentication apparatus 1107.

The authentication apparatus 1107 acquires the user ID from the received key demand 1211, checks the validity term of the public key 1212 memorized to be relating with the user ID, in the management part 1109, and, if it is within the validity term, transmits the public key 1212 to the service provide apparatus 1114. Receiving the public key 1212 from the authentication apparatus 1107, the service provide apparatus 1114 generates arbitrary information by the authentication part 1115 as authentication information 1216 at 1213, encrypts it to be encryption information 1214 by using the received public key 1212, and transmits it to the terminal apparatus 1101. Receiving the encryption information 1214, the terminal apparatus 1101 decrypts the received encryption information 1214 at 1215 to be authentication information 1216, using the private key 1209, by the authentication part (decryption part) 1105, and transmits the authentication information 1216 to the service provide apparatus 1114. Receiving the authentication information 1216 from the terminal apparatus 1101, the service provide apparatus 1114 performs authentication depending upon whether the received authentication information 1216 coincides with the authentication information 1216 before the encryption using the public key 1212. Then, only when the authentication is successful because both of the information coincide, service is rendered to the terminal apparatus 1101.

According to the present Embodiment, when a plurality of service providers rendering service which a user wants to utilize exists on a network, it is possible for the user to execute user authentication and receive the service without user registration individually at the service provide apparatus of each service provider, and it is possible not to input the password itself at the time of the user authentication and to reduce the danger that the password is guessed and unjustly used for authentication even when the input at the time of authentication is looked by a third person.

As mentioned above, a numerical value to be input into the input part of the terminal apparatus is not a password itself, and user authentication can be performed by using a value obtained based on the password and random numbers displayed on the terminal apparatus. Therefore, even when the input value at the time of authentication is looked by a third person, the danger that the password is guessed and unjustly used for authentication can be reduced. For the user, it is possible to use a password having the same form as the conventional one, and to utilize an authentication system having higher security than the conventional authentication method, only by performing a simple calculation based on the password, in response to random numbers changing at every authentication, without needing a special authentication device.

Moreover, the above-mentioned authentication system can be applied to the authentication at a plurality of service provide apparatuses rendering service to a user, and even when utilizing a plurality of services, the user can utilize the service without inputting the password itself into the terminal apparatus. Therefore, the danger of the service being unjustly utilized can be reduced.

Embodiment 4

In Embodiments 1 through 3, authentication for the terminal apparatus is performed by using random numbers transmitted from the authentication apparatus. In the present Embodiment, the case of the terminal apparatus independently performing user authentication will be explained.

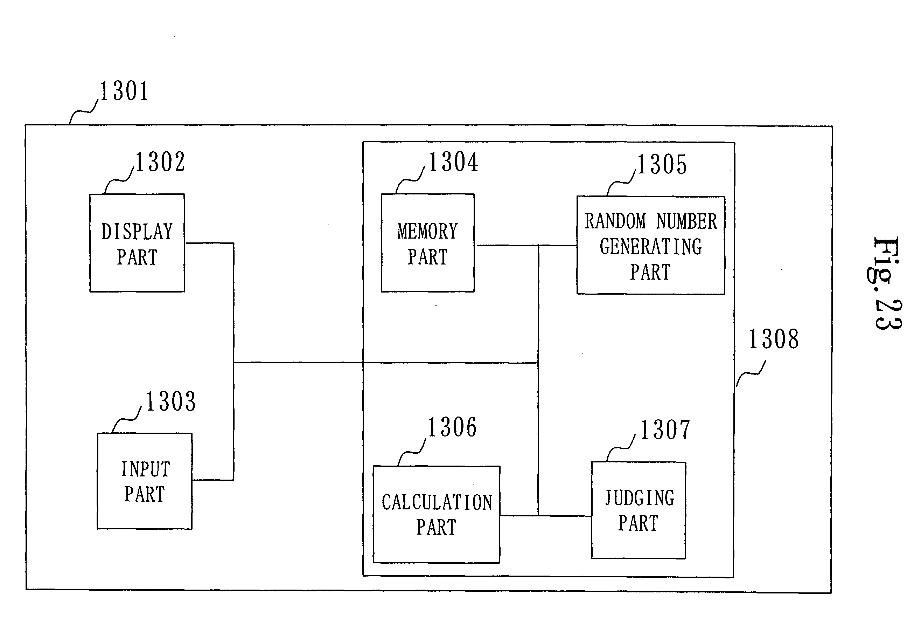

Fig. 23 is a block diagram showing a structure of an authentication system according to Embodiment 4. In Fig. 23, a terminal apparatus 1301, a display part 1302, an input part 1303, a memory part 1304, a random number generating part 1305, a calculation part (authentication value calculation part) 1306, a judging part (authentication judging part) 1307 are provided. According to the present Embodiment, the memory part 1304, the random number generating part 1305, the calculation part 1306 and the judging part 1307 are installed in an IC card 1308, and concretely realized by programs. These programs are stored in a flash memory in the IC card and executed by CPU in the IC card. In addition, the IC card can be attached/detached to/from the terminal apparatus 1301.

The memory part 1304 memorizes a password of a user to whom authentication is performed by the terminal apparatus 1301 and a private key of the user which is paired with a public key of the user. The password of the user is a sign queue of a plurality of digits like Embodiments 1 through 3.

The random number generating part 1305 generates a ten-digit random number where no number at each digit is in duplicate.

Next, operations will be explained. Operations at the time of performing user authentication for the terminal apparatus 1301 will be described.

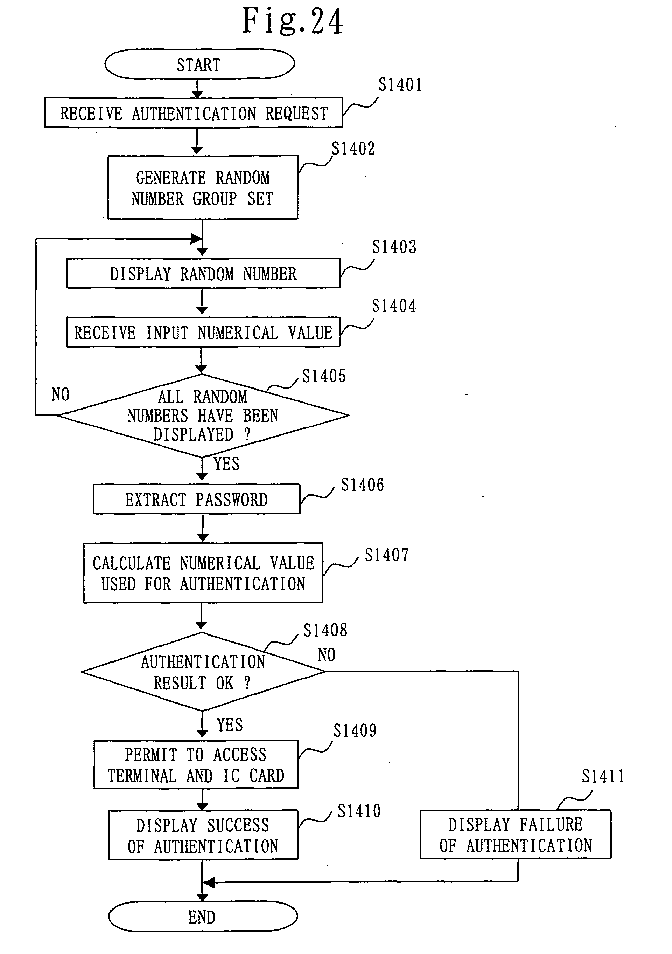

Fig. 24 is a flowchart showing the processing performed at the time of performing user authentication processing in the terminal apparatus 1301.

First, in the case of a user performing authentication using the terminal apparatus 1301, an authentication request is received from the input part 1302 (S1401). Next, the terminal apparatus 1301 generates random number groups, the number of which is required for authenticating the user, in the random number generating part 1305 (S1402). Then, random number groups (set of random numbers equal to or more than two) are displayed on the display part 1302 out of the generated random number groups (S1403). Input numerical values (response values) which the user input in response to the random number groups displayed on the display part 1302 are received from the input part 1303 (S1404), and it is checked whether all the random number groups generated by the random number generating part 1305 have been displayed on the display part 1302 or not (S1405). Then, when there is a random number group not having been displayed yet, the processing from S1403 is repeated. On the other hand, when all the random number groups have been displayed, the password memorized in the memory part 1304 is extracted (S1406), authentication values to be used for the authentication are calculated in the calculation part 1306 (S1407) and, the calculated authentication values are compared with the input numerical values received for each digit of the password, it is checked whether both of them coincide or not (S1408). At the check of S1408, when the input numerical values received from the input part 1303 coincide with the authentication values calculated by the calculation part 1305, access of the user to the terminal apparatus 1301 and the IC card 1308 is permitted (S1409), and success of the authentication is displayed on the display part 1302 (S1410). On the other hand, when the input numerical values do not coincide, failure of the authentication is displayed on the display part 1302 (S1411).

In the case of performing authentication from the a user at the terminal apparatus 1301, the response value input screen 801 of Fig. 17 which is the same as the one used in Embodiment 2 is displayed on the display part 1302.

In addition, in the terminal apparatus 1301 according to Embodiment 4, the calculation part 1306 calculates an authentication value for each digit of the password by using the following formula which is the same as the one used in Embodiment 2:

$$\text{Ans}[i] = ((\text{Rand1}\ [i]\ /\ 10^{(10 - \text{Pass}[i])})\ \%\ 10 + (\text{Rand2}\ [i]\ /\ 10^{(10 - \text{Pass}\ [i+1])})\ \%\ 10)\ \%\ 10$$

where i is a number of an input value, Ans is an array of values used for authentication, Rand1 and Rand2 are arrays of two random numbers generated for authentication, Pass is an array of numbers in the password from the most significant digit, "/" denotes a calculation for obtaining a quotient of division, and "%" denotes a calculation for obtaining a remainder of division. When a number in the password is 0, 10 is applied to Pass[i].

Furthermore, it is possible in the calculation part 1306 of the terminal apparatus 1301 to perform authentication by obtaining authentication values based on a password including not only a number but an alphabet and a special character by using the conversion table shown in Fig. 18 which is the same as the one used in the Embodiment 2 in S1407, and by comparing them with input numerical values. In the present Embodiment, the case that a password is received as an ASCII character queue and distinction between a capital letter and a small letter of the alphabet in the password is not made has been described. In the present Embodiment, a password is a sign queue of eight-digit including numbers, alphabets and special characters. However the length of the password is not limited to eight-digit.

According to the present embodiment, a numerical value to be input into the input part of the terminal apparatus is not a password itself, and user authentication can be performed by using a value obtained based on the password and random number groups displayed in the terminal apparatus. Therefore, even when the input numerical value at the time of authentication is looked by a third person, the danger of unjustly using data in the terminal apparatus and in the IC card by guessing the password can be reduced. For the user, it is possible to use a password having the same form as the conventional one, and to utilize an authentication system having higher security than the conventional authentication system, by only performing a simple calculation based on the password, in response to random number groups changing at every authentication, without needing a special authentication device. Therefore, the authentication system of the present Embodiment can be used as the user authentication for an IC card in which a private key of a user being paired with a public key of the user is stored. Thus, in the authentication system using a public key, the authentication system of high security can be utilized.

In addition, in the above explanation, a random number group (set of random numbers equal to or more than two) is used. However, it is also acceptable to generate one random number for each digit of a password to be used for user authentication like the Embodiment 1. When using one random number for each digit of a password, the same structure as the one shown in Fig. 23 and the same processing procedure as the one shown in Fig. 24 are used, and only the different respect is that the number of random numbers to be generated is one and the formula for calculating an authentication value is the following one shown in the Embodiment 1:

$$\text{Ans}[i] = ((\text{Rand}\ [i]\ /\ 10^{(10 - \text{Pass}[i])})\ \%\ 10 + \text{Pass}\ [i])\ \%\ 10$$

where i is a number of an input value, Ans is an array of values used for authentication, Rand is an array of random numbers generated for authentication, Pass is an array of numbers in the password from the most significant digit, "/" denotes a calculation for obtaining a quotient of division, and "%" denotes a calculation for obtaining a remainder of division. When a number of the password is 0, 10 is applied to Pass[i].

Embodiment 5

The present Embodiment will describe the case that a set of a random number for display and a random number for background (random number for additional element) is used for each digit of a password, the random number for display is displayed, as a challenge value, on a prescribed background pattern on the response value input screen, a background pattern of each password candidate is determined based on the random number for background, and the password candidate is displayed on each background pattern.

According to the present Embodiment, a queue of eight signs including numbers, alphabets, and special characters is used as a password, and eight input numerical values are input at the time of authentication for the server apparatus and authentication for the terminal. Moreover, the random number for background is supposed to be a random number array composed of five ten-digit random numbers.

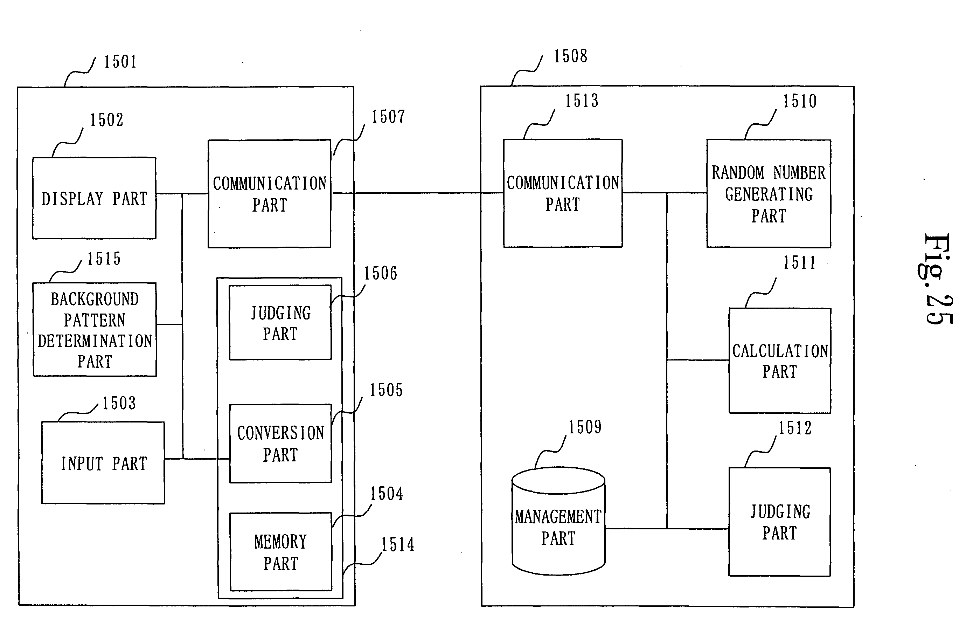

Fig. 25 is a block diagram showing a structure of an authentication system according to the present Embodiment. In Fig. 25, a terminal apparatus 1501, a display part 1502, an input part 1503, a memory part 1504, a conversion part (random number change part) 1505, a judging part (terminal side authentication judging part) 1506, a communication part (a transmitting part and a receiving part) 1507, a server apparatus (authentication apparatus) 1508, a management part (password memory part) 1509, a random number generating part 1510, a calculation part (authentication value calculation part) 1511, a judging part (authentication judging part) 1512 and a communication part 1513 are provided.

A background pattern determination part 1515 determines a background pattern (additional element) of each password candidate (reference sign group) on the response value input screen by using a random number for background (random number for additional element). The background pattern determination part 1515 is corresponding to an example of an additional element determination part.

According to the present Embodiment, the memory part 1504, the conversion part 1505, and the judging part 1506 are concretely realized by programs, stored in a flash memory 1514 and loaded onto the terminal apparatus 1501 to be executed on CPU.

According to the present Embodiment, the management part 1509 is composed of a hard disk apparatus, relates a user password with a user ID, and memorizes them.

The random number generating part 1510 generates a set of a ten-digit random number where no number at each digit is in duplicate as a random number for display and an array of random number for background being composed of five ten-digit random numbers where no number at each digit is in duplicate as random numbers for background.

According to the present invention, the random number generating part 1510, the calculation part 1511, and the judging part 1512 are concretely realized by programs. These programs are stored in a hard disk apparatus, a nonvolatile memory, a flexible disk, etc., and loaded onto the server apparatus 1508 from them to be executed on CPU.

The communication part 1507 of the terminal apparatus 1501 and the communication part 513 of the server apparatus 1508 are linked through a network, such as radio communication, cable communication, and the Internet.

Now, operations will be explained. First, operations at the time of performing user authentication from the terminal apparatus 1501 to the server apparatus 1508 will be explained.

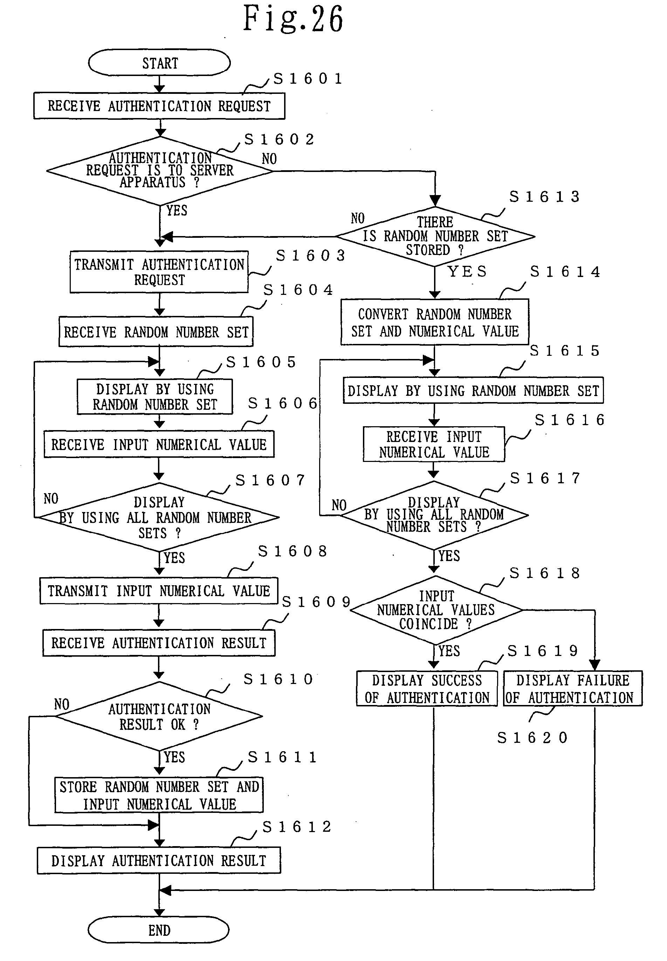

Fig. 26 is a flowchart showing processing executed at the time of performing user authentication processing in the terminal apparatus 1501. First, when a user performs authentication using the terminal apparatus 1501, an authentication request including a user ID and an authentication type being authentication for the terminal apparatus 1501 or being authentication for the server apparatus 1508 is received from the input part 1503 (S1601). Next, it is checked whether the received authentication request is to the terminal apparatus 1501 or to the server apparatus 1508 (S1602). When the authentication request is to the server apparatus 1508, the authentication request including the user ID is transmitted to the server apparatus 1508 through the communication part 1507 (S1603). Then, the terminal apparatus 1501 receives random number sets including random numbers for display and arrays of random numbers for background, in response to the authentication request transmitted through the communication part 1507, from the server apparatus 1508 (S1604) and displays random number for display in the received random number sets on the display part 1502 and displays a password candidate on a background pattern determined by the background pattern determination part 1515 based on an array of random numbers for background (S1605). The input numerical value (response value) which the user input in response to the random number displayed on the display part 1502 using the random number set is received from the input part 1503 (S1606), and it is checked whether random numbers were displayed on the display part 1502 by using all the random number sets received from the server apparatus 1508 (S1607). When there is a random number set not having been used yet, the processing from S1605 is repeated. On the other hand, when all the random number sets have been used for displaying, the input numerical values (response value) inputted by the user is transmitted to the server apparatus 1508 through the communication part 1507 (S1608), and an authentication result is received through the communication part 1507 (S1609). Checking the received authentication result (S1610), only when the authentication result indicates authentication success, the terminal apparatus stores the random number sets having been used for the authentication and the input numerical values in response to these random number sets in the memory part 1504 (S1611). Then, the authentication result received from the server apparatus 1508 is displayed on the display part 1502 (S1612) to finish the authentication processing.

On the other hand, when the received authentication request is to the terminal apparatus 1501 at S1602, it is checked whether the random number sets and input numerical values in response to the random number sets are stored in the memory part 1504 or not (S1613). When the random number sets and the input numerical values in response to the random number sets are not stored in the memory part 1504, the authentication request including the user ID is transmitted to the server apparatus 1508 through the communication part 1507 (S1603).

On the other hand, when the random number sets and the input numerical values in response to the random number sets are stored in the memory part 1504, these values on the memory part 1504 are converted by the conversion part (random number change part) 1505. A new input numerical value (authentication value) is computed based on a random number for display after the random number change and a random number for background after the random number change. Then, the random numbers for display after the random number change, the random numbers for background after the random number change, and the new input numerical values are memorized in the memory part 1504 (S1614). In addition, the processing of S1614 is performed like the processing described in the Embodiment 2.

Next, the random number for display after the random number change is displayed on the display part 1502 using one random number set out of the random number sets after the conversion (random number set after the random number change) memorized in the memory part 1504, and a password candidate is displayed on the background pattern determined by the background pattern determination part 1515 based on the array of random numbers for background after the random number change (S1615).

Then, an input numerical value (response value) which the user input in response to the random number displayed on the display part 1502 using the random number set is received through the input part 1503 (S1616). It is checked whether the random numbers were displayed on the display part 1502 by using all the random number sets stored in the memory part 1504 or not (S1617). Then, when there is a random number set not having been displayed yet, the processing from S1615 is repeated. On the other hand, the random numbers have been displayed by using all the random number sets, the judging part (terminal side authentication judging part) 1506 checks whether or not all the input numerical values received through the input part 1503 coincide with all the input numerical values (authentication values) stored in the memory part 1504 (S1618). When all of them coincide, success of the authentication is displayed on the display part 1502 (S1619) to finish the authentication processing. On the other hand, when the input numerical values do not coincide, failure of the authentication is displayed on the display part 1502 (S1620) to finish the authentication processing.

In addition, in the present Embodiment, the random number sets and the numerical values are converted at S1614 . However, it is also acceptable that the judging part 1506 performs user authentication for the terminal apparatus by using the random numbers for display, the arrays of random numbers for background, and the input numerical values stored in the memory part 1504 without converting, as described in Embodiment 1.

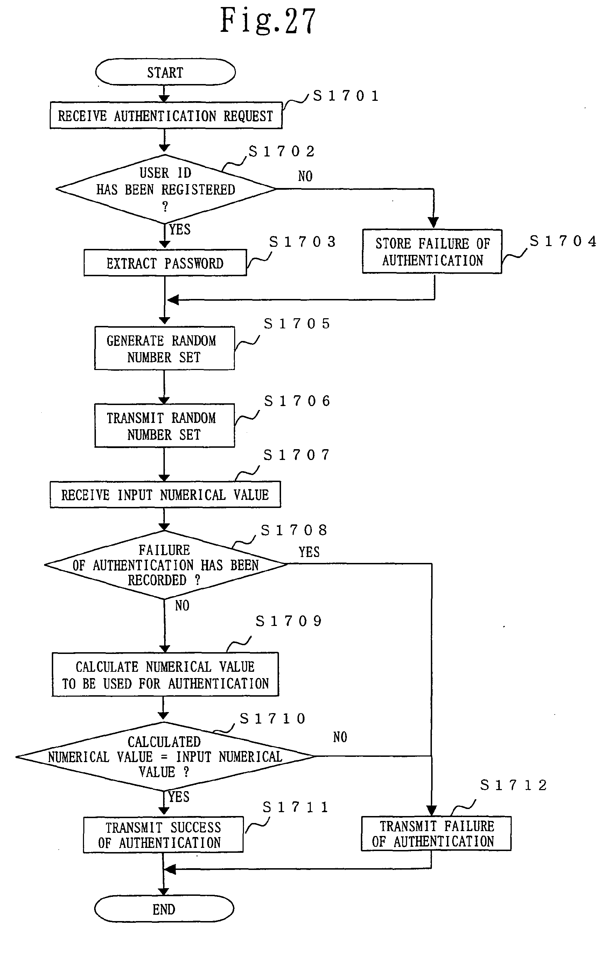

Fig. 27 is a flowchart showing processing to be executed in the server apparatus 1508 when an authentication request is received from the terminal apparatus 1501.

First, an authentication request including a user ID is received from the terminal apparatus 1501 (S1701). Then, it is checked whether the user ID included in the received authentication request has been registered in the management part 1509 or not (S1702). When the user ID has been registered in the management part 1509, the password stored to be corresponding to the user ID is extracted (S1703). On the other hand, when the user ID has not been registered in the management part 1509, failure of the authentication is stored in the judging part 1512. Next, in the random number generating part 1510, random number sets (set of random number for display and random number for background), the number of which is required for the user authentication, are generated (S1705). Since authentication is performed based on eight input values in the server authentication according to Embodiment 5, eight sets of a ten-digit random number, being as a random number for display, and a random number array, being as an array of random numbers for background, including five ten-digit random numbers, are generated for one authentication. That is, a set of a random number for display and an array of random numbers for background is generated for each digit of a password. The generated random number sets are transmitted to the terminal apparatus 1501 through the communication part 1513 (S1706).

Then, in response to it, an input numerical values (response value) are received from the terminal apparatus 1501 (S1707), and it is checked whether failure of the authentication has been recorded in the judging part 1512 or not (S1708). When failure of the authentication has not been recorded in the judging part 1512, an authentication values to be used for the authentication are calculated by the calculation part 1511 (S1709). Then, the authentication value is compared with the received input numerical value, for each digit of the password, and both of them are checked whether they coincide or not (S1710). At the check of S1710, when the input numerical values received from the terminal apparatus 501 coincides with the authentication values calculated by the calculation part 1511, success of the authentication is transmitted to the terminal apparatus 1501 as a result of the authentication (S1711). On the other hand, at the check of S1710, when the input numerical values received from the terminal apparatus 1501 do not coincide with the authentication values calculated by the calculation part 1511, failure of the authentication is transmitted to the terminal apparatus 1501 as a result of the authentication (S1712). In addition, at the check of S1708, when failure of authentication is stored in the judging part 1512, the failure of authentication stored in the judging part 1512 is cleared and failure of the authentication is transmitted to the terminal apparatus 1501 as a result of the authentication (S1712).

At the time of performing authentication from the user at the terminal apparatus 1501, the user ID input screen 201 shown in Fig. 5 is displayed on the display part 1502 like Embodiments 1 and 2.

When a user starts authentication, a user ID is input into the user ID input field 202 of the user ID input screen 201 displayed on the display part 1502. In the case of performing an authentication request to the terminal apparatus 1501, the authentication request including the user ID to the terminal apparatus 1501 can be received at S1601, by operating the log-in button 203. In addition, by operating the server log-in button 204, the authentication request including the user ID to the server apparatus 1508 can be received at S1601

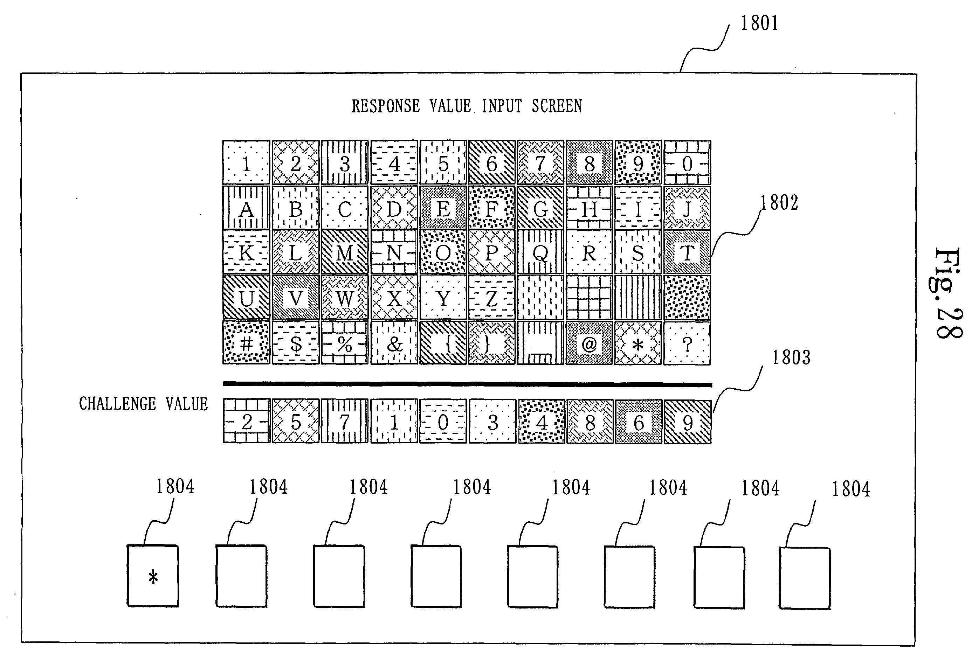

Fig. 28 shows a response value input screen displayed on the display part 502 using a random number set at S1605, at the time of receiving the input numerical value from the user through the input part 1503 in terminal apparatus 1501 at S1606.

In Fig. 28, a response value input screen 1801, a password candidate (reference sign group) display 1802 displaying numbers, alphabets, and special characters on the background pattern determined by the background pattern determination part 1515 based on the array of random numbers for background, a random number display 1803 displaying random numbers for display on a fixed background pattern, and an input field 1804 in which a user inputs an input numerical value (response value) in response to the random number are provided. * or a numerical value itself is displayed in the input field 1804 as an input numerical value.

In the response value input screen (Fig. 28) according to the present Embodiment, a password candidate is displayed in such way that a background pattern is added as an additional element to each sign (reference sign) included in the password candidate. The background pattern added to each sign is determined for each sign by the background pattern determination part 1515. Moreover, the background pattern added to each sign is determined for every random number for display, and at the time of switching the display of a challenge value (random number for display), the display of the background pattern of each sign of the password candidate also changes.

Moreover, in the response value input screen (Fig. 28) according to the present Embodiment, the background pattern of each digit of a challenge value (random number for display) is fixed. However, it is also acceptable to switch the display like the password candidate.

In the terminal apparatus 1501, the memory part 1504 memorizes a background pattern array Patern[10] whose elements are background pattern codes of ten types to display different background patterns, and the background pattern determination part 1515 converts the value of each digit of the array BGRand[i][5] of random numbers for background for the i-th password, into a pattern code for screen drawing, using the pattern array for background and by the formula below in S1605 and S1615, and displays it as a background located at the m-th line from the top and the n-th from the left of the password candidate display 1802 of the response screen input 1801.

$$\text{BGPatern}_{mn} = \text{Patern}[(\text{BGRand}[i][m-1] / 10^{10-n}) \% 10]$$

where "/" denotes a calculation for obtaining a quotient of division, and "%" denotes a calculation for obtaining a remainder of division. This formula is repeated for all the digits of BGRand[i] ($1 \leq m \leq 5, 1 \leq n \leq 10$).

Moreover, Patern[n-1] is displayed as the n-th background from the left and as a fixed background pattern of the random number display 1803 of the response screen input 1801.

Then, on the background, letters of the password candidate and the random number of DispRand [i] which is the random number for display for the i-th password are displayed.

Fig. 28 shows an example of the case below:

$$\text{BGRand}[1][5] = [5124397860, 2351869047, 4790617538, 9871543026, 6403972815],$$

$$\text{DispRand}[1] = 2571034869$$

In order from the top character in the eight characters composing a password, the user specifies a random number of one-digit by using the password candidate display 1802 and the random number display 1803. Concretely, finding a one-digit random number in the random number display 1803 which has the same background pattern as the objective character of the password in the password candidate display 1802, the user inputs the numerical value having been found into the input field 1804. In addition, according to the present Embodiment, after finishing inputting a numerical value for the first character of the password, the response value input screen 1801 using the next random number set is displayed on the display part 1502. The user repeats the input processing for each character of the password until the input of the response value for the last digit of the password finishes.

For example, in the example of Fig. 28, when the character of the password for which a response value is being input is 'E', the number 6 in the random number display 1803 with the same background pattern as 'E' in the password candidate display 1802 serves as a response value.

When a response value is input through the input part 1503, the random number display 1803 and the password candidate display 1802 are updated using a random number set of the random number for display and the random number for background for the next character in the password.

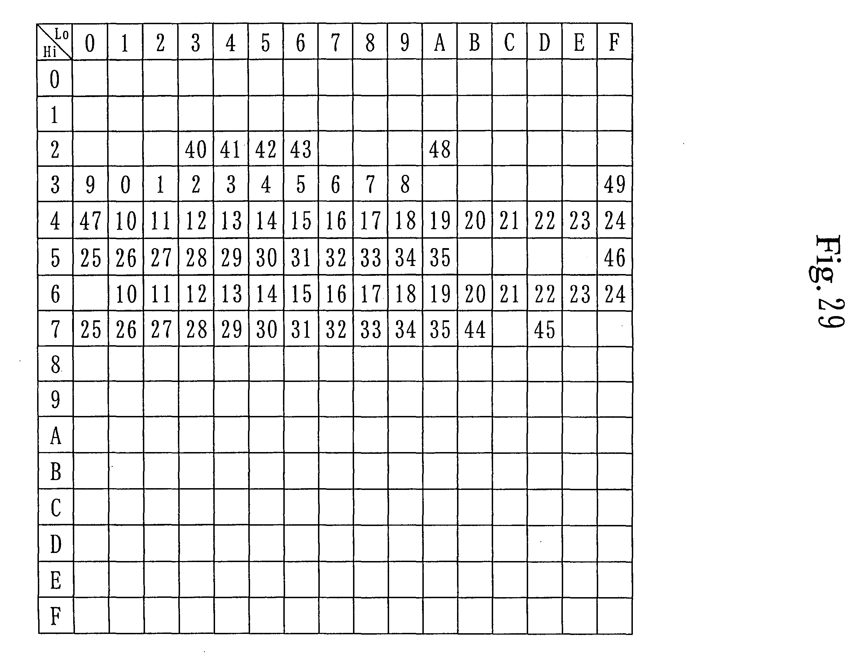

On the other hand, in the server apparatus 1508 according to Embodiment 5, the calculation part (authentication value calculation part) 1511 calculates an authentication value to be used for authentication, for each character of the password at S1709, by using the following formula including conversion of the password character into a numerical value, using the conversion table shown in Fig. 29.

$$\text{Ans}\,[\text{i}] =$$
$$\left( \text{DispRand}\,[\text{i}] \;/\; 10^{9-\left(\left(\text{BGRand}\,[\text{i}]\,[\text{Trans}\,(\text{Pass}\,[\text{i}])/10]/10^{9-\text{Trans}\,(\text{Pass}\,[\text{i}])\%10}\right)\%10\right)} \right) \% 10$$

where i is a number of an input value, Ans[i] is an array of values used for authentication, DispRand [i] is a ten-digit random number for display which is generated for authentication of the i-th password and BGRand [i][5] is an array of random numbers for background whose elements are five ten-digit random numbers for background which are generated for authentication of the i-th password. Pass[i] is an array of characters in the password, Trans (x) is a function relating to the character x, returning a numerical value obtained by using the conversion table shown in Fig. 26. "/" denotes a calculation for obtaining a quotient of division, and "%" denotes a calculation for obtaining a remainder of division.

In the example of the random number of Fig. 28, when i = 1, BGRand [1] and [5] = [5124397860, 2351869047, 4790617538, 9871543026, 6403972815], at DispRand [1] = 2571034869, Pass [1]. = 'E',
based on Trans (E) = Trans (0x45) = 14,

$$(\text{BGRand}[1][14/10] \;/\; 10^{\,9-14\%10}) \% 10$$
$$= (\text{BGRand}[1][1] \;/\; 10^{\,5}) \% 10$$
$$= (\,2351869047 \;/\; 100000\,) \% 10$$
$$= 8$$

$$\text{Ans}[1] = (\text{DispRand}[1] \;/\; 10^{\,9-8}) \% 10$$
$$= (\,2571034869 \;/\; 10\,) \% 10$$
$$= 6$$

Thus, Ans [1] = 6. At S1710, the authentication value Ans[i] to be used for authentication is compared with the input numerical value (response value) from the terminal apparatus 1501 with respect to each character of the password, and it is judged whether the authentication is to be permitted or not by checking if both of them coincide or not.

The above-stated contents of the calculation by the calculation part 1511 of the server apparatus 1508 corresponds to the processing performed by the user for the terminal apparatus 1501. That is, in the calculation part 1511, a calculation equivalent to such processing is done that with respect to each digit of password, a sign of password, a random number for display, and a random number for background respectively corresponding to a digit, are used to determine a background pattern(additional element) which is added to a sign corresponding to the sign of the password out of each sign(reference sign) in the password candidate display (reference sign group) displayed on the terminal apparatus, and that based on the determined background pattern(additional element) a value of a digit in the random number for display corresponding to the sign to which the determined background pattern is added is specified. An authentication value used for user authentication is computed for each digit of the password by this calculation.

According to Embodiment 5, when the authentication for the server is successful, the eight sets of the random number for display and the array of random numbers for background used for authentication are memorized in the memory part 1504 of the terminal apparatus 1501.

When authentication for the terminal is required, the conversion part (random number change part) 1505 converts the random number for display and the array of random numbers for background memorized in the memory part 1504 in S1614.

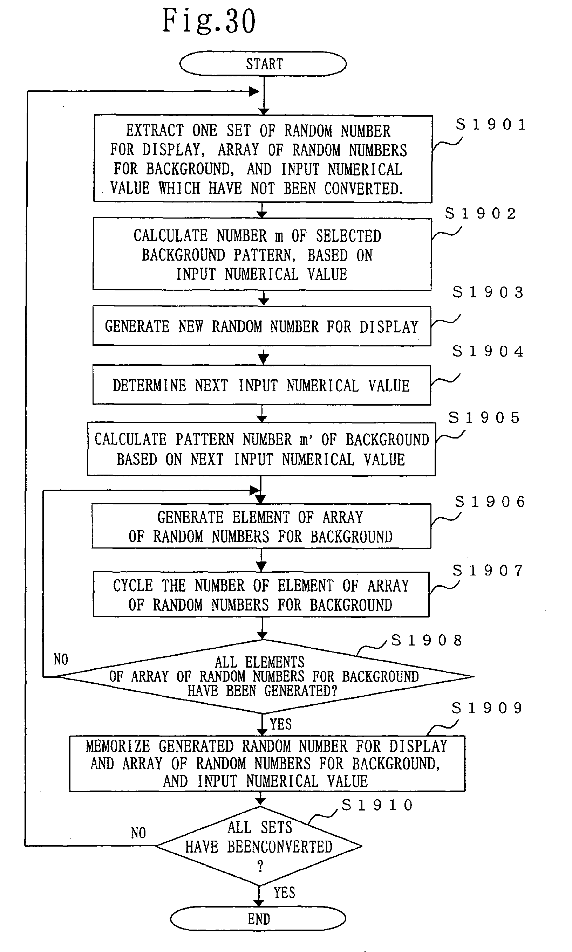

Fig. 30 is a flowchart showing conversion processing performed in the conversion part 1505 in the terminal apparatus 1501 at S1614.

First, one set of a random number for display DispRand[i], an array of random numbers for background BGRand [i] [10], and an input numerical value Ans [i] corresponding to them, which have not been converted yet, is extracted from the memory part 1504 (S1901), and m which satisfies the following formula is calculated, as a number m of the selected background pattern (S1902).

$$(DispRand\,[i]\,/\,10^{\,9-m})\,\%\,10 = Ans[i]$$

Next, a ten-digit random number where no number at each digit is in duplicate is generated as a new random number for display DispRand' [i] (S1903).

Next, a one-digit random number is generated as an input numerical value Ans' [i] expected to be input at the next authentication time (S1904).

Next, m' which satisfies the following formula is calculated as a number m' of a background pattern expected to be selected at the next authentication time (S1905).

$$(DispRand'\,[i]\,/\,10^{\,9-m'})\,\%\,10 = Ans'[i]$$

Next, a ten-digit random number R' where no number at each digit is in duplicate is generated as an element of an array BGRand'[i] of random numbers for background to be used at the next authentication time (S1906).

Next, regarding the element R' of the newly generated array of random numbers for background, the numbers of the element R' are shifted cyclically to the left and is updated until the digit-position of the number m' in the element R' becomes coincident with the digit-position of the number m in the element R of the memorized array BGRand[i] of random numbers for background.

$$(R\,\%\,10)\,x10^{9}\,+R\,/\,10$$

In order to check whether the digit-position of the numerical value m' in the element R' coincides with the digit-position of the numerical value m in the element R, n which satisfies the following formula is calculated, regarding one element R of the memorized array BGRand[i] of random numbers for background.

$$(R\,/\,10^{n})\,\%\,10 = m$$

It is checked whether the following formula holds this n.

$$(R'\,/\,10^{n})\,\%\,10 = m'$$

When it does not hold, the numerical values of the element R' are shifted to the left cyclically and is updated by the following calculation (S1907).

$$(R'\,\%\,10)\,\times\,10^{9}\,+\,R'\,/\,10$$

Next, it is checked whether all the elements of the array BGRand'[i] of random numbers for background to be used for the next authentication have been generated. When not all the elements have been generated yet, the processing from S1906 is repeated (S1908). When all the elements have been generated, a set of the random number for display DispRand' [i], the array BGRand'[i] of random numbers for background which have been newly generated, and an input numerical value Ans' [i] expected to be in response to them is memorized in the memory part 1504 as converted data (S1909).

Next, it is checked whether the above-mentioned conversion was carried out for all the random number sets memorized at the last authentication time (S1910), if the conversion processing has been carried out for all the random number sets, it goes to end, and if there is a non-converted one, the processing from S1901 will be repeated.

In Embodiment 5, background pattern codes of ten types for displaying different background patterns of ten types for drawing background are used. When the display part 1502 of the terminal apparatus 1501 can react to color display, it is also acceptable to use color codes of ten types for displaying different colors of ten types for drawing of background. Moreover, a background pattern and a color can also be used simultaneously for a background. Furthermore, it is also acceptable to use ten colors as a display color of each sign of a password candidate.

Although the response value input screen 1801 is made of one screen in Embodiment 5, it is also acceptable to be made of two screens of a random number screen for displaying a password candidate and a random number for display and a background display screen for displaying a background by a random number for background. Then, it is possible to switch these two screens to display, at the time of pressing a prescribed key other than the number key of the input part 1503, or to switch from the random number display screen to the background display screen only while a prescribed key is being pressed. In this case, not only a drawing pattern and a color but also a sign, a pictorial symbol, etc. can be used for background.

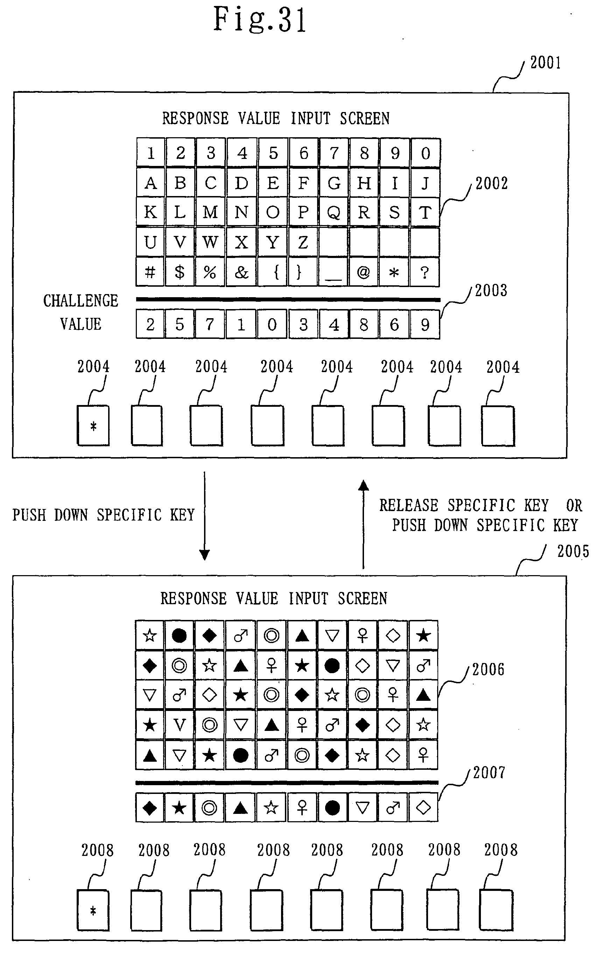

Fig. 31 shows a response value input screen in the case of using a pictorial symbol as an additional element. In Fig. 31, a random number display screen 2001, a password candidate display 2002 of the random number display screen, a random number display 2003 of the random number display screen, an input field 2004 where a user inputs an input numerical value (response value) in response a random number, a background display screen 2005, a password candidate display background 2006 of the background display screen, a random number display background 2007 of the background display screen and an input field 2008 are provided. When pressing of a prescribed key is input through the input part 1502 for the random number display screen 2001, the display part 1501 switches to the random number display screen 2005, and when pressing or releasing of the prescribed key is input through the input part 1502, the display part 1501 switches to the random number display screen 2001.

In the present Embodiment, a password is a sign queue of eight-digit including numbers, alphabets and special characters. However, the length of the password is not limited to eight-digit, and either longer or shorter than the eight digits is also acceptable.

In the Embodiment 5, at the time of a user inputting an input numerical value into the input field at the password input screen, it is possible to perform user authentication by using a numerical value having the same additional element, such as a background pattern, a background color, or a pictorial symbol, as the password which the user memorizes, among the random numbers displayed on the terminal apparatus Therefore, even when the input value at the time of authentication is looked by a third person, the danger that the password is guessed and unjustly used for authentication can be reduced. For the user, it is possible to use the same password as the conventional one, and to utilize an authentication system having higher security than the conventional authentication method, only by performing a simple comparison of a background pattern, a background color or a background sign based on a password, for a random number changing at every authentication, without needing a special authentication device

Embodiment 6

The present Embodiment will describe an example of the case that a terminal apparatus independently performs user authentication by using an authentication method where a set of a random number for display and a random number for background (random number for additional element) is used for each digit of a password, and where a random number for display is displayed, as a challenge value, on a prescribed background pattern in a response value input screen, by using a background pattern of each password candidate based on a random number for background, and the password candidate is displayed on its background pattern.

According to the present Embodiment, a queue of eight digits including numbers, alphabets, and special characters is used as a password, and eight input numerical values are input at the time of authentication for the terminal. Moreover, the random number for background is supposed to be a random number array composed of five ten-digit random numbers.

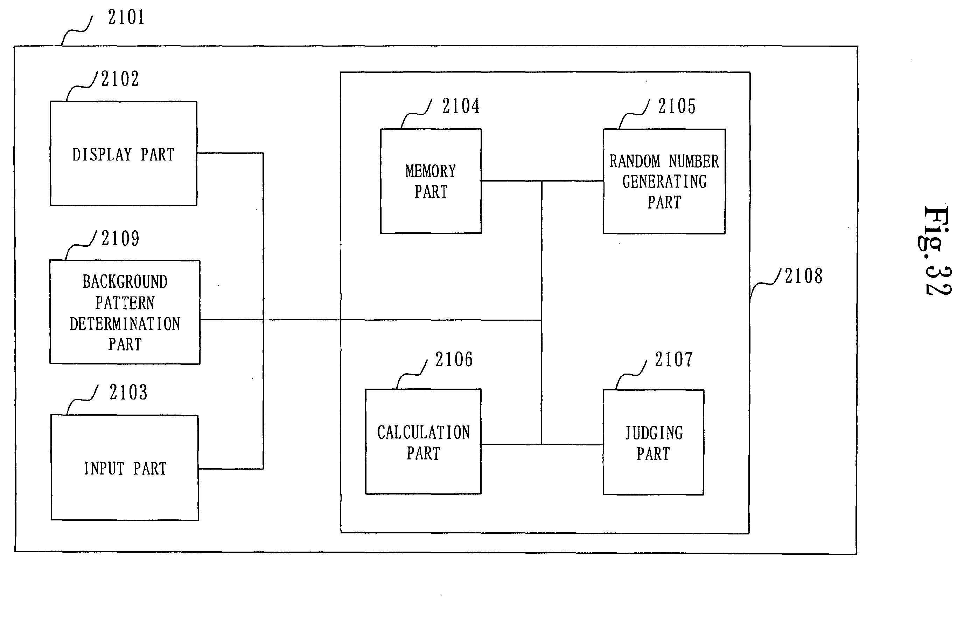

Fig. 32 is a block diagram showing a structure of an authentication system according to Embodiment 6. In Fig. 32, a terminal apparatus 2101, a display part 2102, an input part 2103, a memory part 2104, a random number generating part 2105, a calculation part (authentication value calculation part) 2106, and a judging part (authentication judging part) 2107 are provided. According to the present Embodiment, the memory part 2104, the random number generating part 2105, the calculation part 2106 and the judging part 2107 are installed in an IC card 2108, and concretely realized by programs. These programs are stored in a flash memory in the IC card and executed by CPU in the IC card. In addition, the IC card can be attached/detached to/from the terminal apparatus 2101.

The memory part 2104 memorizes a password of a user who performs authentication through the terminal apparatus 2101.

A background pattern determination part 2109 determines a background pattern (additional element) of each password candidate (reference sign group) on the response value input screen by using a random number for background (random number for additional element). The background pattern determination part 2109 is corresponding to an example of an additional element determination part.

The random number generating part 2105 generates a set of a random number for display being a ten-digit random number where no number at each digit is in duplicate and a random number for background being an array of random numbers for background whose elements are five ten-digit random numbers where no number at each digit is in duplicate.

Next, operations will be explained. Operations at the time of performing user authentication for the terminal apparatus 2101 will be described.

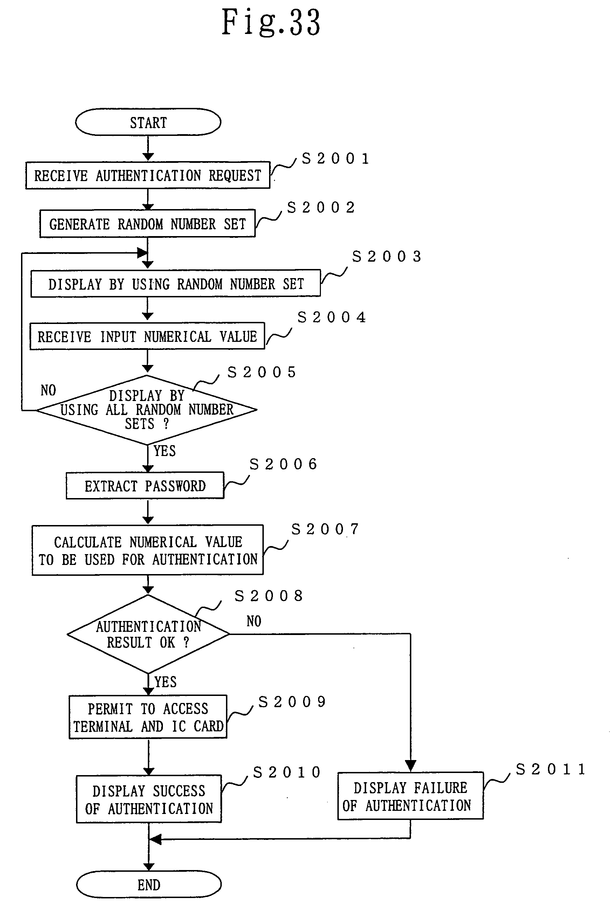

Fig. 33 is a flowchart showing the processing executed in the terminal apparatus 2101 at the time of performing user authentication processing.

First, at the time of a user performing authentication using the terminal apparatus 2101, an authentication request is received from the input part 2102 (S2001). Next, in the terminal apparatus 2101, the random number generating part 2105 generates random number sets (set of random number for display and random number for background), the number of which is required for the user authentication (S2002). Since authentication is performed based on eight input values according to Embodiment 6, eight sets of a random number for display being a ten-digit random number and an array of random numbers for background whose elements are five ten-digit random numbers generated for one authentication. That is, a set of a random number for display and an array of random numbers for background is generated for each digit of a password. Then, the random number for display in the generated random number sets is displayed on the display part 2102, and a password candidate is displayed on a background pattern determined by the background pattern determination part 2109 based on the array of random numbers for background (S2003). Input numerical values (response values) which the user input in response to the random number displayed on the display part 2102 by using the random number set are received from the input part 2103 (S2004), and it is checked whether all the random number sets generated by the random number generating part 2105 have been displayed on the display part 2102 or not (S2005). Then, when there is a random number set not having been displayed yet, the processing from S2003 is repeated. On the other hand, when all the random number sets have been displayed, the password memorized in the memory part 2104 is extracted (S2006), an authentication value to be used for the authentication is calculated in the calculation part 2106 (S2007) and, the judging part 2107 compares it with the input numerical value received for each digit of the password, and checks whether both of them coincide or not (S2008). At the check of S2008, when the input numerical value received from the input part 2103 coincides with the authentication value calculated by the calculation part 2005, access of the user to the terminal apparatus 2101 and the IC card 2108 is permitted (S2009), and success of the authentication is displayed on the display part 2102 (S2010). On the other hand, when the input numerical value does not coincide, failure of the authentication is displayed on the display part 2102 (S2011).

In the case of performing authentication from the a user at the terminal apparatus 2101, the response value input screen 1801 of Fig. 28 which is the same as the one used in Embodiment 5 is displayed on the display part 2102.

In the terminal apparatus 2101, the memory part 2104 memorizes a background pattern array Patern[10] whose elements are background pattern codes of ten types displayed by different background patterns, and the background pattern determination part 2109 converts the value of each digit of the array BGRand[i][5] of random numbers for background for the i-th password, into a pattern code for screen drawing, by using the pattern array for background and by the formula below in S2003, and displays it as a background of the one at the m-th line from the top and the n-th from the left of the password candidate display 1802 in the response screen input 1801.

$$BGPatern_{mn} = Patern[(BGRand[i][m-1] / 10^{10-n}) \% 10]$$

where "/" denotes a calculation for obtaining a quotient of division, and "%" denotes a calculation for obtaining a remainder of division. This formula is repeated for all the digits of BGRand[i] ($1 \leqq m \leqq 5, 1 \leqq n \leqq 10$).

Moreover, Patern[n-1] is displayed as the n-th background from the left and as a fixed background pattern of the random number display 1803 of the response screen input 1801.

Then, on the background, a letter of the password candidate and the random number of DispRand[i] which is the random number for display for the i-th password are displayed.

When a response value is input through the input part 2103, the random number display 1803 and the password candidate display 1802 are updated by using a random number for display and a random number for background in the random number set for the next character in the password.

In the terminal apparatus 2101 according to Embodiment 6, the calculation part 2106 calculates an authentication value to be used for authentication, for each digit of the password, by using the following formula which is the same as the one used in Embodiment 5.

$$\text{Ans}\,[\text{i}]= \left( \text{DispRand}\,[\text{i}]\,/\,10^{9-\left(\left(\text{BGRand}\,[\text{i}][\text{Trans}\,(\text{Pass}\,[\text{i}])\,/\,10]\,/\,10^{9-\text{Trans}\,(\text{Pass}\,[\text{i}])\,\%\,10}\right)\%\,10\right)} \right)\,\%\,10$$

where i is a number of an input value, Ans[i] is an array of values used for authentication, DispRand [i] is a ten-digit random number for display which is generated for authentication of the i-th password and BGRand [i][5] is an array of random numbers for background whose elements are five ten-digit random numbers for background which are generated for authentication of the i-th password. Pass[i] is an array of characters in the password, Trans (x) is a function relating to the character x, returning a numerical value obtained by using the conversion table shown in Fig. 29 used in Embodiment 5. "/" denotes a calculation for obtaining a quotient of division, and "%" denotes a calculation for obtaining a remainder of division.

At S 2008, the authentication value Ans[i] to be used for authentication is compared with the input numerical value (response value) from the input part 2103 of the terminal apparatus 2101 with respect to each character of the password, and it is judged whether the authentication is to be permitted or not by checking if both of them coincide or not.

In the present Embodiment like the case of Embodiment 5, different colors of ten types can be used for drawing the background. A combination of a background pattern and a color can also be used. It is also acceptable to use a pictorial character as shown in Fig. 31.

According to the present Embodiment as stated above, even when the terminal apparatus independently performs user authentication, at the time of a user inputting an input numerical value into the input field at the password input screen, it is possible to perform user authentication by using a numerical value having the same additional element, such as a background pattern, a background color, or a pictorial symbol, as the password which the user memorizes, among the random numbers displayed on the terminal apparatus.

Therefore, even when the input value at the time of authentication is looked by a third person, the danger that the password is guessed and unjustly used for authentication can be reduced. For the user, it is possible to use the same password as the conventional one, and to utilize an authentication system having higher security than the conventional authentication method, only by performing a simple comparison of a background pattern, a background color or a background sign based on a password, for a random number changing at every authentication, without needing a special authentication device.

Now, features of the authentication system etc. described in Embodiments from 1 to 6 will be stated again.

The authentication system according to Embodiments from 1 to 6 has the following features. The authentication system including a terminal apparatus which a user utilizes and an authentication apparatus which communicates with the terminal apparatus and performs user authentication to the user, comprises:

the terminal apparatus including;

a receiving part for receiving a plurality of random numbers from the authentication apparatus,
a display part for displaying a plurality of random numbers received by the receiving part,
an input part for inputting a response value for a plurality of random numbers, and
a transmitting part for transmitting the response value inputted through the input part to the authentication apparatus, and

the authentication apparatus including;

a password memory part for memorizing a password of the user,
a random number generating part for generating a plurality of random numbers,
a communication part for transmitting a plurality of random numbers generated by the random number generating part to the terminal apparatus, and receiving the response value for a plurality of random numbers from the terminal apparatus,
an authentication value calculation part for calculating an authentication value to be used for the user authentication, by performing a prescribed calculation using the password memorized in the password memory part and a plurality of random numbers generated by the random number generating part, and
an authentication judging part for making a judgment on propriety of the user authentication by comparing the response value received by the communication part with the authentication value calculated by the authentication value calculation part.

The authentication system according to Embodiments from 1 to 6 has the following features: The terminal apparatus further includes:

a random number response value memory part for memorizing a plurality of random numbers received by the receiving part and the response value inputted through the input part for a plurality of random numbers, and
a terminal side authentication judging part for making the display part display a plurality of random numbers memorized in the random number response value memory part, making the input part input a response value for a plurality of random numbers, and making a judgment on propriety of the user authentication by comparing the response value memorized in the random number response value memory part with the response value inputted through the input part, in a prescribed case.

The authentication system according to Embodiments from 1 to 6 has the following features. The terminal apparatus further includes:

a random number change part for determining an authentication value to be used for the user authentication for at least a part of random numbers in a plurality of random numbers received by the receiving part, and changing content of the random number based on a determined authentication value, in a prescribed case, and
a terminal side authentication judging part for making the display part display the random number after changing, whose content has been changed, making the input part input a response value for the random number after changing, and making a judgment on propriety of the user authentication by comparing the determined authentication value determined by the random number change part with the response value inputted through the input part.

The authentication system according to Embodiments from 1 to 6 has the following features. In the authentication apparatus,

the password memory part memorizes a sign queue of a plurality of digits as a password,
the random number generating part generates a random number for each digit of the password, and
the communication part transmits a plurality of random numbers generated by the random number generating part, for each digit of the password, to the terminal apparatus,
in the terminal apparatus,
the display part displays a plurality of random numbers transmitted from the authentication apparatus,
the input part inputs a response value for each random number in a plurality of random numbers displayed on the display part, and
the transmitting part transmits the response value for each random number inputted through the input part, to the authentication apparatus,
in the authentication apparatus,
the communication part receives the response value for each random number from the terminal apparatus,
the authentication value calculation part calculates an authentication value to be used for user authentication, for each digit of the password, by performing a prescribed calculation for each digit of the password with using a sign and the random number corresponding to each digit, and
the authentication judging part makes a judgment on propriety of the user authentication by comparing, for each digit of the password, the authentication value and the response value corresponding to each digit.
The authentication system according to Embodiments from 1 to 6 has the following features. In the terminal apparatus,
the display part switches a display of the random number when the input part inputs the response value, and displays a plurality of random numbers in order, and
the input part inputs a response value for each random number by inputting response value for the random number newly displayed, when the display part switches the display of the random number.

The authentication system according to Embodiments from 1 to 6 has the following features. The terminal apparatus further includes:

a random number response value memory part for relating the random number with the response value which is corresponding to the random number, for each random number, and memorizing them, and
a terminal side authentication judging part for making the display part respectively display the random number memorized in the random number response value memory part, making the input part input a response value for each random number, and making a judgment on propriety of the user authentication by comparing the response value memorized in the random number response value memory part with the response value inputted through the input part, for each random number, in a prescribed case.

The authentication system according to Embodiments from 1 to 6 has the following features. In the authentication apparatus,

the password memory part memorizes a number queue of a plurality of digits as a password, and
the authentication value calculation part calculates the authentication value to be used for user authentication, for each digit of the password, by performing a prescribed calculation for each digit of the password with using a numerical value and a random number corresponding to each digit.

The authentication system according to Embodiments from 1 to 6 has the following features. In the authentication apparatus,

the password memory part memorizes a character queue of a plurality of digits as a password, and
the authentication value calculation part calculates the authentication value to be used for user authentication, for each digit of the password, by performing a prescribed calculation for each digit of the password with using a character and a random number corresponding to each digit.

The authentication system according to Embodiments from 1 to 6 has the following features. In the authentication apparatus,

the password memory part memorizes a sign queue of a plurality of digits as a password,
the random number generating part generates a random number group composed of random numbers equal to or more than two, for each digit of the password, and
the communication part transmits a plurality of random number groups generated by the random number generating part, for each digit of the password, to the terminal apparatus,
in the terminal apparatus,
the display part displays a plurality of random number groups transmitted from the authentication apparatus,
the input part inputs a response value for each random number group in a plurality of random number groups displayed on the display part, and
the transmitting part transmits the response value for each random number group inputted through the input part, to the authentication apparatus,
in the authentication apparatus,
the communication part receives the response value for each random number group from the terminal apparatus,
the authentication value calculation part calculates the authentication value to be used for user authentication, for each digit of the password, by performing a prescribed calculation for each digit of the password with using a sign and the random number group corresponding to each digit, and
the authentication judging part makes a judgment on propriety of the user authentication by comparing, for each digit of the password, the authentication value and the response value corresponding to each digit.
The authentication system according to Embodiments from 1 to 6 has the following features. In the terminal apparatus,
the display part switches a display of the random number group when the input part inputs the response value, and displays a plurality of random number groups in order, and
the input part inputs a response value for each random number group by inputting a response value for the random number group newly displayed, when the display part switches the display of the random number group.

The authentication system according to Embodiments from 1 to 6 has the following features. The terminal apparatus further includes:

a random number response value memory part for relating the random number group with the response value which is corresponding to the random number group, for each random number group, and memorizing them, and
a terminal side authentication judging part for making the display part respectively display the random number group memorized in the random number response value memory part, making the input part input a response value for each random number group, and making a judgment on propriety of the user authentication by comparing the response value memorized in the random number response value memory part with the response value inputted through the input part, for each random number group, in a prescribed case.

The authentication system according to Embodiments from 1 to 6 has the following features. The terminal apparatus further includes:

a random number change part for determining an authentication value to be used for the user authentication, for each random number group in at least a part of a plurality of random number groups received by the receiving part, and changing content of a random number included in each random number group, based on a determined authentication value, in a prescribed case, and
a terminal side authentication judging part for making the display part respectively display each random number group after random number change, in which the content of the random number has been changed, making the input part input the response value for each random number group after random number change, and making a judgment on propriety of the user authentication by comparing the authentication value with the response value inputted through the input part, for each random number group after random number change.

The authentication system according to Embodiments from 1 to 6 has the following features. In the authentication apparatus,

the password memory part memorizes a number queue of a plurality of digits as a password, and
the authentication value calculation part calculates the authentication value to be used for user authentication, for each digit of the password, by performing a prescribed calculation for each digit of the password with using a numerical value and the random number group corresponding to each digit.

The authentication system according to Embodiments from 1 to 6 has the following features. In the authentication apparatus,

the password memory part memorizes a character queue of a plurality of digits as a password, and
the authentication value calculation part calculates the authentication value to be used for user authentication, for each digit of the password, by performing a prescribed calculation for each digit of the password with using a character and the random number group corresponding to each digit.

The authentication system according to Embodiments from 1 to 6 has the following features. The terminal apparatus and the authentication apparatus can communicate with a service provide apparatus which provides service to the terminal apparatus,

the authentication apparatus further includes
a key generating part for generating a private key and a public key in a prescribed case, the terminal apparatus further includes
a decryption part for decrypting by using the private key generated by the authentication apparatus,
in the authentication apparatus,
the communication part transmits the private key generated by the key generating part to the terminal apparatus and transmits the public key generated by the key generating part to the service provide apparatus, and
in the terminal apparatus,
the receiving part receives the private key from the authentication apparatus, and receives authentication information which the service provide apparatus having received the public key from the authentication apparatus encrypted with using the public key, from the service provide apparatus,
the decryption part decrypts the authentication information encrypted and received from the service provide apparatus, using the private key received from the authentication apparatus, and
the transmitting part transmits the authentication information decrypted by the decryption part, to the service provide apparatus.

The authentication system according to Embodiments from 1 to 6 has the following features. The authentication system includes a terminal apparatus which a user utilizes, an authentication apparatus which communicates with the terminal apparatus and performs user authentication to the user, and a service provide apparatus which can communicate with the terminal apparatus and the authentication apparatus and provides service to the terminal apparatus, wherein

the authentication apparatus performs a prescribed calculation using a password of the user and a plurality of random numbers, makes a judgment on propriety of the user authentication based on a calculation result, generates a private key and a public key when the user is authenticated, and transmits the private key to the terminal apparatus and the public key to the service provide apparatus,

the service provide apparatus receives the public key from the authentication apparatus, generates prescribed authentication information, encrypts the authentication information with using the public key, and transmits encrypted authentication information to the terminal apparatus,

the terminal apparatus receives the private key from the authentication apparatus, receives the encrypted authentication information from the service provide apparatus, decrypts the encrypted authentication information with using the private key, and transmits decrypted authentication information to the service provide apparatus, and

the service provide apparatus receives the decrypted authentication information from the terminal apparatus, and makes a judgment on propriety of the user authentication by comparing the decrypted authentication information received with the generated authentication information.

The authentication apparatus according to Embodiments from 1 to 6 has the following features. The authentication apparatus for communicating with a terminal apparatus which a user utilizes and performing user authentication to the user, includes:

a password memory part for memorizing a password of the user;

a random number generating part for generating a plurality of random numbers;

a communication part for transmitting a plurality of random numbers generated by the random number generating part to the terminal apparatus, and receiving a response value for a plurality of random numbers from the terminal apparatus,

an authentication value calculation part for calculating an authentication value to be used for the user authentication, by performing a prescribed calculation using the password memorized in the password memory part and a plurality of random numbers generated by the random number generating part, and

an authentication judging part for making a judgment on propriety of the user authentication by comparing the response value received by the communication part with the authentication values calculated by the authentication value calculation part.

The authentication apparatus according to Embodiments from 1 to 6 has the following features. In the authentication apparatus,

the password memory part memorizes a sign queue of a plurality of digits as a password,

the random number generating part generates random number for each digit of the password,

the communication part transmits a plurality of random numbers generated by the random number generating part, for each digit of the password, to the terminal apparatus, and receives the response value from the terminal apparatus, for each digit of the password,

the authentication value calculation part calculates an authentication value to be used for user authentication, for each digit of the password, by performing a prescribed calculation for each digit of the password with using a sign and the random number corresponding to each digit, and

the authentication judging part makes a judgment on propriety of the user authentication by comparing, for each digit of the password, the authentication value and the response value corresponding to each digit.

The authentication apparatus according to Embodiments from 1 to 6 has the following features. In the authentication apparatus,

the password memory part memorizes a sign queue of a plurality of digits as a password,

the random number generating part generates a random number group composed of random numbers equal to or more than two, for each digit of the password, and

the communication part transmits a plurality of random number groups generated by the random number generating part, for each digit of the password, to the terminal apparatus, and receives a response value for each random number group, from the terminal apparatus.

the authentication value calculation part calculates the authentication value to be used for user authentication, for each digit of the password, by performing a prescribed calculation for each digit of the password with using a sign and the random number group corresponding to each digit, and

the authentication judging part makes a judgment on propriety of the user authentication by comparing, for each digit of the password, the authentication value and the response value corresponding to each digit of the password.

The terminal apparatus according to Embodiments from 1 to 6 has the following features. The terminal apparatus which can communicate with an authentication apparatus for performing user authentication includes:

a receiving part for receiving a plurality of random numbers from the authentication apparatus;
a display part for displaying a plurality of random numbers received by the receiving part, an input part for inputting a response value for a plurality of random numbers, and
a transmitting part for transmitting the response value inputted through the input part to the authentication apparatus.

The terminal apparatus according to Embodiments from 1 to 6 has the following features. The terminal apparatus further includes:

a random number response value memory part for memorizing a plurality of random numbers received by the receiving part and the response value inputted through the input part for a plurality of random numbers, and
in a prescribed case, a terminal side authentication judging part for making the display part display a plurality of random numbers memorized in the random number response value memory part, making the input part input a response value for a plurality of random numbers, and making a judgment on propriety of the user authentication by comparing the response values memorized in the random number response value memory part with the response value inputted through the input part.

The terminal apparatus according to Embodiments from 1 to 6 has the following features. The terminal apparatus further includes:

in a prescribed case, a random number change part for determining an authentication value to be used for the user authentication for at least a part of a plurality of random numbers received by the receiving part, and changing content of the random number based on a determined authentication values, and
a terminal side authentication judging part for making the display part display the random numbers after changing, whose content has been changed, making the input part input a response value in response to the random number after changing, and making a judgment on propriety of the user authentication by comparing the determined authentication value determined by the random number change part with the response value inputted through the input part.

The terminal apparatus according to Embodiments from 1 to 6 has the following features. The terminal apparatus can communicate with the authentication apparatus which memorizes a sign queue of a plurality of digits as a password and generates a random number for each digit of the password,

the receiving part receives a plurality of random numbers generated for each digit of the password, from the authentication apparatus,
the display part displays a plurality of random numbers received by the receiving part,
the input part inputs a response value for each random number in a plurality of random numbers displayed on the display part, and
the transmitting part transmits the response value for each random number inputted through the input part, to the authentication apparatus.

The terminal apparatus according to Embodiments from 1 to 6 has the following features. In the terminal apparatus,

the display part switches a display of the random number when the input part inputs the response value, and displays a plurality of random numbers in order, and
the input part inputs a response value for each random number by inputting response value for the random number newly displayed when the display part switches the display of the random number.

The terminal apparatus according to Embodiments from 1 to 6 has the following features. The terminal apparatus further includes:

a random number response value memory part for relating a random number with a response value which is corresponding to the random number, for each random number, and memorizing them, and
a terminal side authentication judging part for making the display part respectively display the random number memorized in the random number response value memory part, making the input part input a response value for each random number, and making a judgment on propriety of the user authentication by comparing the response value memorized in the random number response value memory part with the response value inputted through the input part, for each random number, in a prescribed case.

The terminal apparatus according to Embodiments from 1 to 6 has the following features. The terminal apparatus can communicate with the authentication apparatus which memorizes a sign queue of a plurality of digits as a password and generates a random number group composed of random numbers equal to or more than two, for each digit of the password,

the receiving part receives a plurality of random number groups generated for each digit of the password, from the authentication apparatus,
the display part displays a plurality of random number groups received by the receiving apparatus,
the input part inputs a response value for each random number group in a plurality of random number groups displayed on the display part, and
the transmitting part transmits the response value for each random number group inputted through the input part, to the authentication apparatus.

The terminal apparatus according to Embodiments from 1 to 6 has the following features. In the terminal apparatus,

the display part switches a display of the random number group when the input part inputs the response value, and displays a plurality of random number groups in order, and
the input part inputs a response value for each random number group by inputting a response value for the random number group newly displayed when the display part switches the display of the random number group.

The terminal apparatus according to Embodiments from 1 to 6 has the following features. The terminal apparatus further includes:

a random number change part for determining an authentication value to be used for the user authentication, for each random number group in at least a part of a plurality of random number groups received by the receiving part, and changing content of a random number included in each random number group, based on a determined authentication value, in a prescribed case, and
a terminal side authentication judging part for making the display part respectively display each random number group after random number change, in which the content of the random number has been changed, making the input part input the response value for each random number group after random number change, and making a judgment on propriety of the user authentication by comparing the authentication value with the response value inputted through the input part, for each random number group after random number change.

The authentication method according to Embodiments from 1 to 6 has the following features. The authentication method using a terminal apparatus which a user utilizes and an authentication apparatus which communicates with the terminal apparatus and performs user authentication to the user, comprises steps of:

the terminal apparatus includes steps of;

receiving a plurality of random numbers from the authentication apparatus,
displaying a plurality of random numbers received by the receiving,
inputting a response value for a plurality of random numbers, and
transmitting the response value inputted by the inputting to the authentication apparatus, and the authentication apparatus includes steps of;

memorizing a password of the user,
generating a plurality of random numbers,
performing communication by transmitting a plurality of random numbers generated by the generating the random numbers, to the terminal apparatus, and by receiving the response value for a plurality of random numbers, from the terminal apparatus,
calculating an authentication value to be used for the user authentication, by performing a prescribed calculation using the password memorized by the memorizing the password and a plurality of random numbers generated by the generating the random numbers, and
making a judgment on propriety of the user authentication by comparing the response value received by the performing communication with the authentication value calculated by the calculating the authentication value.

The authentication method according to Embodiments from 1 to 6 has the following features. The authentication method uses a terminal apparatus which a user utilizes, an authentication apparatus which communicates with the terminal apparatus and performs user authentication to the user, and a service provide apparatus which can communicate with the terminal apparatus and the authentication apparatus and provides service to the terminal apparatus. The authentication apparatus performs,

performing a prescribed calculation using a password of the user and a plurality of random numbers, making a judgment on propriety of the user authentication based on a calculation result, generating a private key and a public key when the user is authenticated, and transmitting the private key to the terminal apparatus and the public key to the service provide apparatus,
the service provide apparatus performs,
receiving the public key from the authentication apparatus, generating prescribed authentication information, encrypting the authentication information with using the public key, and transmitting encrypted authentication information to the terminal apparatus,
the terminal apparatus performs,
receiving the private key from the authentication apparatus, receiving the encrypted authentication information from the service provide apparatus, decrypting the encrypted authentication information with using the private key, and transmitting decrypted authentication information to the service provide apparatus, and
the service provide apparatus performs,
receiving the decrypted authentication information from the terminal apparatus, and making a judgment on propriety of the user authentication by comparing the decrypted authentication information received with the generated authentication information.

The terminal apparatus according to Embodiments from 1 to 6 has the following features. The terminal apparatus which performs user authentication to a user includes:

a memory part for memorizing a password of the user,
a random number generating part for generating a plurality of random numbers,
a display part for displaying a plurality of random numbers generated by the random number generating part,
an input part for inputting a response value for a plurality of random numbers,
an authentication value calculation part for calculating an authentication value to be used for the user authentication, by performing a prescribed calculation using the password memorized in the memory part and a plurality of random numbers generated by the random number generating part, and
an authentication judging part for making a judgment on propriety of the user authentication by comparing the response value inputted through the input part with the authentication value calculated by the authentication value calculation part.

The terminal apparatus according to Embodiments from 1 to 6 has the following features. In the terminal apparatus,

the password memory part memorizes a sign queue of a plurality of digits as a password,
the random number generating part generates a random number for each digit of the password,
the display part displays a plurality of random numbers generated by the random number generating part,
the input part inputs the response value for each random number in a plurality of random numbers displayed on the display part,
the authentication value calculation part calculates an authentication value to be used for user authentication, for each digit of the password, by performing a prescribed calculation for each digit of the password with using signs and the random numbers to be corresponding to each digit, and
the authentication judging part makes a judgment on propriety of the user authentication by comparing, for each digit of the password, the authentication value and the response value corresponding to each digit.

The terminal apparatus according to Embodiments from 1 to 6 has the following features. In the terminal apparatus,

the display part switches a display of the random number when the input part inputs the response value, and displays a plurality of random numbers in order, and

the input part inputs a response value for each random number by inputting response value for the random number newly displayed when the display part switches the display of the random number.

The terminal apparatus according to Embodiments from 1 to 6 has the following features. In the terminal apparatus,

the memory part memorizes a number queue of a plurality of digits as a password, and
the authentication value calculation part calculates the authentication value to be used for user authentication, for each digit of the password, by performing a prescribed calculation for each digit of the password with using numerical values and the random numbers corresponding to each digit.

The terminal apparatus according to Embodiments from 1 to 6 has the following features. In the terminal apparatus,

the memory part memorizes a character queue of a plurality of digits as a password, and
the authentication value calculation part calculates the authentication value to be used for user authentication, for each digit of the password, by performing a prescribed calculation for each digit of the password with using characters and the random numbers corresponding to each digit.

The terminal apparatus according to Embodiments from 1 to 6 has the following features. In the terminal apparatus,

the memory part memorizes a sign queue of a plurality of digits as a password,
the random number generating part generates a random number group composed of random numbers equal to or more than two, for each digit of the password,
the display part displays a plurality of random number groups generated by the random number generating part,
the input part inputs a response value for each random number group in a plurality of random number groups displayed on the display part,
the authentication value calculation part calculates an authentication value to be used for user authentication, for each digit of the password, by performing a prescribed calculation for each digit of the password with using a sign and the random number group corresponding to each digit, and
the authentication judging part makes a judgment on propriety of the user authentication by comparing, for each digit of the password, the authentication value and the response value corresponding to each digit.

The terminal apparatus according to Embodiments from 1 to 6 has the following features. In the terminal apparatus,

the display part switches a display of the random number group when the input part inputs the response value, and displays a plurality of random number groups in order, and
the input part inputs a response value for each random number group by inputting a response value for the random number group newly displayed when the display part switches the display of the random number group.

The terminal apparatus according to Embodiments from 1 to 6 has the following features. In the terminal apparatus,

the memory part memorizes a number queue of a plurality of digits as a password, and
the authentication value calculation part calculates the authentication value to be used for user authentication, for each digit of the password, by performing a prescribed calculation for each digit of the password with using a numerical value and the random number group corresponding to each digit.

The terminal apparatus according to Embodiments from 1 to 6 has the following features. In the terminal apparatus,

the memory part memorizes a character queue of a plurality of digits as a password, and
the authentication value calculation part calculates the authentication value to be used for user authentication, for each digit of the password, by performing a prescribed calculation for each digit of the password with using a character and the random number group corresponding to each digit.

The authentication method according to Embodiments from 1 to 6 has the following features. The authentication method of performing user authentication to a user includes steps of:

memorizing a password of the user,
generating a plurality of random numbers,
displaying a plurality of random numbers generated by the generating random numbers,
inputting a response value for a plurality of random numbers,
calculating an authentication value to be used for the user authentication, by performing a prescribed calculation using the password memorized by the memorizing the password and a plurality of random numbers generated by the generating random numbers, and
making a judgment on propriety of the user authentication by comparing the response value inputted by the inputting with the authentication value calculated by the calculating the authentication value.

The authentication system according to Embodiments from 1 to 6 has the following features. In the terminal apparatus,

the receiving part can receive a plurality of random numbers, each of which is composed of a plurality of digits, generated for the password of a sign queue of a plurality of digits, from the authentication apparatus, and
the display part, when a plurality of random numbers are received by the receiving part, displays in order a plurality of random numbers having been received, can display together with a reference sign group composed of a plurality of reference signs including a sign corresponding to a sign of the password, and when the reference sign group is displayed, can display the reference sign group with adding an additional element, indicating a correlation with a digit of the random number, to each reference sign. The terminal apparatus further includes an additional element determination part for determining the additional element of each reference sign when the reference sign group is displayed.

In the authentication apparatus,

the password memory part memorizes the sign queue of a plurality of digits as a password,
the random number generating part generates the random number composed of a plurality of digits to be displayed on the terminal apparatus, as a random number for display, for each digit of the password, and generates the random number used in determining the additional element of each reference sign in the terminal apparatus, as a random number for additional element, for each digit of a password, and
the communication part mutually relates a plurality of random numbers for display with a plurality of random numbers for additional element generated by the random number generating part, for each digit of the password, and transmits them to the terminal apparatus.

In the terminal apparatus,

the receiving part receives a plurality of random numbers for display mutually related with a plurality of random numbers for additional elements, from the authentication apparatus,
the additional element determination part determines the additional element of each reference sign at a time of the reference sign group being displayed, for each random number for display, by using the random number for additional element corresponding to each random number for display,
the display part displays a plurality of random numbers for display in order, which have been received by the receiving part, and displays the reference sign group with adding the additional element of each reference sign determined by the additional element determination part for each random number for display to each reference sign,
the input part inputs a response value for each random number for display in a plurality of random numbers for display displayed on the display part, and
the transmitting part transmits the response value for each random number for display inputted through the input part, to the authentication apparatus.

In the authentication apparatus,

the communication part receives the response value for each random number for display, from the terminal apparatus,
the authentication value calculation part carries out calculations equivalent to a processing of judging, for each digit of the password, the additional element added to the reference sign corresponding to the sign of the password in the reference sign group displayed on the terminal apparatus, by using the sign of the password, the random number for display, and the random number for additional element corresponding to each digit, and a processing of specifying a value of the digit of the random number for display having a correlation with the reference sign, based on the additional element judged ,and calculates an authentication value used for the user authentication, for each digit of the password, and
the authentication judging part makes a judgment on propriety of the user authentication for each digit of the password, by comparing the authentication value and the response value corresponding to each digit.

The authentication system according to Embodiments from 1 to 6 has the following features. In the terminal apparatus,

the display part displays a plurality of random numbers for display in order, by switching a display of the random number for display when the input part inputs the response value, and at a time of switching the display of the random number for display, adds the additional element of each reference sign determined for the random number for display newly displayed to each reference sign to switch the display of the reference sign group, and
the input part inputs the response value for each random number for display, by inputting the response value for the random number for display newly displayed when the display part switches the display of the random number for display and the display of the reference sign group.

The authentication system according to Embodiments from 1 to 6 has the following features. The terminal apparatus further includes

a random number response value memory part, for each random number for display, for mutually relating the random number for display, the random number for additional element corresponding to the random number for display, and the response value corresponding to the random number for display, and memorizing them, and
a terminal side authentication judging part for making a judgement on propriety of the user authentication using the response value memorized in the random number response value memory part,

wherein the additional element determination part determines the additional element of each reference sign at the time of the reference sign group being displayed, for each random number for display, by using the random number for additional element memorized in the random number response value memory part,

the display part displays a plurality of random numbers for display in order, which have been memorized in the random number response value memory part, and displays the reference sign group in which the additional element of each reference sign determined by the additional element determination part for each random number for display is added to each reference sign,
the input part inputs the response value for each random number for display in a plurality of random numbers for display displayed on the display part, and
the terminal side authentication judging part makes a judgement on propriety of the user authentication by comparing the response value memorized in the random number response value memory part with the response value inputted through the input part.

The authentication system according to Embodiments from 1 to 6 has the following features. The terminal apparatus further includes

a random number change part for changing content of each random number in a plurality of random numbers for display received by the receiving part and changing content of each random number in a plurality of random numbers for additional element received by the receiving part, and calculating an authentication value used for judgement on propriety of the user authentication for each random number for display after random number change, by using random numbers for display after random number change, and random numbers for additional element after random number change which are corresponding each other, in a prescribed case,
a terminal side authentication judging part for making a judgement on propriety of the user authentication by using the authentication value calculated by the random number change part,

wherein the additional element determination part determines the additional element of each reference sign at the time of the reference sign group being displayed, for each random number for display after random number change, by using the random number for additional element after random number change,

the display part displays a plurality of random numbers for display after random number change in order, and displays the reference sign group in which the additional element of each reference sign determined by the additional element determination part for each random number for display after random number change is added to each reference sign,

the input part inputs the response value for each random number for display after random number change in a plurality of random numbers for display after random number change displayed on the display part, and

the terminal side authentication judging part makes a judgement on propriety of the user authentication by comparing the authentication value calculated by the random number change part with the response value inputted through the input part, for each random number for display after random number change.

The authentication system according to Embodiments from 1 to 6 has the following features. In the terminal apparatus,

the display part, when displaying the reference sign group, can display the reference sign group with adding a background pattern indicating a correlation with a digit of the random number, to each reference sign, as an additional element,

in the authentication apparatus,

the random number generating part generates a random number used in determining the background pattern of each reference sign in the terminal apparatus, for each digit of the password, as the random number for additional element,

in the terminal apparatus,

the additional element determination part determines the background pattern of each reference sign when the reference sign group is displayed, for each random number for display, by using the random number for additional element corresponding to each random number for display, and

the display part displays a plurality of random numbers for display in order, which have been received by the receiving part, and displays the reference sign group with adding the background pattern of each reference sign determined by the additional element determination part for each random number for display, to each reference sign.

The authentication apparatus according to Embodiments from 1 to 6 has the following features. In the authentication apparatus,

the password memory part memorizes a sign queue of a plurality of digits as the password,

the communication part can communicate with a terminal apparatus which can display in order a plurality of random numbers, respectively having a plurality of digits, which can display together with a reference sign group composed of a plurality of reference signs including a sign corresponding to a sign of the password, and which can display the reference sign group with adding an additional element, indicating a correlation with a digit of the random number, to each reference sign ,when the reference sign group is displayed,

the random number generating part generates the random number composed of a plurality of digits to be displayed on the terminal apparatus, as a random number for display, for each digit of the password, and generates the random number used in determining the additional element of each reference sign in the terminal apparatus, as a random number for additional element, for each digit of the password,

the communication part mutually relates a plurality of random numbers for display generated by the random number generating part with a plurality of random numbers for additional element generated by the random number generating part, for each digit of the password, transmits them to the terminal apparatus, and receives a response value for each random number for display, from the terminal apparatus,

the authentication value calculation part carries out calculations equivalent to a processing of judging, for each digit of the password, the additional element added to the reference sign corresponding to the sign of the password in the reference sign group displayed on the terminal apparatus, by using the sign of the password, the random number for display, and the random number for additional element corresponding to each digit, and a processing of specifying a value of the digit of the random number for display having a correlation with the reference sign, based on the additional element judged ,and calculates an authentication value used for the user authentication, for each digit of the password, and

the authentication judging part makes a judgment on propriety of the user authentication for each digit of the password, by comparing the authentication value and the response value corresponding to each digit.

The terminal apparatus according to Embodiments from 1 to 6 has the following features. In the terminal apparatus,

the receiving part can receive a plurality of random numbers, each of which is composed of a plurality of digits, generated for the password of a sign queue of a plurality of digits, from the authentication apparatus, and

the display part, when a plurality of random numbers are received by the receiving part, displays in order a plurality of random numbers having been received, can display together with a reference sign group composed of a plurality of reference signs including a sign corresponding to a sign of the password, and when the reference sign group is displayed, can display the reference sign group with adding an additional element indicating a correlation with a digit of the random number, to each reference sign,

the terminal apparatus further includes

an additional element determination part for determining the additional element of each reference sign when the reference sign group is displayed, and

the receiving part receives a plurality of random numbers for display composed of a plurality of digits to be displayed on the terminal apparatus, which have been generated for each digit of the password by the authentication apparatus, and a plurality of random numbers for additional element, used in determining the additional element of each reference sign in the additional element determination part, with relating them each other for each digit of the password,

the additional element determination part determines the additional element of each reference sign when the reference sign group is displayed, for each random number for display, by using the random number for additional element corresponding to each random number for display,

the display part displays a plurality of random numbers for display in order, which have been received by the receiving part, and displays the reference sign group with adding the additional element of each reference sign determined by the additional element determination part for each random number for display, to each reference sign,

the input part inputs the response value for each random number for display in a plurality of random numbers for display displayed on the display part, and

the transmitting part transmits the response value for each random number for display inputted through the input part, to the authentication apparatus.

The terminal apparatus according to Embodiments from 1 to 6 has the following features. In the terminal apparatus,

the display part displays a plurality of random numbers for display in order, by switching a display of the random number for display when the input part inputs the response value, and at a time of switching the display of the random number for display, adds the additional element of each reference sign determined for the random number for display newly displayed to each reference sign to switch the display of the reference sign group, and

the input part inputs the response value for each random number for display, by inputting the response value for the random number for display newly displayed when the display part switches the display of the random number for display and the display of the reference sign group.

The terminal apparatus according to Embodiments from 1 to 6 has the following features. The terminal apparatus further includes,

a random number response value memory part, for each random number for display, for mutually relating the random number for display, the random number for additional element corresponding to the random number for display, and the response value corresponding to the random number for display, and memorizing them, and

a terminal side authentication judging part for making a judgement on propriety of the user authentication using the response value memorized in the random number response value memory part,

wherein the additional element determination part determines the additional element of each reference sign at the time of the reference sign group being displayed, for each random number for display, by using the random number for additional element memorized in the random number response value memory part,

the display part displays a plurality of random numbers for display in order, which have been memorized in the random number response value memory part, and displays the reference sign group in which the additional element of each reference sign determined by the additional element determination part for each random number for display is added to each reference sign,

the input part inputs the response value for each random number for display in a plurality of random numbers for display displayed on the display part, and

the terminal side authentication judging part makes a judgement on propriety of the user authentication by comparing the response value memorized in the random number response value memory part with the response value inputted through the input part.

The terminal apparatus according to Embodiments from 1 to 6 has the following features. The terminal apparatus further includes,

a random number change part for changing content of each random number in a plurality of random numbers for display received by the receiving part, changing content of each random number in a plurality of random numbers for additional elements received by the receiving part, and calculating an authentication value used for judgment on propriety of user authentication for each random number for display after random number change, using the random number for display after random number change and the random number for additional element after random number change which correspond to each other, in a prescribed case, and
a terminal side authentication judging part for making a judgment on propriety of user authentication, by using the authentication value calculated by the random number change part,

wherein the additional element determination part determines the additional element of each reference sign when the reference sign group is displayed, for each random number for display after random number change, by using the random number for additional element after random number change,

the display part displays a plurality of random numbers for display after random number change in order, and displays the reference sign with adding the additional element of each reference sign determined by the additional element determination part for each random number for display after random number change, to each reference sign,
the input part inputs the response value for each random number for display after random number change in a plurality of random numbers for display after random number change displayed on the display part, and
the terminal side authentication judging part makes a judgement on propriety of the user authentication by comparing the authentication value calculated by the random number change part with the response value inputted through the input part, for each random number for display after random number change.

The terminal apparatus according to Embodiments from 1 to 6 has the following features. In the terminal apparatus,

the display part, when displaying the reference sign group, can display the reference sign group with adding a background pattern indicating a corresponding relation with a digit of the random number, to each reference sign, as an additional element,
the receiving part receives a plurality of random numbers for display and a plurality of random numbers for additional element used in determining the background pattern of each reference sign in the additional element determination part, with relating them each other for each digit of the password, from the authentication apparatus,
the additional element determination part determines the background pattern of each reference sign when the reference sign group is displayed, for each random number for display, by using the random number for additional element corresponding to each random number for display, and
the display part displays a plurality of random numbers for display in order, which have been received by the receiving part, and displays the reference sign group with adding the background pattern of each reference sign determined by the additional element determination part for each random number for display, to each reference sign.

The terminal apparatus according to Embodiments from 1 to 6 has the following features. In the terminal apparatus,

the memory part memorizes a sign queue of a plurality of digits as the password, and
the display part displays a plurality of random numbers in order, can display together with a reference sign group composed of a plurality of reference signs including a sign corresponding to a sign of the password, and can display the reference sign group with adding an additional element, indicating a correlation with a digit of a random number, to each reference sign, when the reference sign group is displayed,
the terminal apparatus further includes
an additional element determination part for determining the additional element of each reference sign when the reference sign group is displayed on the display part, and
the random number generating part generates the random number composed of a plurality of digits to be displayed on the display part, as a random number for display, for each digit of the password, and generates the random number used in determining the additional element of each reference sign in the additional element determination part, as a random number for additional element, for each digit of the password,

the additional element determination part determines the additional element of each reference sign when the reference sign group is displayed, for each random number for display, by using the random number for additional element generated for an identical digit of the password,

the display part displays a plurality of random numbers for display in order, which have been generated by the random number change part, and displays the reference sign group with adding the additional element of each reference sign determined by the additional element determination part for each random number for display, to each reference sign,

the input part inputs a response value for each random number for display in a plurality of random numbers for display displayed on the display part,

the authentication value calculation part carries out calculations equivalent to a processing of judging, for each digit of the password, the additional element added to the reference sign corresponding to the sign of the password in the reference sign group displayed on the display part, by using the sign of the password, the random number for display, and the random number for additional element corresponding to each digit, and a processing of specifying a value of the digit of the random number for display having a correlation with the reference sign, based on the additional element judged ,and calculates an authentication value used for the user authentication, for each digit of the password , and

the authentication judging part makes a judgment on propriety of the user authentication for each digit of the password, by comparing the authentication value and the response value corresponding to each digit.

The terminal apparatus according to Embodiments from 1 to 6 has the following features. In the terminal apparatus,

the display part displays a plurality of random numbers for display in order, by switching a display of the random number for display when the input part inputs the response value, and at a time of switching the display of the random number for display, adds the additional element of each reference sign determined for the random number for display newly displayed to each reference sign to switch the display of the reference sign group, and

the input part inputs the response value for each random number for display, by inputting the response value for the random number for display newly displayed when the display part switches the display of the random number for display and the display of the reference sign group.

The terminal apparatus according to Embodiments from 1 to 6 has the following features. In the terminal apparatus,

the display part, when displaying the reference sign group, can display the reference sign group with adding a background pattern indicating a corresponding relation with a digit of the random number, to each reference sign, as an additional element,

the random number generating part generates a random number used in determining the background pattern of each reference sign in the additional element determination part, for each digit of the password, as the random number for additional element,

the additional element determination part determines the background pattern of each reference sign when the reference sign group is displayed, for each random number for display, by using the random number for additional element generated for an identical digit of the password, and

the display part displays a plurality of random numbers for display in order, which have been generated by the random number change part, and displays the reference sign group with adding the background pattern of each reference sign determined by the additional element determination part for each random number for display, to each reference sign.

The authentication system according to Embodiments from 1 to 6 has the following features. The authentication system which is used for user authentication includes:

a memory means for memorizing a password,
a random number generating means for generating a plurality of random numbers at the time of the user authentication,
a display means for displaying the random numbers to the user,
an input means for receiving an input from the user,

a calculation means for calculating a numerical value used for the user authentication, based on the password and the random numbers, and

a judging means for judging whether the input numerical value inputted into the input means in response to the random numbers displayed on the display means coincides with the numerical value calculated by the calculation means or not.

The authentication system according to Embodiments from 1 to 6 has a feature that the memory means, the calculation means, and the judging means are included in an IC card.

The authentication system according to Embodiments from 1 to 6 has a feature that the memory means is composed of an independent memory apparatus which can be attached/detached to/from the terminal apparatus.

The authentication system according to Embodiments from 1 to 6 has the following features that the authentication system includes:

a management means for managing correlation of a password with a user ID,

a random number generating means for generating a plurality of random numbers at the time of the user authentication

a display means for displaying the random numbers to the user,

an input means for receiving the user ID from the user and an input of an input numerical value in response to the random numbers,

a calculation means for calculating a numerical value used for the user authentication based on the password corresponding to the user ID obtained form the management means and the random numbers, and

a judging means for judging whether the input numerical value inputted into the input means in response to the random numbers coincides with the numerical value calculated by calculation means or not.

The authentication system according to Embodiments from 1 to 6 has a feature that the management means, the calculation means, and the judging means are included in an IC card.

The authentication system including a terminal apparatus and a server apparatus which can communicate through a network, according to Embodiments from 1 to 6 has the following features. The terminal apparatus includes

a display means for displaying random numbers received from the server apparatus, to the user, and

an input means for receiving an authentication request from the user to the server apparatus, and the input numerical value inputted in response to the random numbers, and transmitting them to the server apparatus.

The server apparatus includes

a memory means for memorizing a password, and

a random number generating means for generating a plurality of random numbers in response to the authentication request received from the terminal apparatus,

a calculation means for calculating a numerical value used for the user authentication based on the password and the random numbers, and

a judging means for judging whether the input numerical value sent from the terminal apparatus, in response to the sending of the random numbers, coincides with the numerical value calculated by the calculation means or not.

The authentication system including a terminal apparatus and a server apparatus which can communicate through a network, according to Embodiments from 1 to 6 has the following features. The terminal apparatus includes

a display means for displaying random numbers received from the server apparatus, to a user, and

an input means for receiving an authentication request including a user ID, from the user to the server apparatus, and an input numerical value inputted in response to the random numbers, and transmitting them to the input means.

The server apparatus includes

a management means for managing correlation of the user ID with the password,

a random number generating means for generating a plurality of random numbers in response to the authentication request including the user ID received from the terminal apparatus,

a calculation means for calculating a numerical value used for the user authentication based on the password corresponding to the user ID obtained from the management means and the random numbers, and

a judging means for judging whether the input numerical value sent from the terminal apparatus, in response to the sending of the random numbers, coincides with the numerical value calculated by the calculation means or not.

The authentication system according to Embodiments from 1 to 6 has the following features. The terminal apparatus includes,

when the authentication succeeds in the user authentication for the server apparatus, a memory means for memorizing a plurality of random numbers displayed on the display means and input numerical values inputted into the input means, and
when the authentication request from user is an authentication request to the terminal apparatus, a judging means for judging whether an input numerical value inputted into the input means with displaying a random number extracted from the memory means on the display means coincides with the input numerical value memorized in the memory means or not.

The authentication system according to Embodiments from 1 to 6 has the following features. The terminal apparatus includes,

when the authentication succeeds in the user authentication for the server apparatus, a memory means for memorizing a part of a plurality of random numbers displayed on the display means and a part of input numerical values inputted into the input means, and
when the authentication request from user is an authentication request to the terminal apparatus, a judging means for judging whether an input numerical value inputted into the input means with displaying a random number extracted from the memory means on the display means coincides with the input numerical value memorized in the memory means or not.

The authentication system according to Embodiments from 1 to 6 has the following features. The terminal apparatus includes,

a memory means for memorizing a plurality of random numbers, and

a second memory means for recording an input numerical value. The second memory means is composed of an independent memory apparatus which can be attached/detached to/from the terminal apparatus.

The authentication system according to Embodiments from 1 to 6 has a feature that the memory means and the judging means are included in an IC card.
The authentication system according to Embodiments from 1 to 6 has the following features. The terminal apparatus includes,

when the authentication request from the user is an authentication request to the terminal apparatus, a conversion means for converting the random numbers memorized by the memory means and the input numerical value inputted, and
a judging means for judging whether the input numerical value inputted into the input means with displaying the random number converted by the conversion means on the display means coincides with the numerical value converted by the conversion means or not.

The authentication system according to Embodiments from 1 to 6 has a feature that the terminal apparatus includes the memory means, the conversion means and the judging means in an IC card.
The authentication system according to Embodiments from 1 to 6 has a feature that the terminal apparatus and the memory apparatus can communicate through a network.
The authentication system according to Embodiments from 1 to 6 has the following features. The authentication system includes a user authentication apparatus used for user authentication and a service provide apparatus which provides service to the user. The user authentication apparatus includes a terminal apparatus and a server apparatus which can communicate through a network. The terminal apparatus includes

a display means for displaying random numbers received from the server apparatus to the user,
an input means for receiving the authentication request from the user to the server apparatus, and the input numerical value inputted in response to the random numbers, and for transmitting them to the server apparatus,
a memory means for memorizing a private key of the user received from the server apparatus when the authentication is successful, and
an authentication means for performing authentication for the service provide apparatus with using the private key.

The server apparatus includes

a key generation means for generating a set of a private key and a public key,
a management means for managing correlation among a user ID, a password, and a public key of the user,
a random number generating means for generating a plurality of random numbers to be in response to the authentication request received from the terminal apparatus,
a calculation means for calculating a numerical value used for user authentication based on the password and the random numbers, and
a judging means for judging whether the input numerical value from the terminal apparatus in response to the sending of the random numbers coincides with the numerical value calculated by the calculation means, and when the authentication is successful, for transmitting the private key of the user to the terminal apparatus. calculates are in agreement and authentication is successful.

The service provide apparatus includes an authentication means for requesting the public key of the user from the server apparatus for the authentication request received from the terminal apparatus, and performing authentication for the terminal apparatus with using the public key of the user received from the server apparatus.

As mentioned above, according to Embodiments from 1 to 6, it is possible to realize user authentication of high security with having little load for the user, because the user authentication is performed by using a plurality of random numbers.

According to Embodiments from 1 to 6, it is possible to realize user authentication of high security even at a terminal apparatus of a simple equipment structure, because a plurality of random numbers transmitted from the authentication apparatus and a response value for a plurality of random numbers are utilized for the user authentication at the terminal apparatus.

According to Embodiments from 1 to 6, it is possible to perform user authentication in the terminal apparatus independently of user authentication in the authentication apparatus, since the user authentication in the terminal apparatus is performed by generating new random numbers by changing the contents of a plurality of random numbers transmitted from the authentication apparatus. Therefore, user authentication of higher security can be realized in the terminal apparatus.

Moreover, according to Embodiments from 1 to 6, it is impossible for the third person to guess the password because user authentication is performed by generating a random number for each digit of the password and using a different random number for each digit of the password. Therefore, user authentication of high security can be realized.

Moreover, according to Embodiments from 1 to 6, it is impossible for the third person to guess the password because a random number group composed of random numbers of equal to or more than two is generated for each digit of the password and user authentication is performed with using a different random number group for each digit of the password. Therefore, user authentication of high security can be realized.

Moreover, according to Embodiments from 1 to 6, it can be applied to the user authentication in the service provide apparatus to together use a private key and a public key. Therefore, the danger that service of the service provide apparatus is unjustly used can be avoided.

Moreover, according to Embodiments from 1 to 6, since user authentication in the terminal apparatus is also performed using a plurality of random numbers, user authentication of high security can be realized in the terminal apparatus, without giving a load to the user.

Moreover, according to Embodiments from 1 to 6, since user authentication is also performed in the terminal apparatus by generating a random number for each digit of a password and using a different random number for each digit of the password, it is impossible for the third person to guess the password. Therefore, user authentication of high security can also be performed in the terminal apparatus.

Moreover, according to Embodiments from 1 to 6, also with respect to user authentication in the terminal apparatus, user authentication is performed by generating a random number group composed of random numbers of equal to or more than two for each digit of the password and using a different random number group for each digit of the password. Therefore, it is impossible for the third person to guess the password, which realizes user authentication of high security in the terminal apparatus.

Moreover, according to Embodiments from 1 to 6, user authentication is performed by judging an additional element of a reference sign corresponding to a sign of password, based on an additional element for each reference sign determined by random numbers for additional element, and by specifying a value of a digit in the random number for display corresponding to the reference sign, based on the additional element. Therefore, it is impossible for the third person to guess the password, which realizes user authentication of high security in the terminal apparatus.

INDUSTRIAL APPLICABILITY

As mentioned above, since user authentication is performed using a plurality of random numbers according to the present invention, user authentication of high security can be realized, without giving a load to a user.

**Claims**

1. An authentication system including a terminal apparatus which a user utilizes and an authentication apparatus which communicates with the terminal apparatus and performs user authentication to the user, comprising:

   the terminal apparatus comprising;

   a receiving part for receiving a plurality of random numbers from the authentication apparatus,
   a display part for displaying the plurality of random numbers received by the receiving part,
   an input part for inputting a response value for the plurality of random numbers, and
   a transmitting part for transmitting the response value inputted through the input part to the authentication apparatus, and

   the authentication apparatus comprising;

   a password memory part for memorizing a password of the user,
   a random number generating part for generating the plurality of random numbers,
   a communication part for transmitting the plurality of random numbers generated by the random number generating part to the terminal apparatus, and receiving the response value for the plurality of random numbers from the terminal apparatus,
   an authentication value calculation part for calculating an authentication value to be used for the user authentication, by performing a prescribed calculation using the password memorized in the password memory part and the plurality of random numbers generated by the random number generating part, and
   an authentication judging part for making a judgment on propriety of the user authentication by comparing the response value received by the communication part with the authentication value calculated by the authentication value calculation part.

2. The authentication system of claim 1, wherein the terminal apparatus further comprises:

   a random number response value memory part for memorizing the plurality of random numbers received by the receiving part and the response value inputted through the input part for the plurality of random numbers, and
   a terminal side authentication judging part for making the display part display the plurality of random numbers memorized in the random number response value memory part, making the input part input a response value for the plurality of random numbers, and making a judgment on propriety of the user authentication by comparing the response value memorized in the random number response value memory part with the response value inputted through the input part, in a prescribed case.

3. The authentication system of claim 1, wherein the terminal apparatus further comprises:

   a random number response value memory part for memorizing at least a part of the plurality of random numbers received by the receiving part and at least a part of response values inputted through the input part for the plurality of random numbers,
   a random number change part for determining an authentication value to be used for the user authentication for at least a part of random numbers, by using a random number memorized in the random number response value memory part and the response value corresponding to the random number, and changing content of the random number based on a determined authentication value, in a prescribed case, and
   a terminal side authentication judging part for making the display part display the random number after changing, whose content has been changed, making the input part input a response value for the random number after changing, and making a judgment on propriety of the user authentication by comparing the determined authentication value determined by the random number change part with the response value inputted through the input part.

**4.** The authentication system of claim 1, wherein

in the authentication apparatus,

the password memory part memorizes a sign queue of a plurality of digits as a password,
the random number generating part generates a random number for each digit of the password, and
the communication part transmits the plurality of random numbers generated by the random number generating part, for each digit of the password, to the terminal apparatus, in the terminal apparatus,
the display part displays the plurality of random numbers transmitted from the authentication apparatus,
the input part inputs a response value for each random number in the plurality of random numbers displayed on the display part,
the transmitting part transmits the response value for each random number inputted through the input part, to the authentication apparatus,

in the authentication apparatus,

the communication part receives the response value for each random number from the terminal apparatus,
the authentication value calculation part calculates an authentication value to be used for user authentication, for each digit of the password, by performing a prescribed calculation for each digit of the password with using a sign and the random number corresponding to each digit, and
the authentication judging part makes a judgment on propriety of the user authentication by comparing, for each digit of the password, the authentication value and the response value corresponding to each digit.

**5.** The authentication system of claim 4, wherein

in the terminal apparatus,

the display part switches a display of the random number when the input part inputs the response value, and displays the plurality of random numbers in order, and
the input part inputs a response value for each random number by inputting response value for the random number newly displayed, when the display part switches the display of the random number.

**6.** The authentication system of claim 4, wherein the terminal apparatus further includes:

a random number response value memory part for relating the random number with the response value which is corresponding to the random number, for each random number, and memorizing them, and
a terminal side authentication judging part for making the display part respectively display the random number memorized in the random number response value memory part, making the input part input a response value for each random number, and making a judgment on propriety of the user authentication by comparing the response value memorized in the random number response value memory part with the response value inputted through the input part, for each random number, in a prescribed case.

**7.** The authentication system of claim 4, wherein

in the authentication apparatus,

the password memory part memorizes a number queue of a plurality of digits as a password, and
the authentication value calculation part calculates the authentication value to be used for user authentication, for each digit of the password, by performing a prescribed calculation for each digit of the password with using a numerical value and a random number corresponding to each digit.

**8.** The authentication system of claim 4, wherein

in the authentication apparatus,

the password memory part memorizes a character queue of a plurality of digits as a password, and
the authentication value calculation part calculates the authentication value to be used for user authentication, for each digit of the password, by performing a prescribed calculation for each digit of the password with using a character and a random number corresponding to each digit.

**9.** The authentication system of claim 1, wherein

in the authentication apparatus,

the password memory part memorizes a sign queue of a plurality of digits as a password,
the random number generating part generates a random number group composed of random numbers equal to or more than two, for each digit of the password, and
the communication part transmits a plurality of random number groups generated by the random number generating part, for each digit of the password, to the terminal apparatus, in the terminal apparatus,
the display part displays the plurality of random number groups transmitted from the authentication apparatus,
the input part inputs a response value for each random number group in the plurality of random number groups displayed on the display part,
the transmitting part transmits the response value for each random number group inputted through the input part, to the authentication apparatus, in the authentication apparatus,
the communication part receives the response value for each random number group from the terminal apparatus,
the authentication value calculation part calculates the authentication value to be used for user authentication, for each digit of the password, by performing a prescribed calculation for each digit of the password with using a sign and the random number group corresponding to each digit, and
the authentication judging part makes a judgment on propriety of the user authentication by comparing, for each digit of the password, the authentication value and the response value corresponding to each digit.

**10.** The authentication system of claim 9, wherein

in the terminal apparatus,

the display part switches a display of the random number group when the input part inputs the response value, and displays the plurality of random number groups in order, and
the input part inputs a response value for each random number group by inputting a response value for the random number group newly displayed, when the display part switches the display of the random number group.

**11.** The authentication system of claim 9, wherein the terminal apparatus further includes:

a random number response value memory part for relating the random number group with the response value which is corresponding to the random number group, for each random number group, and memorizing them, and
a terminal side authentication judging part for making the display part respectively display the random number group memorized in the random number response value memory part, making the input part input a response value for each random number group, and making a judgment on propriety of the user authentication by comparing the response value memorized in the random number response value memory part with the response value inputted through the input part, for each random number group, in a prescribed case.

**12.** The authentication system of claim 9, wherein the terminal apparatus further includes:

a random number change part for determining an authentication value to be used for the user authentication, for each random number group in at least a part of the plurality of random number groups received by the receiving part, and changing content of a random number included in the each random number group, based on a determined authentication value, in a prescribed case, and
a terminal side authentication judging part for making the display part respectively display the each random number group after random number change, in which the content of the random number has been changed, making the input part input the response value for the each random number group after random number change, and making a judgment on propriety of the user authentication by comparing the authentication value with the response value inputted through the input part, for the each random number group after random number change.

**13.** The authentication system of claim 9, wherein

in the authentication apparatus,

the password memory part memorizes a number queue of a plurality of digits as a password, and the authentication value calculation part calculates the authentication value to be used for user authentication, for each digit of the password, by performing a prescribed calculation for each digit of the password with using a numerical value and the random number group corresponding to each digit.

**14.** The authentication system of claim 4, wherein

in the authentication apparatus,

the password memory part memorizes a character queue of a plurality of digits as a password, and the authentication value calculation part calculates the authentication value to be used for user authentication, for each digit of the password, by performing a prescribed calculation for each digit of the password with using a character and the random number group corresponding to each digit.

**15.** The authentication system of claim 1, wherein the terminal apparatus and the authentication apparatus can communicate with a service provide apparatus which provides service to the terminal apparatus,

the authentication apparatus further includes

a key generating part for generating a private key and a public key in a prescribed case, the terminal apparatus further includes
a decryption part for decrypting by using the private key generated by the authentication apparatus,

in the authentication apparatus,

the communication part transmits the private key generated by the key generating part to the terminal apparatus and transmits the public key generated by the key generating part to the service provide apparatus, and

in the terminal apparatus,

the receiving part receives the private key from the authentication apparatus, and receives authentication information which the service provide apparatus having received the public key from the authentication apparatus encrypted with using the public key, from the service provide apparatus, the decryption part decrypts the authentication information encrypted and received from the service provide apparatus, using the private key received from the authentication apparatus, and the transmitting part transmits the authentication information decrypted by the decryption part, to the service provide apparatus.

**16.** An authentication system comprising a terminal apparatus which a user utilizes, an authentication apparatus which communicates with the terminal apparatus and performs user authentication to the user, and a service provide apparatus which can communicate with the terminal apparatus and the authentication apparatus and provides service to the terminal apparatus, wherein

the authentication apparatus performs a prescribed calculation using a password of the user and a plurality of random numbers, makes a judgment on propriety of the user authentication based on a calculation result, generates a private key and a public key when the user is authenticated, and transmits the private key to the terminal apparatus and the public key to the service provide apparatus, the service provide apparatus receives the public key from the authentication apparatus, generates prescribed authentication information, encrypts the authentication information with using the public key, and transmits encrypted authentication information to the terminal apparatus, the terminal apparatus receives the private key from the authentication apparatus, receives the encrypted authentication information from the service provide apparatus, decrypts the encrypted authentication information with using the private key, and transmits decrypted authentication information to the service provide apparatus, and

the service provide apparatus receives the decrypted authentication information from the terminal apparatus, and makes a judgment on propriety of the user authentication by comparing the decrypted authentication information received with the generated authentication information.

**17.** An authentication apparatus for communicating with a terminal apparatus which a user utilizes and performing user authentication to the user, comprising:

a password memory part for memorizing a password of the user;

a random number generating part for generating a plurality of random numbers;

a communication part for transmitting the plurality of random numbers generated by the random number generating part to the terminal apparatus, and receiving a response value for the plurality of random numbers from the terminal apparatus,

an authentication value calculation part for calculating an authentication value to be used for the user authentication, by performing a prescribed calculation using the password memorized in the password memory part and the plurality of random numbers generated by the random number generating part, and

an authentication judging part for making a judgment on propriety of the user authentication by comparing the response value received by the communication part with the authentication values calculated by the authentication value calculation part.

**18.** The authentication apparatus of claim 17, wherein

the password memory part memorizes a sign queue of a plurality of digits as a password,

the random number generating part generates random number for each digit of the password, and

the communication part transmits the plurality of random numbers generated by the random number generating part, for each digit of the password, to the terminal apparatus, and receives the response value from the terminal apparatus, for each digit of the password,

the authentication value calculation part calculates an authentication value to be used for user authentication, for each digit of the password, by performing a prescribed calculation for each digit of the password with using a sign and the random number corresponding to each digit, and

the authentication judging part makes a judgment on propriety of the user authentication by comparing, for each digit of the password, the authentication value and the response value corresponding to each digit.

**19.** The authentication apparatus of claim 17, wherein

the password memory part memorizes a sign queue of a plurality of digits as a password,

the random number generating part generates a random number group composed of random numbers equal to or more than two, for each digit of the password, and

the communication part transmits a plurality of random number groups generated by the random number generating part, for each digit of the password, to the terminal apparatus, and receives a response value for each random number group, from the terminal apparatus.

the authentication value calculation part calculates the authentication value to be used for user authentication, for each digit of the password, by performing a prescribed calculation for each digit of the password with using a sign and the random number group corresponding to each digit, and

the authentication judging part makes a judgment on propriety of the user authentication by comparing, for each digit of the password, the authentication value and the response value corresponding to each digit of the password.

**20.** A terminal apparatus which can communicate with an authentication apparatus for performing user authentication comprising:

a receiving part for receiving a plurality of random numbers from the authentication apparatus;

a display part for displaying the plurality of random numbers received by the receiving part,

an input part for inputting a response value for the plurality of random numbers, and

a transmitting part for transmitting the response value inputted through the input part to the authentication apparatus.

**21.** The terminal apparatus of claim 20, wherein the terminal apparatus further comprises:

a random number response value memory part for memorizing the plurality of random numbers received by the receiving part and the response value inputted through the input part for the plurality of random numbers, and

in a prescribed case, a terminal side authentication judging part for making the display part display the plurality of random numbers memorized in the random number response value memory part, making the input part input a response value for the plurality of random numbers, and making a judgment on propriety of the user authentication by comparing the response values memorized in the random number response value memory part with the response value inputted through the input part.

22. The terminal apparatus of claim 20, wherein the terminal apparatus further comprises:

a random number response value memory part for memorizing at least a part of the plurality of random numbers received by the receiving part and at least a part of response values inputted through the input part for the plurality of random numbers,

in a prescribed case, a random number change part for determining an authentication value to be used for the user authentication for at least a part of random numbers, by using a random number memorized in the random number response value memory part and the response value corresponding to the random number, and changing content of the random number based on a determined authentication values, and

a terminal side authentication judging part for making the display part display the random numbers after changing, whose content has been changed, making the input part input a response value in response to the random number after changing, and making a judgment on propriety of the user authentication by comparing the determined authentication value determined by the random number change part with the response value inputted through the input part.

23. The terminal apparatus of claim 20, wherein the terminal apparatus can communicate with the authentication apparatus which memorizes a sign queue of a plurality of digits as a password and generates a random number for each digit of the password,

the receiving part receives a plurality of random numbers generated for each digit of the password, from the authentication apparatus,

the display part displays the plurality of random numbers received by the receiving part,

the input part inputs a response value for each random number in the plurality of random numbers displayed on the display part, and

the transmitting part transmits the response value for each random number inputted through the input part, to the authentication apparatus.

24. The terminal apparatus of claim 23, wherein

the display part switches a display of the random number when the input part inputs the response value, and displays the plurality of random numbers in order, and

the input part inputs a response value for each random number by inputting response value for the random number newly displayed when the display part switches the display of the random number.

25. The terminal apparatus of claim 23, wherein the terminal apparatus further includes:

a random number response value memory part for relating a random number with a response value which is corresponding to the random number, for each random number, and memorizing them, and

a terminal side authentication judging part for making the display part respectively display the random number memorized in the random number response value memory part, making the input part input a response value for each random number, and making a judgment on propriety of the user authentication by comparing the response value memorized in the random number response value memory part with the response value inputted through the input part, for each random number, in a prescribed case.

26. The terminal apparatus of claim 20, wherein the terminal apparatus can communicate with the authentication apparatus which memorizes a sign queue of a plurality of digits as a password and generates a random number group composed of random numbers equal to or more than two, for each digit of the password,

the receiving part receives a plurality of random number groups generated for each digit of the password, from the authentication apparatus,
the display part displays the plurality of random number groups received by the receiving apparatus,
the input part inputs a response value for each random number group in the plurality of random number groups displayed on the display part, and
the transmitting part transmits the response value for each random number group inputted through the input part, to the authentication apparatus.

27. The terminal apparatus of claim 26, wherein

the display part switches a display of the random number group when the input part inputs the response value, and displays the plurality of random number groups in order, and
the input part inputs a response value for each random number group by inputting a response value for the random number group newly displayed when the display part switches the display of the random number group.

28. The terminal apparatus of claim 26, wherein the terminal apparatus further includes:

a random number change part for determining an authentication value to be used for the user authentication, for each random number group in at least a part of the plurality of random number groups received by the receiving part, and changing content of a random number included in the each random number group, based on a determined authentication value, in a prescribed case, and
a terminal side authentication judging part for making the display part respectively display the each random number group after random number change, in which the content of the random number has been changed, making the input part input the response value for the each random number group after random number change, and making a judgment on propriety of the user authentication by comparing the authentication value with the response value inputted through the input part, for the each random number group after random number change.

29. An authentication method using a terminal apparatus which a user utilizes and an authentication apparatus which communicates with the terminal apparatus and performs user authentication to the user, comprising steps of:

the terminal apparatus comprising steps of;

receiving a plurality of random numbers from the authentication apparatus,
displaying the plurality of random numbers received by the receiving,
inputting a response value for the plurality of random numbers, and
transmitting the response value inputted by the inputting to the authentication apparatus, and

the authentication apparatus comprising steps of;

memorizing a password of the user,
generating the plurality of random numbers,
performing communication by transmitting the plurality of random numbers generated by the generating the random numbers, to the terminal apparatus, and by receiving the response value for the plurality of random numbers, from the terminal apparatus,
calculating an authentication value to be used for the user authentication, by performing a prescribed calculation using the password memorized by the memorizing the password and the plurality of random numbers generated by the generating the random numbers, and
making a judgment on propriety of the user authentication by comparing the response value received by the performing communication with the authentication value calculated by the calculating the authentication value.

30. An authentication method using a terminal apparatus which a user utilizes, an authentication apparatus which communicates with the terminal apparatus and performs user authentication to the user, and a service provide apparatus which can communicate with the terminal apparatus and the authentication apparatus and provides service to the terminal apparatus,

wherein the authentication apparatus:

performing a prescribed calculation using a password of the user and a plurality of random numbers, making a judgment on propriety of the user authentication based on a calculation result, generating a private key and a public key when the user is authenticated, and transmitting the private key to the terminal apparatus and the public key to the service provide apparatus,

the service provide apparatus:

receiving the public key from the authentication apparatus, generating prescribed authentication information, encrypting the authentication information with using the public key, and transmitting encrypted authentication information to the terminal apparatus,

the terminal apparatus:

receiving the private key from the authentication apparatus, receiving the encrypted authentication information from the service provide apparatus, decrypting the encrypted authentication information with using the private key, and transmitting decrypted authentication information to the service provide apparatus, and

the service provide apparatus:

receiving the decrypted authentication information from the terminal apparatus, and making a judgment on propriety of the user authentication by comparing the decrypted authentication information received with the generated authentication information.

**31.** A terminal apparatus which performs user authentication to a user comprising:

a memory part for memorizing a password of the user,
a random number generating part for generating a plurality of random numbers,
a display part for displaying the plurality of random numbers generated by the random number generating part,
an input part for inputting a response value for the plurality of random numbers,
an authentication value calculation part for calculating an authentication value to be used for the user authentication, by performing a prescribed calculation using the password memorized in the memory part and the plurality of random numbers generated by the random number generating part, and
an authentication judging part for making a judgment on propriety of the user authentication by comparing the response value inputted through the input part with the authentication value calculated by the authentication value calculation part.

**32.** The terminal apparatus of claim 31, wherein

the password memory part memorizes a sign queue of a plurality of digits as a password,
the random number generating part generates a random number for each digit of the password,
the display part displays the plurality of random numbers generated by the random number generating part,
the input part inputs the response value for each random number in the plurality of random numbers displayed on the display part,
the authentication value calculation part calculates an authentication value to be used for user authentication, for each digit of the password, by performing a prescribed calculation for each digit of the password with using signs and the random numbers to be corresponding to each digit, and
the authentication judging part makes a judgment on propriety of the user authentication by comparing, for each digit of the password, the authentication value and the response value corresponding to each digit.

**33.** The terminal apparatus of claim 32, wherein

the display part switches a display of the random number when the input part inputs the response value, and displays the plurality of random numbers in order, and
the input part inputs a response value for each random number by inputting response value for the random number newly displayed when the display part switches the display of the random number.

**34.** The terminal apparatus of claim 32, wherein

the memory part memorizes a number queue of a plurality of digits as a password, and
the authentication value calculation part calculates the authentication value to be used for user authentication, for each digit of the password, by performing a prescribed calculation for each digit of the password with using numerical values and the random numbers corresponding to each digit.

35. The terminal apparatus of claim 32, wherein

the memory part memorizes a character queue of a plurality of digits as a password, and
the authentication value calculation part calculates the authentication value to be used for user authentication, for each digit of the password, by performing a prescribed calculation for each digit of the password with using characters and the random numbers corresponding to each digit.

36. The terminal apparatus of claim 31, wherein

the memory part memorizes a sign queue of a plurality of digits as a password,
the random number generating part generates a random number group composed of random numbers equal to or more than two, for each digit of the password,
the display part displays a plurality of random number groups generated by the random number generating part,
the input part inputs a response value for each random number group in the plurality of random number groups displayed on the display part,
the authentication value calculation part calculates an authentication value to be used for user authentication, for each digit of the password, by performing a prescribed calculation for each digit of the password with using a sign and the random number group corresponding to each digit, and
the authentication judging part makes a judgment on propriety of the user authentication by comparing, for each digit of the password, the authentication value and the response value corresponding to each digit.

37. The terminal apparatus of claim 36, wherein

the display part switches a display of the random number group when the input part inputs the response value, and displays the plurality of random number groups in order, and
the input part inputs a response value for each random number group by inputting a response value for the random number group newly displayed when the display part switches the display of the random number group.

38. The terminal apparatus of claim 36, wherein

the memory part memorizes a number queue of a plurality of digits as a password, and
the authentication value calculation part calculates the authentication value to be used for user authentication, for each digit of the password, by performing a prescribed calculation for each digit of the password with using a numerical value and the random number group corresponding to each digit.

39. The terminal apparatus of claim 36, wherein

the memory part memorizes a character queue of a plurality of digits as a password, and
the authentication value calculation part calculates the authentication value to be used for user authentication, for each digit of the password, by performing a prescribed calculation for each digit of the password with using a character and the random number group corresponding to each digit.

40. An authentication method of performing user authentication to a user comprising steps of :

memorizing a password of the user,
generating a plurality of random numbers,
displaying the plurality of random numbers generated by the generating random numbers, inputting a response value for the plurality of random numbers,
calculating an authentication value to be used for the user authentication, by performing a prescribed calculation using the password memorized by the memorizing the password and the plurality of random numbers generated by the generating random numbers, and
making a judgment on propriety of the user authentication by comparing the response value inputted by the inputting with the authentication value calculated by the calculating the authentication value.

## EP 1 538 531 A1

**41.** The authentication system of claim 1, wherein

in the terminal apparatus,

the receiving part can receive a plurality of random numbers, each of which is composed of a plurality of digits, generated for the password of a sign queue of a plurality of digits, from the authentication apparatus, and
the display part, when the plurality of random numbers are received by the receiving part, displays in order the plurality of random numbers having been received, can display together with a reference sign group composed of a plurality of reference signs including a sign corresponding to a sign of the password, and when the reference sign group is displayed, can display the reference sign group with adding an additional element, indicating a correlation with a digit of the random number, to each reference sign,
the terminal apparatus further includes
an additional element determination part for determining the additional element of each reference sign when the reference sign group is displayed, in the authentication apparatus,
the password memory part memorizes the sign queue of a plurality of digits as a password,
the random number generating part generates the random number composed of a plurality of digits to be displayed on the terminal apparatus, as a random number for display, for each digit of the password, and generates the random number used in determining the additional element of each reference sign in the terminal apparatus, as a random number for additional element, for each digit of a password, and
the communication part mutually relates a plurality of random numbers for display with a plurality of random numbers for additional element generated by the random number generating part, for each digit of the password, and transmits them to the terminal apparatus,

in the terminal apparatus,

the receiving part receives the plurality of random numbers for display mutually related with the plurality of random numbers for additional elements, from the authentication apparatus,
the additional element determination part determines the additional element of each reference sign at a time of the reference sign group being displayed, for each random number for display, by using the random number for additional element corresponding to each random number for display,
the display part displays the plurality of random numbers for display in order, which have been received by the receiving part, and displays the reference sign group with adding the additional element of each reference sign determined by the additional element determination part for each random number for display to each reference sign,
the input part inputs a response value for each random number for display in the plurality of random numbers for display displayed on the display part,
the transmitting part transmits the response value for each random number for display inputted through the input part, to the authentication apparatus,

in the authentication apparatus,

the communication part receives the response value for each random number for display, from the terminal apparatus,
the authentication value calculation part carries out calculations equivalent to a processing of judging, for each digit of the password, the additional element added to the reference sign corresponding to the sign of the password in the reference sign group displayed on the terminal apparatus, by using the sign of the password, the random number for display, and the random number for additional element corresponding to each digit, and a processing of specifying a value of the digit of the random number for display having a correlation with the reference sign, based on the additional element judged ,and calculates an authentication value used for the user authentication, for each digit of the password, and
the authentication judging part makes a judgment on propriety of the user authentication for each digit of the password, by comparing the authentication value and the response value corresponding to each digit.

**42.** The authentication system of claim 41, wherein

in the terminal apparatus,

**50**

the display part displays the plurality of random numbers for display in order, by switching a display of the random number for display when the input part inputs the response value, and at a time of switching the display of the random number for display, adds the additional element of each reference sign determined for the random number for display newly displayed to each reference sign to switch the display of the reference sign group, and

the input part inputs the response value for each random number for display, by inputting the response value for the random number for display newly displayed when the display part switches the display of the random number for display and the display of the reference sign group.

**43.** The authentication system of claim 41, wherein the terminal apparatus further includes:

a random number response value memory part, for each random number for display, for mutually relating the random number for display, the random number for additional element corresponding to the random number for display, and the response value corresponding to the random number for display, and memorizing them, and

a terminal side authentication judging part for making a judgement on propriety of the user authentication using the response value memorized in the random number response value memory part,

wherein the additional element determination part determines the additional element of each reference sign at the time of the reference sign group being displayed, for each random number for display, by using the random number for additional element memorized in the random number response value memory part,

the display part displays the plurality of random numbers for display in order, which have been memorized in the random number response value memory part, and displays the reference sign group in which the additional element of each reference sign determined by the additional element determination part for each random number for display is added to each reference sign,

the input part inputs the response value for each random number for display in the plurality of random numbers for display displayed on the display part, and

the terminal side authentication judging part makes a judgement on propriety of the user authentication by comparing the response value memorized in the random number response value memory part with the response value inputted through the input part.

**44.** The authentication system of claim 41, wherein the terminal apparatus further includes:

a random number response value memory part, for each random number for display, for mutually relating the random number for display, the random number for additional element corresponding to the random number for display, and the response value corresponding to the random number for display, and memorizing them,

a random number change part for changing content of each random number of at least a part of random numbers for display and random numbers for additional element, by using the plurality of random numbers for display, the plurality of random numbers for additional element, and response values memorized in the random number response value memory part, and calculating an authentication value used for judgement on propriety of the user authentication for each random number for display after random number change, in a prescribed case, and

a terminal side authentication judging part for making a judgement on propriety of the user authentication by using the authentication value calculated by the random number change part,

wherein the additional element determination part determines the additional element of each reference sign at the time of the reference sign group being displayed, for each random number for display after random number change, by using the random number for additional element after random number change,

the display part displays the plurality of random numbers for display after random number change in order, and displays the reference sign group in which the additional element of each reference sign determined by the additional element determination part for each random number for display after random number change is added to each reference sign,

the input part inputs the response value for each random number for display after random number change in the plurality of random numbers for display after random number change displayed on the display part, and

the terminal side authentication judging part makes a judgement on propriety of the user authentication by comparing the authentication value calculated by the random number change part with the response value inputted through the input part, for each random number for display after random number change.

**45.** The authentication system of claim 41, wherein

in the terminal apparatus,

the display part, when displaying the reference sign group, can display the reference sign group with adding a background pattern indicating a correlation with a digit of the random number, to each reference sign, as an additional element,

in the authentication apparatus,

the random number generating part generates a random number used in determining the background pattern of each reference sign in the terminal apparatus, for each digit of the password, as the random number for additional element,

in the terminal apparatus,

the additional element determination part determines the background pattern of each reference sign when the reference sign group is displayed, for each random number for display, by using the random number for additional element corresponding to each random number for display, and
the display part displays the plurality of random numbers for display in order, which have been received by the receiving part, and displays the reference sign group with adding the background pattern of each reference sign determined by the additional element determination part for each random number for display, to the each reference sign.

**46.** The authentication apparatus of claim 17, wherein

the password memory part memorizes a sign queue of a plurality of digits as the password,
the communication part can communicate with a terminal apparatus which can display in order a plurality of random numbers, respectively having a plurality of digits, which can display together with a reference sign group composed of a plurality of reference signs including a sign corresponding to a sign of the password, and which can display the reference sign group with adding an additional element, indicating a correlation with a digit of the random number, to each reference sign ,when the reference sign group is displayed,
the random number generating part generates the random number composed of a plurality of digits to be displayed on the terminal apparatus, as a random number for display, for each digit of the password, and generates the random number used in determining the additional element of each reference sign in the terminal apparatus, as a random number for additional element, for each digit of the password,
the communication part mutually relates a plurality of random numbers for display generated by the random number generating part with a plurality of random numbers for additional element generated by the random number generating part, for each digit of the password, transmits them to the terminal apparatus, and receives a response value for each random number for display, from the terminal apparatus,
the authentication value calculation part carries out calculations equivalent to a processing of judging, for each digit of the password, the additional element added to the reference sign corresponding to the sign of the password in the reference sign group displayed on the terminal apparatus, by using the sign of the password, the random number for display, and the random number for additional element corresponding to each digit, and a processing of specifying a value of the digit of the random number for display having a correlation with the reference sign, based on the additional element judged ,and calculates an authentication value used for the user authentication, for each digit of the password, and
the authentication judging part makes a judgment on propriety of the user authentication for each digit of the password, by comparing the authentication value and the response value corresponding to each digit.

**47.** The terminal apparatus of claim 20, wherein

the receiving part can receive a plurality of random numbers, each of which is composed of a plurality of digits, generated for the password of a sign queue of a plurality of digits, from the authentication apparatus,
the display part, when the plurality of random numbers are received by the receiving part, displays in order the plurality of random numbers having been received, can display together with a reference sign group composed of a plurality of reference signs including a sign corresponding to a sign of the password, and when the reference sign group is displayed, can display the reference sign group with adding an additional element

indicating a correlation with a digit of the random number, to each reference sign,
the terminal apparatus further includes
an additional element determination part for determining the additional element of each reference sign when the reference sign group is displayed,
the receiving part receives a plurality of random numbers for display composed of a plurality of digits to be displayed on the terminal apparatus, which have been generated for each digit of the password by the authentication apparatus, and a plurality of random numbers for additional element, used in determining the additional element of each reference sign in the additional element determination part, with relating them each other for each digit of the password,
the additional element determination part determines the additional element of each reference sign when the reference sign group is displayed, for each random number for display, by using the random number for additional element corresponding to each random number for display,
the display part displays the plurality of random numbers for display in order, which have been received by the receiving part, and displays the reference sign group with adding the additional element of each reference sign determined by the additional element determination part for each random number for display, to the each reference sign,
the input part inputs the response value for each random number for display in the plurality of random numbers for display displayed on the display part, and
the transmitting part transmits the response value for each random number for display inputted through the input part, to the authentication apparatus.

48. The terminal apparatus of claim 47, wherein

the display part displays the plurality of random numbers for display in order, by switching a display of the random number for display when the input part inputs the response value, and at a time of switching the display of the random number for display, adds the additional element of each reference sign determined for the random number for display newly displayed to each reference sign to switch the display of the reference sign group, and
the input part inputs the response value for each random number for display, by inputting the response value for the random number for display newly displayed when the display part switches the display of the random number for display and the display of the reference sign group.

49. The terminal apparatus of claim 47, wherein the terminal apparatus further includes:

a random number response value memory part, for each random number for display, for mutually relating the random number for display, the random number for additional element corresponding to the random number for display, and the response value corresponding to the random number for display, and memorizing them, and
a terminal side authentication judging part for making a judgement on propriety of the user authentication using the response value memorized in the random number response value memory part,

wherein the additional element determination part determines the additional element of each reference sign at the time of the reference sign group being displayed, for each random number for display, by using the random number for additional element memorized in the random number response value memory part,

the display part displays the plurality of random numbers for display in order, which have been memorized in the random number response value memory part, and displays the reference sign group in which the additional element of each reference sign determined by the additional element determination part for each random number for display is added to each reference sign,
the input part inputs the response value for each random number for display in the plurality of random numbers for display displayed on the display part, and
the terminal side authentication judging part makes a judgement on propriety of the user authentication by comparing the response value memorized in the random number response value memory part with the response value inputted through the input part.

50. The terminal apparatus of claim 47, wherein the terminal apparatus further includes:

a random number change part for changing content of each random number in the plurality of random numbers for display received by the receiving part, changing content of each random number in the plurality of random numbers for additional elements received by the receiving part, and calculating an authentication value used for judgment on propriety of user authentication for each random number for display after random number change, using the random number for display after random number change and the random number for additional element after random number change which correspond to each other, in a prescribed case, and a terminal side authentication judging part for making a judgment on propriety of user authentication, by using the authentication value calculated by the random number change part,

wherein the additional element determination part determines the additional element of each reference sign when the reference sign group is displayed, for each random number for display after random number change, by using the random number for additional element after random number change,

the display part displays the plurality of random numbers for display after random number change in order, and displays the reference sign with adding the additional element of each reference sign determined by the additional element determination part for each random number for display after random number change, to the each reference sign,
the input part inputs the response value for each random number for display after random number change in the plurality of random numbers for display after random number change displayed on the display part, and the terminal side authentication judging part makes a judgement on propriety of the user authentication by comparing the authentication value calculated by the random number change part with the response value inputted through the input part, for each random number for display after random number change.

**51.** The terminal apparatus of claim 47, wherein

the display part, when displaying the reference sign group, can display the reference sign group with adding a background pattern indicating a corresponding relation with a digit of the random number, to each reference sign, as an additional element,
the receiving part receives the plurality of random numbers for display and the plurality of random numbers for additional element used in determining the background pattern of each reference sign in the additional element determination part, with relating them each other for each digit of the password, from the authentication apparatus,
the additional element determination part determines the background pattern of each reference sign when the reference sign group is displayed, for each random number for display, by using the random number for additional element corresponding to each random number for display, and
the display part displays the plurality of random numbers for display in order, which have been received by the receiving part, and displays the reference sign group with adding the background pattern of each reference sign determined by the additional element determination part for each random number for display, to the each reference sign.

**52.** The terminal apparatus of claim 31, wherein

the memory part memorizes a sign queue of a plurality of digits as the password,
the display part displays the plurality of random numbers in order, can display together with a reference sign group composed of a plurality of reference signs including a sign corresponding to a sign of the password, and can display the reference sign group with adding an additional element, indicating a correlation with a digit of a random number, to each reference sign, when the reference sign group is displayed, the terminal apparatus further includes
an additional element determination part for determining the additional element of each reference sign when the reference sign group is displayed on the display part,
the random number generating part generates the random number composed of a plurality of digits to be displayed on the display part, as a random number for display, for each digit of the password, and generates the random number used in determining the additional element of each reference sign in the additional element determination part, as a random number for additional element, for each digit of the password,
the additional element determination part determines the additional element of each reference sign when the reference sign group is displayed, for each random number for display, by using the random number for additional element generated for an identical digit of the password,
the display part displays a plurality of random numbers for display in order, which have been generated by the random number change part, and displays the reference sign group with adding the additional element of each reference sign determined by the additional element determination part for each random number for display,

to each reference sign,

the input part inputs a response value for each random number for display in the plurality of random numbers for display displayed on the display part,

the authentication value calculation part carries out calculations equivalent to a processing of judging, for each digit of the password, the additional element added to the reference sign corresponding to the sign of the password in the reference sign group displayed on the display part, by using the sign of the password, the random number for display, and the random number for additional element corresponding to each digit, and a processing of specifying a value of the digit of the random number for display having a correlation with the reference sign, based on the additional element judged ,and calculates an authentication value used for the user authentication, for each digit of the password , and

the authentication judging part makes a judgment on propriety of the user authentication for each digit of the password, by comparing the authentication value and the response value corresponding to each digit.

53. The terminal apparatus of claim 52, wherein

the display part displays the plurality of random numbers for display in order, by switching a display of the random number for display when the input part inputs the response value, and at a time of switching the display of the random number for display, adds the additional element of each reference sign determined for the random number for display newly displayed to each reference sign to switch the display of the reference sign group, and

the input part inputs the response value for each random number for display, by inputting the response value for the random number for display newly displayed when the display part switches the display of the random number for display and the display of the reference sign group.

54. The terminal apparatus of claim 52, wherein

the display part, when displaying the reference sign group, can display the reference sign group with adding a background pattern indicating a corresponding relation with a digit of the random number, to each reference sign, as an additional element,

the random number generating part generates a random number used in determining the background pattern of the each reference sign in the additional element determination part, for each digit of the password, as the random number for additional element,

the additional element determination part determines the background pattern of each reference sign when the reference sign group is displayed, for each random number for display, by using the random number for additional element generated for an identical digit of the password, and

the display part displays the plurality of random numbers for display in order, which have been generated by the random number change part, and displays the reference sign group with adding the background pattern of each reference sign determined by the additional element determination part for each random number for display, to each reference sign.

EP 1 538 531 A1

Fig. 1

# Fig. 2

# Fig. 3

```
                        START

              RECEIVE AUTHENTICATION REQUEST        S101

              AUTHENTICATION                  NO
              REQUEST IS TO SERVER      S102
                APPARATUS ?
                                              NO    THERE          S113
                     YES                        ARE RANDOM NUMBERS
                                                    STORED?

              TRANSMIT AUTHENTICATION    S103         YES          S114
                    REQUEST
                                              DISPLAY RANDOM NUMBER

              RECEIVE SET OF       S104                             S115
              RANDOM NUMBERS               RECEIVE INPUT NUMERICAL VALUE

              DISPLAY RANDOM NUMBER    S105
                                              NO         ALL         S116
                                                  RANDOM NUMBERS HAVE BEEN
              RECEIVE INPUT       S106               DISPLAYED ?
              NUMERICAL VALUE
                                                        YES

              NO    ALL RANDOM      S107            INPUT            S117
                 NUMBERS HAVE BEEN             NUMERICAL VALUES
                   DISPLAYED ?                    COINCIDE ?
                      YES      S108      S118        YES        S119
              TRANSMIT INPUT NUMERICAL VALUE   DISPLAY SUCCESS   DISPLAY FAILURE
                                              OF AUTHENTICATION  OF AUTHENTICATION
              RECEIVE AUTHENTICATION RESULT   S109

              NO    AUTHENTICATION    S110
                    RESULT OK ?
                      YES       S111
              STORE RANDOM NUMBER
              AND INPUT NUMERICAL VALUE

              DISPLAY AUTHENTICATION RESULT   S112

                        END
```

# Fig. 4

```
                    START
                      │
                      ▼                              S201
        ┌─────────────────────────────┐
        │ RECEIVE AUTHENTICATION REQUEST │
        └─────────────────────────────┘
                      │
                      ▼              S202
              ╱─────────────╲
             ╱   USER ID     ╲        NO
            ╱ HAS BEEN REGISTERED ╲────────────────┐
             ╲       ?       ╱                      │
              ╲─────────────╱              S204     │
                    │ YES                           │
                    ▼           S203    ┌──────────────────┐
            ┌──────────────┐            │  STORE FAILURE   │
            │ EXTRACT PASSWORD │        │ OF AUTHENTICATION │
            └──────────────┘            └──────────────────┘
                    │                            │
                    ▼◄───────────────────────────┘
            ┌──────────────┐    S205
            │  GENERATE SET │
            │ OF RANDOM NUMBERS │
            └──────────────┘
                    │
                    ▼            S206
            ┌──────────────┐
            │  TRANSMIT SET │
            │ OF RANDOM NUMBERS │
            └──────────────┘
                    │
                    ▼            S207
            ┌──────────────┐
            │ RECEIVE INPUT │
            │ NUMERICAL VALUE │
            └──────────────┘
                    │
                    ▼          S208
              ╱─────────────╲
             ╱  FAILURE OF   ╲      YES
            ╱ AUTHENTICATION HAS BEEN ╲────────────────┐
             ╲   RECORDED ?  ╱                          │
              ╲─────────────╱                           │
                    │ NO                                │
                    ▼         S209                      │
        ┌─────────────────────────────┐                │
        │ CALCULATE NUMERICAL VALUE    │                │
        │ TO BE USED FOR AUTHENTICATION │               │
        └─────────────────────────────┘                │
                    │                                   │
                    ▼            S210                    │
              ╱─────────────╲                           │
             ╱   CALCULATED  ╲       NO                  │
            ╱ NUMERICAL VALUE = INPUT NUMERICAL ╲────────┤
             ╲     VALUE ?   ╱                           │
              ╲─────────────╱                            │
                    │ YES          S211      S212        │
            ┌──────────────┐          ┌──────────────┐   │
            │ TRANSMIT SUCCESS │      │ TRANSMIT FAILURE │◄┘
            │ OF AUTHENTICATION │     │ OF AUTHENTICATION │
            └──────────────┘          └──────────────┘
                    │                         │
                    ▼◄────────────────────────┘
                   END
```

# Fig. 5

USER ID INPUT SCREEN

USER ID

YAMAMOT_TARO

LOG-IN

SERVER LOG-IN

# Fig. 6

301

302

RESPONSE VALUE INPUT SCREEN

1 2 3 4 5 6 7 8 9 0
CHALLENGE VALUE 3 6 8 1 3 5 0 9 5 2

303

303

303

303

*

# Fig. 7

RESPONSE VALUE INPUT SCREEN

CHALLENGE VALUE

1 2 3 4   5 6 7 8   9 0
3 6 8 1   3 5 0 9   5 2

□ □ □ □   □ □ □ □   □ □

402

401

403   403   403   403

*

# Fig. 8

# Fig. 9

START

RECEIVE AUTHENTICATION REQUEST — S301

AUTHENTICATION REQUEST IS TO SERVER APPARATUS ? — S302
— NO
— YES

THERE IS RANDOM NUMBER GROUP STORED ? — S313
— NO
— YES

TRANSMIT AUTHENTICATION REQUEST — S303

CONVERT RANDOM NUMBER GROUP AND NUMERICAL VALUE — S314

RECEIVE RANDOM NUMBER GROUP SET — S304

DISPLAY RANDOM NUMBER GROUP — S305

DISPLAY RANDOM NUMBER GROUP — S315

RECEIVE INPUT NUMERICAL VALUE — S306

RECEIVE INPUT NUMERICAL VALUE — S316

ALL RANDOM NUMBER GROUPS HAVE BEEN DISPLAYED ? — S307
— NO
— YES

ALL RANDOM NUMBER GROUPS HAVE BEEN DISPLAYED ? — S317
— NO
— YES

TRANSMIT INPUT NUMERICAL VALUE — S308

INPUT NUMERICAL VALUES COINCIDE ? — S318
— YES

RECEIVE AUTHENTICATION RESULT — S309

DISPLAY SUCCESS OF AUTHENTICATION — S319

DISPLAY FAILURE OF AUTHENTICATION — S320

AUTHENTICATION RESULT OK ? — S310
— NO
— YES

STORE RANDOM NUMBER GROUP AND INPUT NUMERICAL VALUE — S311

DISPLAY AUTHENTICATION RESULT — S312

END

# Fig.10

START
↓
RECEIVE AUTHENTICATION REQUEST — S401
↓
USER ID HAS BEEN REGISTERED ? — S402
→ NO → STORE FAILURE OF AUTHENTICATION — S404
↓ YES
EXTRACT PASSWORD — S403
↓
GENERATE SET OF RANDOM NUMBER GROUPS — S405
↓
TRANSMIT SET OF RANDOM NUMBER GROUPS — S406
↓
RECEIVE INPUT NUMERICAL VALUE — S407
↓
FAILURE OF AUTHENTICATION HAS BEEN RECORDED ? — S408
→ YES →
↓ NO
CALCULATE NUMERICAL VALUE TO BE USED FOR AUTHENTICATION — S409
↓
CALCULATED NUMERICAL VALUE = INPUT NUMERICAL VALUE ? — S410
→ NO →
↓ YES
TRANSMIT SUCCESS OF AUTHENTICATION — S411       TRANSMIT FAILURE OF AUTHENTICATION — S412
↓
END

# Fig.11

RESPONSE VALUE INPUT SCREEN

1 2 3 4 5 6 7 8 9 0

CHALLENGE VALUE 1  3 6 8 1 4 5 0 9 7 2

CHALLENGE VALUE 2  2 9 4 6 3 1 7 5 0 8

701

RESPONSE VALUE INPUT SCREEN

702

|   | 1 | 2 | 3 | 4 | 5 | 6 | 7 | 8 | 9 | 0 |
|---|---|---|---|---|---|---|---|---|---|---|
| CHALLENGE VALUE 1 | 3 | 6 | 8 | 1 | 4 | 5 | 0 | 9 | 7 | 2 |
| CHALLENGE VALUE 2 | 2 | 9 | 4 | 6 | 3 | 1 | 7 | 5 | 0 | 8 |

703   703   703   703   703

*

Fig.12

# Fig.13

```
                    START
                      │
         ┌────────────┘
         │            ▼
         │   ┌─────────────────────────────┐      S501
         │   │ EXTRACT SET OF CHALLENGE     │
         │   │ VALUE 1, CHALLENGE VALUE 2,  │
         │   │ AND INPUT NUMERICAL VALUE    │
         │   │ WHICH HAVE NOT BEEN CONVERTED │
         │   └─────────────────────────────┘
         │              │
         │              ▼
         │   ┌─────────────────────────────┐      S502
         │   │      GENERATE MATRIX C       │
         │   └─────────────────────────────┘
         │              │
         │              ▼
         │   ┌─────────────────────────────┐      S503
         │   │      GENERATE MATRIX C'      │
         │   └─────────────────────────────┘
         │              │
         │              ▼
         │   ┌─────────────────────────────┐      S504
         │   │     GENERATE NEW INPUT       │
         │   │      NUMERICAL VALUE         │
         │   └─────────────────────────────┘
         │              │
         │              ▼
         │   ┌─────────────────────────────┐      S505
         │   │        GENERATE              │
         │   │   NEW CHALLENGE VALUE 1      │
         │   └─────────────────────────────┘
         │              │
         │              ▼
         │   ┌─────────────────────────────┐      S506
         │   │        GENERATE              │
         │   │   NEW CHALLENGE VALUE 2      │
         │   └─────────────────────────────┘
         │              │
         │              ▼
         │   ┌─────────────────────────────┐      S507
         │   │ MEMORIZE SET OF CHALLENGE    │
         │   │ VALUE1, CHALLENGE VALUE 2,   │
         │   │ AND INPUT NUMERICAL VALUE    │
         │   │ WHICH HAVE BEEN CONVERTED    │
         │   └─────────────────────────────┘
         │              │
         │              ▼
         │          ╱───────╲                      S508
         │   NO    ╱   ALL    ╲
         └────────┤  SETS HAVE  ├
                   ╲ BEEN      ╱
                    ╲CONVERTED?╱
                     ╲───────╱
                         │ YES
                         ▼
                       END
```

# Fig. 14

CHALLENGE VALUE 2

CHALLENGE VALUE 1

C

C'

$$c_{ij} = 4 \rightarrow c'_{ij} = 1$$
$$c_{ij} \neq 4 \rightarrow c'_{ji} = 0$$

(a) NEW INPUT NUMERICAL VALUE = 7

(b)

$$\begin{vmatrix} 0&0&0&0&0&1&0&0&0&0 \\ 0&0&0&0&0&0&0&0&0&1 \\ 0&0&1&0&0&0&0&0&0&0 \\ 0&0&0&0&1&0&0&0&0&0 \\ 0&0&0&0&0&0&0&0&1&0 \\ 0&1&0&0&0&0&0&0&0&0 \\ 0&0&1&0&0&0&0&0&0&0 \\ 0&0&0&0&0&0&0&1&0&0 \\ 0&0&0&0&0&0&1&0&0&0 \\ 1&0&0&0&0&0&0&0&0&0 \end{vmatrix} \times \begin{vmatrix} 3 \\ 6 \\ 8 \\ 1 \\ 4 \\ 5 \\ 0 \\ 9 \\ 7 \\ 2 \end{vmatrix} = \begin{vmatrix} 5\,2\,1\,4\,7\,6\,8\,9\,0\,3 \end{vmatrix}$$

C′        CH1

$6 = 7 - 1$

$$\begin{vmatrix} 5\,2\,1\,4\,7\,6\,8\,9\,0\,3 \end{vmatrix} + \begin{vmatrix} 6\,6\,6\,6\,6\,6\,6\,6\,6\,6 \end{vmatrix} \rightarrow \begin{vmatrix} \underline{1\,8\,7\,0\,3\,2\,4\,5\,6\,9} \end{vmatrix}$$

NEW CHALLENGE VALUE 1

(c) CHALLENGE VALUE 1

$$3\,6\,8\,1\,4\,5\,0\,9\,7\,2 \xrightarrow{\quad CH2_i = (11 - CH1_i)\,\%\,10 \quad} \underline{8\,5\,3\,0\,7\,6\,1\,2\,4\,9}$$

NEW CHALLENGE VALUE 2

Fig. 15

Fig.16

NEW CHALLENGE VALUE 2

NEW CHALLENGE VALUE 1

|   | | 1 | 2 | 3 | 4 | 5 | 6 | 7 | 8 | 9 | 0 |
|---|---|---|---|---|---|---|---|---|---|---|---|
|   |   | 8 | 5 | 3 | 0 | 7 | 6 | 1 | 2 | 4 | 9 |
| 1 | 1 | 9 | 6 | 4 | 1 | 8 | 7 | 2 | 3 | 5 | 0 |
| 2 | 8 | 6 | 3 | 1 | 8 | 5 | 4 | 9 | 0 | 2 | 7 |
| 3 | 7 | 5 | 2 | 0 | 7 | 4 | 3 | 8 | 9 | 1 | 6 |
| 4 | 0 | 8 | 5 | 3 | 0 | 7 | 6 | 1 | 2 | 4 | 9 |
| 5 | 3 | 1 | 8 | 6 | 3 | 0 | 9 | 4 | 5 | 7 | 2 |
| 6 | 2 | 0 | 7 | 5 | 2 | 9 | 8 | 3 | 4 | 6 | 1 |
| 7 | 4 | 2 | 9 | 7 | 4 | 1 | 0 | 5 | 6 | 8 | 3 |
| 8 | 5 | 3 | 0 | 8 | 5 | 2 | 1 | 6 | 7 | 9 | 4 |
| 9 | 6 | 4 | 1 | 9 | 6 | 3 | 2 | 7 | 8 | 0 | 5 |
| 0 | 9 | 7 | 4 | 2 | 9 | 6 | 5 | 0 | 1 | 3 | 8 |

EP 1 538 531 A1

# Fig.17

801

802

RESPONSE VALUE INPUT SCREEN

| 1 | 2 | 3 | 4 | 5 | 6 | 7 | 8 | 9 | 0 |
|---|---|---|---|---|---|---|---|---|---|
| A | B | C | D | E | F | G | H | I | J |
| K | L | M | N | O | P | Q | R | S | T |
| U | V | W | X | Y | Z | _ | | | |
| # | $ | % | & | { | } | | @ | * | ? |

CHALLENGE VALUE 1  3 6 8 1 4 5 0 9 7 2

CHALLENGE VALUE 2  2 9 4 6 3 1 7 5 0 8

803  803  803  803  803  803  803  803

*

| Lo / Hi | 0 | 1 | 2 | 3 | 4 | 5 | 6 | 7 | 8 | 9 | A | B | C | D | E | F |
|---|---|---|---|---|---|---|---|---|---|---|---|---|---|---|---|---|
| 0 |  |  |  |  |  |  |  |  |  |  |  |  |  |  |  |  |
| 1 |  |  |  |  |  |  |  |  |  |  |  |  |  |  |  |  |
| 2 |  |  |  | 1 | 2 | 3 | 4 |  |  |  | 9 |  |  |  |  |  |
| 3 | 0 | 1 | 2 | 3 | 4 | 5 | 6 | 7 | 8 | 9 |  |  |  |  |  | 0 |
| 4 | 8 | 1 | 2 | 3 | 4 | 5 | 6 | 7 | 8 | 9 | 0 | 1 | 2 | 3 | 4 | 5 |
| 5 | 6 | 7 | 8 | 9 | 0 | 1 | 2 | 3 | 4 | 5 | 6 |  |  |  |  | 7 |
| 6 |  | 1 | 2 | 3 | 4 | 5 | 6 | 7 | 8 | 9 | 0 | 1 | 2 | 3 | 4 | 5 |
| 7 | 6 | 7 | 8 | 9 | 0 | 1 | 2 | 3 | 4 | 5 | 6 | 5 |  | 6 |  |  |
| 8 |  |  |  |  |  |  |  |  |  |  |  |  |  |  |  |  |
| 9 |  |  |  |  |  |  |  |  |  |  |  |  |  |  |  |  |
| A |  |  |  |  |  |  |  |  |  |  |  |  |  |  |  |  |
| B |  |  |  |  |  |  |  |  |  |  |  |  |  |  |  |  |
| C |  |  |  |  |  |  |  |  |  |  |  |  |  |  |  |  |
| D |  |  |  |  |  |  |  |  |  |  |  |  |  |  |  |  |
| E |  |  |  |  |  |  |  |  |  |  |  |  |  |  |  |  |
| F |  |  |  |  |  |  |  |  |  |  |  |  |  |  |  |  |

Fig.18

EP 1 538 531 A1

EP 1 538 531 A1

Fig. 19

901

902

RESPONSE VALUE INPUT SCREEN

| 1 | 2 | 3 | 4 | 5 | 6 | 7 | 8 | 9 | 0 | 1 | 2 | 3 |
|---|---|---|---|---|---|---|---|---|---|---|---|---|
| 1 | 2 | 3 | 4 | 5 | 6 | 7 | 8 | 9 | 0 |   |   |   |
| A | B | C | D | E | F | G | H | I | J | K | L | M |

CHALLENGE VALUE  3 6 8 1 3 5 0 9 5 2 4 6 1

| 4 | 5 | 6 | 7 | 8 | 9 | 0 | 1 | 2 | 3 | 4 | 5 | 6 |
|---|---|---|---|---|---|---|---|---|---|---|---|---|
| # | $ | % | & | { | } | _ | @ | * | ? |   |   |   |
| N | O | P | Q | R | S | T | U | V | W | X | Y | Z |
| 4 | 5 | 9 | 0 | 6 | 5 | 8 | 3 | 8 | 3 | 1 | 7 | 9 |

903  903  903  903

[ * ] [ ] [ ] [ ]

# Fig. 20

| Lo\Hi | 0 | 1 | 2 | 3 | 4 | 5 | 6 | 7 | 8 | 9 | A | B | C | D | E | F |
|---|---|---|---|---|---|---|---|---|---|---|---|---|---|---|---|---|
| 0 |  |  |  | 0 |  | 16 |  | 16 |  |  |  |  |  |  |  |  |
| 1 |  |  |  | 1 | 1 | 17 | 1 | 17 |  |  |  |  |  |  |  |  |
| 2 |  |  |  | 2 | 2 | 18 | 2 | 18 |  |  |  |  |  |  |  |  |
| 3 |  |  | 14 | 3 | 3 | 19 | 3 | 19 |  |  |  |  |  |  |  |  |
| 4 |  |  | 15 | 4 | 4 | 10 | 4 | 20 |  |  |  |  |  |  |  |  |
| 5 |  |  | 16 | 5 | 5 | 21 | 5 | 21 |  |  |  |  |  |  |  |  |
| 6 |  |  | 17 | 6 | 6 | 22 | 6 | 22 |  |  |  |  |  |  |  |  |
| 7 |  |  |  | 7 | 7 | 23 | 7 | 23 |  |  |  |  |  |  |  |  |
| 8 |  |  |  | 8 | 8 | 24 | 8 | 24 |  |  |  |  |  |  |  |  |
| 9 |  |  |  | 9 | 9 | 25 | 9 | 25 |  |  |  |  |  |  |  |  |
| A |  |  | 22 |  | 10 | 26 | 10 | 26 |  |  |  |  |  |  |  |  |
| B |  |  |  |  | 11 |  | 11 | 18 |  |  |  |  |  |  |  |  |
| C |  |  |  |  | 12 |  | 12 |  |  |  |  |  |  |  |  |  |
| D |  |  |  |  | 13 |  | 13 | 19 |  |  |  |  |  |  |  |  |
| E |  |  |  |  | 14 |  | 14 |  |  |  |  |  |  |  |  |  |
| F |  |  |  | 23 | 15 | 20 | 15 |  |  |  |  |  |  |  |  |  |

# Fig.21

# Fig.22

# Fig.23

1301

1302 DISPLAY PART

1303 INPUT PART

1304 MEMORY PART

1305 RANDOM NUMBER GENERATING PART

1306 CALCULATION PART

1307 JUDGING PART

1308

# Fig.24

START

RECEIVE AUTHENTICATION REQUEST ⟋ S1401

GENERATE RANDOM
NUMBER GROUP SET ⟋ S1402

DISPLAY RANDOM NUMBER ⟋ S1403

RECEIVE INPUT NUMERICAL VALUE ⟋ S1404

ALL RANDOM
NUMBERS HAVE BEEN
DISPLAYED ? ⟋ S1405

NO

YES

EXTRACT PASSWORD ⟋ S1406

CALCULATE NUMERICAL VALUE
USED FOR AUTHENTICATION ⟋ S1407

AUTHENTICATION
RESULT OK ? ⟋ S1408

NO

YES

PERMIT TO ACCESS
TERMINAL AND IC CARD ⟋ S1409

DISPLAY SUCCESS
OF AUTHENTICATION ⟋ S1410

DISPLAY FAILURE
OF AUTHENTICATION ⟋ S1411

END

# Fig.25

# Fig.26

```
                    START
                                        S1601
        RECEIVE AUTHENTICATION REQUEST
                     │
                                        S1602
                ◇ AUTHENTICATION ◇       NO
                 REQUEST IS TO SERVER ───────────────────────┐
                    APPARATUS ?                              │
                     │ YES                                   │
                     │                           NO    ◇ THERE ◇      S1613
                     │◄──────────────────────────── IS RANDOM NUMBER SET
                     │                                   STORED ?
          TRANSMIT AUTHENTICATION  S1603          │ YES           S1614
                REQUEST                     CONVERT RANDOM NUMBER
                     │          S1604           SET AND NUMERICAL VALUE
         RECEIVE RANDOM NUMBER SET                    │          S1615
                     │                      DISPLAY BY USING RANDOM NUMBER SET
                     │          S1605               │
            DISPLAY BY USING                         │          S1616
          RANDOM NUMBER SET       S1606          RECEIVE INPUT
                     │                          NUMERICAL VALUE
         RECEIVE INPUT NUMERICAL VALUE              │
                     │                              │          S1617
                     │          S1607       NO ◇ DISPLAY ◇
         NO   ◇ DISPLAY ◇                   ─── BY USING ALL RANDOM
         ─── BY USING ALL RANDOM NUMBER          NUMBER SETS ?
                 SETS ?                             │ YES
                     │ YES       S1608              │          S1618
         TRANSMIT INPUT NUMERICAL VALUE       ◇ INPUT ◇
                     │          S1609          NUMERICAL VALUES ────────┐
         RECEIVE AUTHENTICATION RESULT         COINCIDE ?               │
                     │                              │ YES      S1619    │
                     │          S1610       DISPLAY SUCCESS    DISPLAY FAILURE
         NO  ◇ AUTHENTICATION ◇             OF AUTHENTICATION  OF AUTHENTICATION
         ─── RESULT OK ?                            │                   │
                     │ YES       S1611                        S1620
         STORE RANDOM NUMBER SET AND
           INPUT NUMERICAL VALUE
                     │          S1612
         DISPLAY AUTHENTICATION RESULT
                     │◄──────────────────────────────────────────┘
                    END
```

# Fig.27

START

RECEIVE AUTHENTICATION REQUEST — S1701

USER ID HAS BEEN REGISTERED ? — S1702

NO → STORE FAILURE OF AUTHENTICATION — S1704

YES

EXTRACT PASSWORD — S1703

GENERATE RANDOM NUMBER SET — S1705

TRANSMIT RANDOM NUMBER SET — S1706

RECEIVE INPUT NUMERICAL VALUE — S1707

FAILURE OF AUTHENTICATION HAS BEEN RECORDED ? — S1708

YES →

NO

CALCULATE NUMERICAL VALUE TO BE USED FOR AUTHENTICATION — S1709

CALCULATED NUMERICAL VALUE = INPUT NUMERICAL VALUE ? — S1710

NO →

YES

TRANSMIT SUCCESS OF AUTHENTICATION — S1711

TRANSMIT FAILURE OF AUTHENTICATION — S1712

END

RESPONSE VALUE INPUT SCREEN

| 1 | 2 | 3 | 4 | 5 | 6 | 7 | 8 | 9 | 0 |
| A | B | C | D | E | F | G | H | I | J |
| K | L | M | N | O | P | Q | R | S | T |
| U | V | W | X | Y | Z |  |  |  |  |
| # | $ | % | & | { | } | _ | @ | * | ? |

CHALLENGE VALUE   2 5 7 1 0 3 4 8 6 9

| * |  |  |  |  |  |  |  |

Fig. 28

# Fig. 29

| Lo\Hi | 0 | 1 | 2 | 3 | 4 | 5 | 6 | 7 | 8 | 9 | A | B | C | D | E | F |
|---|---|---|---|---|---|---|---|---|---|---|---|---|---|---|---|---|
| 0 |  |  | 9 | 47 | 25 |  | 25 |  |  |  |  |  |  |  |  |  |
| 1 |  |  |  | 0 | 10 | 26 | 10 | 26 |  |  |  |  |  |  |  |  |
| 2 |  |  |  | 1 | 11 | 27 | 11 | 27 |  |  |  |  |  |  |  |  |
| 3 |  |  | 40 | 2 | 12 | 28 | 12 | 28 |  |  |  |  |  |  |  |  |
| 4 |  |  | 41 | 3 | 13 | 29 | 13 | 29 |  |  |  |  |  |  |  |  |
| 5 |  |  | 42 | 4 | 14 | 30 | 14 | 30 |  |  |  |  |  |  |  |  |
| 6 |  |  | 43 | 5 | 15 | 31 | 15 | 31 |  |  |  |  |  |  |  |  |
| 7 |  |  |  | 6 | 16 | 32 | 16 | 32 |  |  |  |  |  |  |  |  |
| 8 |  |  |  | 7 | 17 | 33 | 17 | 33 |  |  |  |  |  |  |  |  |
| 9 |  |  |  | 8 | 18 | 34 | 18 | 34 |  |  |  |  |  |  |  |  |
| A |  |  | 48 |  | 19 | 35 | 19 | 35 |  |  |  |  |  |  |  |  |
| B |  |  | 44 |  | 20 |  | 20 |  |  |  |  |  |  |  |  |  |
| C |  |  |  |  | 21 |  | 21 |  |  |  |  |  |  |  |  |  |
| D |  |  | 45 |  | 22 |  | 22 |  |  |  |  |  |  |  |  |  |
| E |  |  |  |  | 23 |  | 23 |  |  |  |  |  |  |  |  |  |
| F |  |  | 49 |  | 24 | 46 | 24 |  |  |  |  |  |  |  |  |  |

# Fig.30

```
                    ┌──────────┐
                    │  START   │
                    └────┬─────┘
                         │
   ┌─────────────────────┼────────────────────────┐
   │    ┌────────────────▼───────────────────┐
   │    │  EXTRACT ONE SET OF RANDOM NUMBER  │     S1901
   │    │  FOR DISPLAY, ARRAY OF RANDOM      │
   │    │  NUMBERS FOR BACKGROUND, AND INPUT │
   │    │  NUMERICAL VALUE WHICH HAVE NOT    │
   │    │  BEEN CONVERTED.                   │
   │    └────────────────┬───────────────────┘
   │    ┌────────────────▼───────────────────┐
   │    │  CALCULATE NUMBER m OF SELECTED    │     S1902
   │    │  BACKGROUND PATTERN, BASED ON      │
   │    │  INPUT NUMERICAL VALUE             │
   │    └────────────────┬───────────────────┘
   │    ┌────────────────▼───────────────────┐      S1903
   │    │  GENERATE NEW RANDOM NUMBER FOR    │
   │    │  DISPLAY                           │
   │    └────────────────┬───────────────────┘
   │    ┌────────────────▼───────────────────┐      S1904
   │    │  DETERMINE NEXT INPUT NUMERICAL    │
   │    │  VALUE                             │
   │    └────────────────┬───────────────────┘
   │    ┌────────────────▼───────────────────┐      S1905
   │    │  CALCULATE PATTERN NUMBER m' OF    │
   │    │  BACKGROUND BASED ON NEXT INPUT    │
   │    │  NUMERICAL VALUE                   │
   │    └────────────────┬───────────────────┘
   │  ┌──────────────────▼───────────────────┐
   │  │  ┌──────────────▼───────────────────┐      S1906
   │  │  │  GENERATE ELEMENT OF ARRAY        │
   │  │  │  OF RANDOM NUMBERS FOR BACKGROUND │
   │  │  └──────────────┬───────────────────┘
   │  │  ┌──────────────▼───────────────────┐      S1907
   │  │  │  CYCLE THE NUMBER OF ELEMENT OF   │
   │  │  │  ARRAY OF RANDOM NUMBERS FOR      │
   │  │  │  BACKGROUND                       │
   │  │  └──────────────┬───────────────────┘
   │  │                 │             S1908
   │  │  NO      ◇───────▼────────◇
   │  └────────◇  ALL ELEMENTS OF  ◇
   │           ◇ ARRAY OF RANDOM   ◇
   │           ◇ NUMBERS FOR       ◇
   │           ◇ BACKGROUND HAVE   ◇
   │           ◇ BEEN GENERATED?   ◇
   │                 │ YES
   │    ┌────────────▼───────────────────┐      S1909
   │    │ MEMORIZE GENERATED RANDOM       │
   │    │ NUMBER FOR DISPLAY AND ARRAY    │
   │    │ OF RANDOM NUMBERS FOR           │
   │    │ BACKGROUND, AND INPUT           │
   │    │ NUMERICAL VALUE                 │
   │    └────────────┬────────────────────┘
   │                 │         S1910
   │   NO      ◇─────▼──────◇
   └──────────◇  ALL SETS   ◇
              ◇ HAVE BEEN   ◇
              ◇ CONVERTED?  ◇
                    │ YES
              ┌─────▼─────┐
              │    END    │
              └───────────┘
```

# Fig.31

2001

RESPONSE VALUE INPUT SCREEN

| 1 | 2 | 3 | 4 | 5 | 6 | 7 | 8 | 9 | 0 |
|---|---|---|---|---|---|---|---|---|---|
| A | B | C | D | E | F | G | H | I | J |
| K | L | M | N | O | P | Q | R | S | T |
| U | V | W | X | Y | Z |   |   |   |   |
| # | $ | % | & | { | } | _ | @ | * | ? |

2002

CHALLENGE VALUE

| 2 | 5 | 7 | 1 | 0 | 3 | 4 | 8 | 6 | 9 |
|---|---|---|---|---|---|---|---|---|---|

2003

2004  2004  2004  2004  2004  2004  2004  2004

| * |   |   |   |   |   |   |   |

PUSH DOWN SPECIFIC KEY

RELEASE SPECIFIC KEY  OR
PUSH DOWN SPECIFIC KEY

2005

RESPONSE VALUE INPUT SCREEN

2006

2007

2008  2008  2008  2008  2008  2008  2008  2008

| * |   |   |   |   |   |   |   |

Fig. 32

EP 1 538 531 A1

# Fig.33

```
            ( START )
                │
                ▼
┌──────────────────────────────┐   S2001
│ RECEIVE AUTHENTICATION REQUEST │
└──────────────────────────────┘
                │
                ▼
┌──────────────────────────────┐   S2002
│   GENERATE RANDOM NUMBER SET   │
└──────────────────────────────┘
                │
                ▼
┌──────────────────────────────┐   S2003
│ DISPLAY BY USING RANDOM NUMBER SET │
└──────────────────────────────┘
                │
                ▼
┌──────────────────────────────┐   S2004
│  RECEIVE INPUT NUMERICAL VALUE │
└──────────────────────────────┘
                │
                ▼
          S2005
   ╱ DISPLAY BY ╲
NO ╱ USING ALL RANDOM NUMBER ╲
  ╲      SETS ?     ╱
   ╲              ╱
         │ YES
         ▼
┌──────────────────────────────┐   S2006
│        EXTRACT PASSWORD        │
└──────────────────────────────┘
                │
                ▼
┌──────────────────────────────┐   S2007
│   CALCULATE NUMERICAL VALUE    │
│ TO BE USED FOR AUTHENTICATION  │
└──────────────────────────────┘
                │
                ▼
          S2008
   ╱ AUTHENTICATION ╲   NO
   ╲  RESULT OK ?   ╱ ─────────────┐
    ╲            ╱                  │
         │ YES                     │
         ▼                         ▼
┌──────────────────┐ S2009  ┌──────────────────┐ S2011
│ PERMIT TO ACCESS │        │ DISPLAY FAILURE  │
│TERMINAL AND IC CARD│      │ OF AUTHENTICATION│
└──────────────────┘        └──────────────────┘
         │                         │
         ▼                         │
┌──────────────────┐ S2010         │
│ DISPLAY SUCCESS  │               │
│ OF AUTHENTICATION│               │
└──────────────────┘               │
         │◄─────────────────────────┘
         ▼
      ( END )
```

## INTERNATIONAL SEARCH REPORT

| | International application No. |
|---|---|
| | PCT/JP03/11547 |

A. CLASSIFICATION OF SUBJECT MATTER
    Int.Cl⁷ G06F15/00, H04L9/32

According to International Patent Classification (IPC) or to both national classification and IPC

B. FIELDS SEARCHED

Minimum documentation searched (classification system followed by classification symbols)
    Int.Cl⁷ G06F15/00, H04L9/32

Documentation searched other than minimum documentation to the extent that such documents are included in the fields searched
    Jitsuyo Shinan Koho        1922–1996    Toroku Jitsuyo Shinan Koho    1994–2003
    Kokai Jitsuyo Shinan Koho  1971–2003    Jitsuyo Shinan Toroku Koho    1996–2003

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 9-330298 A (Mitsubishi Electric Corp.), 22 December, 1997 (22.12.97), Full text; Figs. 1 to 19 (Family: none) | 1-54 |
| A | JP 2000-305899 A (Fujitsu Ltd.), 02 November, 2000 (02.11.00), Full text; Figs. 1 to 20 (Family: none) | 1-54 |
| A | JP 11-345214 A (Toshiba Corp.), 14 December, 1999 (14.12.99), Full text; Figs. 1 to 10 (Family: none) | 1-54 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 November, 2003 (07.11.03) | 18 November, 2003 (18.11.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

## INTERNATIONAL SEARCH REPORT

| International application No. |
| --- |
| PCT/JP03/11547 |

C (Continuation).   DOCUMENTS CONSIDERED TO BE RELEVANT

| Category* | Citation of document, with indication, where appropriate, of the relevant passages | Relevant to claim No. |
| --- | --- | --- |
| P,A | JP 2003-258787 A  (Nippon Telegraph And Telephone Corp.),<br>12 September, 2003 (12.09.03),<br>Full text; Figs. 1 to 3<br>(Family: none) | 1-54 |

Form PCT/ISA/210 (continuation of second sheet) (July 1998)